# EUROPEAN PATENT APPLICATION

(11) **EP 1 758 033 A1**
(43) Date of publication of application: **28.02.2007**
(21) Application number: 05734732.0
(22) Date of filing: 21.04.2005
(51) Int. Cl.: G06F 17/30, H04N 1/21, H04N 5/225, H04N 5/76, H04N 5/91

(54) **IMAGE MANAGEMENT METHOD AND DEVICE, RECORDING MEDIUM, AND PROGRAM**

(30) Priority: 08.06.2004 JP 2004169426
(71) Applicant: SONY CORPORATION, Tokyo 141-0001 (JP)
(72) Inventor: TANAKA, Sho, c/o Sony Corporation, Tokyo 1410001 (JP); DATE, Osamu, c/o Sony Corporation, Tokyo 1410001 (JP); MATSUNO, Katsumi, c/o Sony Corporation, Tokyo 1410001 (JP)
(74) Representative: Mills, Julia
(86) International application number: PCT/JP2005/007607
(87) International publication number: WO 2005/122015

(57) **Abstract**

The present invention makes it possible to search desired images more quickly and surely. A keyword searching part 121 searches keywords set to image data from a recording medium on the basis of a keyword. An imaging information searching part 122 searches imaging information set to image data from the recording medium on the basis of imaging information. On the basis of a keyword or imaging information searched by the keyword searching part 121 or the imaging information searching part 122, a similar information-set image searching section 114 searches similar image data as image data having a high correlation to the searched keyword or imaging information. A keyword extracting section 115 extracts keywords from the similar image data. A keyword setting section 116 sets the extracted keywords to image data searched by the keyword searching part 121 or the imaging information searching part 122. Thus, desired images can be searched more quickly and surely. The present invention is applicable to an image management apparatus.

## Description

### Technical Field

The present invention relates to a method and an apparatus for managing images, a recording medium, and a program, and particularly to a method and an apparatus for managing images, a recording medium, and a program that search picked-up images.

### Background Art

Recently, with the spread of digital still cameras, digital video cameras, and the like, the capacity of recording media such as memory cards and the like for recording images picked up by these devices has been increasing.

These digital still cameras and digital video cameras display a picked-up image on a small LCD (Liquid Crystal Display). A user checks the picked-up image on the basis of the displayed image.

With the increase in capacity of recording media, the number of images that can be recorded on a recording medium has also increased, and thus it has become more difficult to manage and view recorded images.

There is a device that allows a user to input a keyword corresponding to a picked-up image as added information after picking up the image and search the image with the input keyword as a condition, so that images can be managed more easily.

There is also a digital still camera that displays a list of picked-up images in order of photographing date and time on a screen of an LCD to allow checking of the picked-up images (see Patent Document 1, for example).
[Patent Document 1]
Japanese Patent Laid-open No. 2000-278563

### Disclosure of Invention

However, the operation of inputting a keyword is troublesome, and the operation takes time.

In addition, keywords each input by an inputting operation tend not to be unified. That is, a plurality of kinds of words that the user recognizes to have the same meaning tend to be set as keywords. Thus, keywords unnecessarily increase in number, making it difficult to search desired images quickly.

The present invention has been made in view of such a situation, and makes it possible to add unified text data to picked-up image data more easily and more quickly. As a result, it is possible to search desired images more quickly and more surely.

According to the present invention, an image managing method includes: a first recording step of recording a recording information group when image information is recorded in association with the image information; a second recording step of recording an added information group corresponding to the image information after recording in association with the image information; an extracting step of extracting second image information associated with a second recording information group having a high correlation to a first recording information group associated with first image information selected from the image information; and a third recording step of recording added information associated with the second image information in association with the first image information.

The recording information group includes recording information set as each of one or a plurality of recording information items, the image information is classified on a basis of recording information set as a first recording information item included in the related recording information group, and the first image information is selected from the classified image information.

The image managing method according to the present invention further includes a measuring step of measuring quantities of the image information classified on the basis of the recording information.

The image managing method according to the present invention further includes a displaying step of visually displaying a relative quantity of image information for each piece of recording information.

The added information group includes one or a plurality of pieces of added information, the image information is classified on a basis of added information included in the related added information group, and the first image information is selected from the classified image information.

The image managing method according to the present invention further includes a measuring step of measuring quantities of the image information classified on the basis of the added information.

The image managing method according to the present invention further includes a displaying step of visually displaying a relative quantity of image information for each piece of added information.

The recording information group includes information on dates and times of recording of the image information.

The added information group includes text information input from an input screen prompting for input of text information.

According to the present invention, an image management apparatus includes: first recording means for recording a recording information group when image information is recorded in association with the image information; second recording means for recording an added information group corresponding to the image information after recording in association with the image information; extracting means for extracting second image information associated with a second recording information group having a high correlation to a first recording information group associated with first image information selected from the image information; and third recording means for recording added information associated with the second image information in association with the first image information.

According to the present invention, a program on a recording medium includes: a first recording step of recording a recording information group when image information is recorded in association with the image information; a second recording step of recording an added information group corresponding to the image information after recording in association with the image information; an extracting step of extracting second image information associated with a second recording information group having a high correlation to a first recording information group associated with first image information selected from the image information; a third recording step of recording added information associated with the second image information in association with the first image information.

According to the present invention, a program makes a computer perform: a first recording step of recording a recording information group when image information is recorded in association with the image information; a second recording step of recording an added information group corresponding to the image information after recording in association with the image information; an extracting step of extracting second image information associated with a second recording information group having a high correlation to a first recording information group associated with first image information selected from the image information; a third recording step of recording added information associated with the second image information in association with the first image information.

As described above, according to the present invention, images can be searched. In addition, it is possible to add unified text data to picked-up image data more easily and more quickly. As a result, desired images can be searched more quickly and more surely.

### Brief Description of Drawings

FIG. 1 is a block diagram showing a configuration of an embodiment of a digital still camera according to the present invention.
FIG. 2 is a block diagram showing a configuration of a control program executed in a control unit.
FIG. 3 is a diagram showing an example of correspondences between image data information managing files and image data files.
FIG. 4 is a flowchart of assistance in explaining a process of recording imaging information or a keyword in correspondence with image data.
FIG. 5 is a diagram showing an example of a screen of an LCD displaying an image and added information.
FIG. 6 is a diagram showing an example of the screen of the LCD displaying a keyword input screen.
FIG. 7 is a diagram showing an example of the screen of the LCD displaying images in a thumbnail format.
FIG. 8 is a flowchart of assistance in explaining a keyword setting process.
FIG. 9 is a flowchart of assistance in explaining a process of narrowing down images to which a keyword is set.
FIG. 10 is a diagram showing an example of the screen of the LCD displaying a search category selecting screen.
FIG. 11 is a flowchart of assistance in explaining a process of histogram display of frequencies of keywords.
FIG. 12 is a diagram showing an example of a keyword table.
FIG. 13 is a diagram showing an example of the screen of the LCD displaying keywords in a histogram format on the basis of the keyword table.
FIG. 14 is a flowchart of assistance in explaining a process of histogram display of frequencies of keywords when a keyword is selected.
FIG. 15 is a diagram showing an example of a keyword table.
FIG. 16 is a diagram showing an example of the screen of the LCD displaying keywords in a histogram format on the basis of the keyword table.
FIG. 17 is a flowchart of assistance in explaining a process of histogram display on the basis of imaging information.
FIG. 18 is a diagram showing an example of the screen of the LCD displaying an imaging information menu.
FIG. 19 is a diagram showing an example of the screen of the LCD displaying photographing dates and times in the histogram format.
FIG. 20 is a diagram showing an example of the screen of the LCD displaying a screen for specifying whether to display images or to perform a search on the basis of other imaging information.
FIG. 21 is a diagram showing an example of the screen of the LCD displaying an imaging information menu.
FIG. 22 is a diagram showing an example of the screen of the LCD displaying a result of a search by location information in the histogram format.
FIG. 23 is a diagram showing an example of the screen of the LCD displaying a screen for specifying whether to display images or to perform a search on the basis of other imaging information.
FIG. 24 is a diagram showing an example of the screen of the LCD displaying a list of images extracted with a keyword or imaging information as a search condition.
FIG. 25 is a diagram of assistance in explaining an example of narrowing down images by a cross button provided to an operating unit of the digital still camera.
FIG. 26 is a diagram showing an example of the cross button provided to the operating unit of the digital still camera.
FIG. 27 is a flowchart of assistance in explaining a process of extracting and setting a keyword.
FIG. 28 is a diagram showing an example of the screen of the LCD displaying a list of images extracted with a keyword or imaging information as a search condition.
FIG. 29 is a diagram showing an example of the screen of the LCD displaying keywords searched by similar image search.
FIG. 30 is a diagram showing an example of the screen of the LCD displaying a result of search of a plurality of images searched by similar image search.
FIG. 31 is a diagram showing an embodiment of an information processing system to which the present invention is applied.
FIG. 32 is a block diagram showing an example of configuration of a server.
FIG. 33 is a diagram showing an example of a configuration of programs executed by the server.
FIG. 34 is a flowchart of assistance in explaining a process in which a digital still camera obtains a keyword from the server.
FIG. 35 is a flowchart of assistance in explaining a process in which a digital still camera sets image data to which a keyword is set in the server.
FIG. 36 is a flowchart of assistance in explaining a process in which the digital still camera searches a similar keyword from the server.
FIG. 37 is a flowchart of assistance in explaining a process in which a personal computer sets a keyword or related information in the server.
FIG. 38 is a flowchart of assistance in explaining a process in which the digital still camera searches a keyword or related information from the server.
FIG. 39 is a diagram showing an example of the screen of an LCD displaying keywords and related information searched by the server.
FIG. 40 is a flowchart of assistance in explaining a process in which the digital still camera searches a keyword or URL information from the server.
FIG. 41 is a diagram showing an example of the screen of the LCD displaying keywords and URL information searched by the server.

### Description of Reference Numerals

1, 1-1, and 1-2 digital still camera; 2 information processing system; 11 camera unit; 12 camera DSP; 13 SDRAM; 14 control unit; 15 operating unit; 16 LCD controller; 17 LCD; 18 medium interface; 19 recording medium; 20 external interface; 31 optical block; 32 CCD; 33 preprocessing circuit; 34 optical block driver; 35 CCD driver; 36 timing generating circuit; 41 AF processing unit; 42 AE processing unit; 43 AWB processing unit; 44 compressing and decompressing unit; 45 SDRAM controller; 51 CPU; 52 RAM; 53 flash ROM; 54 real-time clock; 55 system bus; 71 magnetic disk; 72 optical disk; 73 magneto-optical disk; 74 semiconductor memory; 101 control program; 111 imaging information recording section; 112 keyword recording section; 113 setting image searching section; 114 similar information-set image searching section; 115 keyword extracting section; 116 keyword setting section; 117 histogram display data generating section; 118 display controlling section; 119 communication controlling section; 121 keyword searching part; 122 imaging information searching part; 123 transmitter controlling part; 124 receiver controlling part; 601 server; 602 personal computer; 621 CPU; 622 ROM; 623 RAM; 624 bus; 625 input-output interface; 626 input unit; 627 output unit; 628 recording unit; 629 communication unit; 630 drive; 641 magnetic disk; 642 optical disk; 643 magneto-optical disk; 644 semiconductor memory; 651 OS; 652 Web server program; 653 keyword managing program; 661 keyword searching section; 662 keyword setting section; 663 related information setting section; 664 related information searching section; 665 similar information-set image searching section; 666 URL information searching section; 667 receiver controlling section; 668 transmitter controlling section

### Best Mode for Carrying out the Invention

Embodiments of the present invention will hereinafter be described with reference to the drawings.

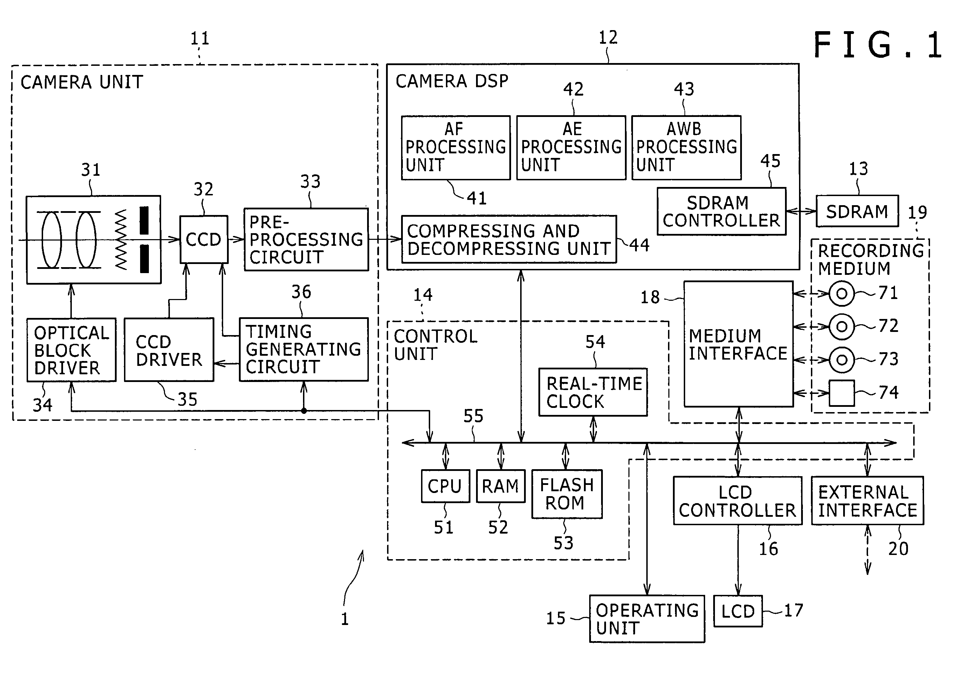

FIG. 1 is a block diagram showing a configuration of an embodiment of a digital still camera 1 according to the embodiment of the present invention.

The digital still camera 1 is an example of an image management apparatus that picks up an image of a subject and records image data obtained as a result of the image pickup.

Description in the following will be made by taking the digital still camera 1 as an example. However, the present invention is not limited to this, and is applicable to for example digital video cameras, portable telephones having an image pickup function, or personal computers having an image pickup function.

The digital still camera 1 includes a camera unit 11, a camera DSP (Digital Signal Processor) 12, an SDRAM (Synchronous Dynamic Random Access Memory) 13, a control unit 14, an operating unit 15, an LCD controller 16, an LCD 17, a medium interface 18, a recording medium 19, and an external interface 20.

The camera unit 11 is formed by an optical system of an image pickup element, a lens for forming an image on the image pickup element, and the like. The camera unit 11 forms an image of a subject, subjects the formed image to photoelectric conversion, and thereby generates image data corresponding to the image. The camera unit 11 supplies the generated image data to the camera DSP 12.

The camera unit 11 includes an optical block 31, a CCD (Charge Coupled Device) 32, a preprocessing circuit 33, an optical block driver 34, a CCD driver 35, and a timing generating circuit 36.

The optical block 31 includes for example optical lenses, a focus mechanism, a shutter mechanism, a diaphragm (iris) mechanism, and the like. The optical block 31 collects light (an image of the light) reflected from the subject, that is, forms the light of the image of the subject on a light receiver part of the CCD 32. The optical block 31 is driven by the optical block driver 34.

The CCD 32 is formed by a CCD sensor. The CCD 32 subjects the light (image) formed by the optical block 31 to photoelectric conversion according to a driving signal supplied from the CCD driver 35, and thereby converts the light into an analog electric signal. The CCD 32 supplies image data as the converted analog signal to the preprocessing circuit 33 on the basis of a timing signal from the timing generating circuit 36 controlled by the control unit 14.

Incidentally, the CCD 32 is not limited to a CCD sensor, and may be an image pickup element generating an image signal with a pixel as a unit, such for example as a CMOS (Complementary Metal Oxide Semiconductor) sensor.

The preprocessing circuit 33 subjects the image data as the analog signal supplied from the CCD 32 to a CDS (Correlated Double Sampling) process for maintaining a good S/N (Signal/Noise) ratio, and to an AGC (Automatic Gain Control) process for controlling gain. The preprocessing circuit 33 performs A/D (Analog/Digital) conversion to convert the analog signal to a digital signal, and then supplies image data as the converted digital signal to the camera DSP 12.

The optical block driver 34 generates a driving signal for operating the optical block 31 under control of the control unit 14, and supplies the generated driving signal to the optical block 31 to operate the optical block 31. For example, the optical block driver 34 supplies the optical block 31 with a driving signal for achieving focus or regulating an amount of light by adjusting the diaphragm on the basis of an instruction from a user at a time of image pickup.

The CCD driver 35 generates a driving signal for driving the CCD 32 on the basis of a timing signal supplied from the timing generating circuit 36, and then supplies the generated driving signal to the CCD 32.

The timing generating circuit 36 generates a timing signal serving as a temporal reference for the operation of the CCD 32 under control of the control unit 14, and then supplies the generated timing signal to the CCD 32 and the CCD driver 35.

The camera DSP 12 applies image processing to the image data as the digital signal supplied from the CCD 32. The camera DSP 12 includes for example an AF (Auto Focus) processing unit 41, an AE (Auto Exposure) processing unit 42, an AWB (Auto White Balance) processing unit 43, and a compressing and decompressing unit 44. The camera DSP 12 applies predetermined cameral signal processing to the image data supplied from the CCD 32, and compresses the image data resulting from various adjustments by the predetermined cameral signal processing by a predetermined compression system.

The camera DSP 12 also includes an SDRAM controller 45.

The camera DSP 12 is for example formed by a special DSP, which is a special IC (Integrated Circuit), or a general-purpose DSP.

The camera DSP 12 under control of the control unit 14 supplies the compressed image data to the recording medium 19 via a system bus 55 to record the image data onto the recording medium 19 as a file.

When desired image data is read from the recording medium 19 according to an operating input from a user which input is received through the operating unit 15 including a touch panel, a control key, and the like, the camera DSP 12 decompresses the data-compressed image data supplied from the recording medium 19 via the system bus 55 by performing predetermined decompression processing (extraction processing) corresponding to the data compression. The camera DSP 12 supplies the decompressed image data to the LCD controller 16 via the system bus 55.

The AF processing unit 41 subjects the image data supplied from the camera unit 11 which data is stored in the SDRAM 13 to processing for bringing a subject into focus (so-called auto focus). The AE processing unit 42 performs processing for determining exposure on the basis of brightness of the subject (so-called auto exposure). The AWE processing unit 43 performs processing for correcting the image data as a whole on the basis of a predetermined reference color, which is a white color (so-called white balance).

The compressing and decompressing unit 44 compresses the image data resulting from various adjustments by the predetermined cameral signal processing by a predetermined compression system. For example, the compressing and decompressing unit 44 compresses the image data by a JPEG (Joint Photographic Experts Group) system. Thereby the image data can be recorded onto the recording medium 19 after a data amount of the image data is reduced.

In addition, when the image data is read from the recording medium 19, the compressing and decompressing unit 44 decompresses the compressed image data supplied from the recording medium 19 via the system bus 55 by performing predetermined decompression processing (extraction processing) corresponding to the compression system of the image data. The decompressed image data is supplied to the LCD controller 16 via the system bus 55.

The SDRAM controller 45 controls the SDRAM 13 on the basis of a program executed by the camera DSP 12 and various data to store the program and the various data temporarily in the SDRAM 13.

The SDRAM 13 stores the program executed by the camera DSP 12, the various data and the like as necessary under control of the SDRAM controller 45. For example, the SDRAM 13 temporarily storing image data supplied from the camera unit 11, the camera DSP 12 applies predetermined camera signal processing and the processing of compressing the image data to the temporarily stored image data, and thereby generates compressed image data. The generated image data is read from the SDRAM 13, and then supplied to the recording medium 19 via the system bus 55.

The control unit 14 controls various parts of the digital still camera 1, such as the camera unit 11, the camera DSP 12, and the like. For example, when an image is picked up, the control unit 14 controls the optical block driver 34 to make the optical block driver 34 generate a driving signal for operating the optical block 31. The generated driving signal is supplied to the optical block 31, thereby operating the optical block 31.

The control unit 14 is for example formed by a general-purpose MPU (Micro Processing Unit) for embedding. The control unit 14 includes a CPU (Central Processing Unit) 51, a RAM (Random Access Memory) 52, a flash ROM (Read Only Memory) 53, a real-time clock 54, and the system bus 55.

The CPU 51 controls various parts of the digital still camera 1, such as the camera unit 11, the camera DSP 12, and the like. In addition, the CPU 51 performs various processes according to a program stored in the flash ROM 53 or the RAM 52.

The RAM 52 stores a program executed by the CPU 51, various data, and the like as necessary. The flash ROM 53 records programs executed by the CPU 51 and various data. The real-time clock 54 provides data indicating a present date, a present day, and a present time. Thereby the digital still camera 1 can obtain a picture-taking date, for example. The CPU 51, the RAM 52, the flash ROM 53, and the real-time clock 54 are interconnected by the system bus 55.

The system bus 55 is further connected with the camera unit 11, the camera DSP 12, the operating unit 15, the LCD controller 16, the medium interface 18, and the external interface 20.

The operating unit 15 is for example formed by a touch panel (for example a screen of the LCD 17), a control key (switch) (not shown), and the like. The operating unit 15 supplies a signal corresponding to an operating input from a user to the CPU 51.

The LCD controller 16 generates an image signal to be supplied to the LCD 17 on the basis of image data supplied from the camera DSP 12, and then supplies the generated image signal to the LCD 17. The LCD controller 16 controls display of the LCD 17 by supplying the image signal to the LCD 17.

On the basis of the image signal supplied from the LCD controller 16, the LCD 17 displays an image corresponding to the image signal on the display screen. Thereby, for example, the image corresponding to the image data recorded on the recording medium 19 is displayed on the screen of the LCD 17.

Incidentally, the display form of the image conforms to a control program (to be described later) recorded in the flash ROM 14. That is, the LCD controller 16 determines the display form of the image to be displayed on the screen of the LCD 17 according to the control program executed by the CPU 51.

The medium interface 18 is a predetermined interface corresponding to the recording medium 19. For example, when the recording medium 19 is a memory card, the medium interface 18 is formed by a predetermined interface corresponding to the memory card.

The recording medium 19 is for example formed by a magnetic disk 71 (for example an HDD (Hard Disk)), an optical disk 72 (for example a recordable CD (Compact Disc) or a recordable DVD (Digital Versatile Disc)), a magneto-optical disk 73 (for example an MD (Mini-Disc) (trademark)), a semiconductor memory 74 (for example a memory card), or the like. The recording medium 19 is detachable.

The external interface 20 is for example formed by a wired interface such as IEEE (Institute of Electrical and Electronics Engineers) 1394, USB (Universal Serial Bus), or the like or a wireless interface using light or radio waves. That is, the external interface 20 may be either of the wired communication interface and the wireless communication interface.

For example, the external interface 20 is connected to an external personal computer (not shown) by being connected to a network such for example as the Internet. The external interface 20 is supplied with image data from the personal computer via the network, records the image data onto the recording medium 19, and supplies image data recorded on the recording medium 19 to the external personal computer or the like via the network.

In addition, the external interface 20 is connected to a communication module to be connected to a network such for example as the Internet. Thereby the digital still camera 1 can obtain various image data and other information from an external personal computer via the network, and supply information such as image data recorded on the recording medium 19 and the like to a desired other person via the network.

Further, the digital still camera 1 can of course read and reproduce the information such as the image data obtained from the external personal computer via the network and recorded on the recording medium 19, and display the information on the screen of the LCD 17 for use by the user.

Thus, the digital still camera 1 can pick up an image of a subject and record the image on the recording medium 19 loaded in the digital still camera 1. In addition, the digital still camera 1 can read image data recorded on the recording medium 19, and reproduce and use the read image data. Further, the digital still camera 1 can obtain image data from an external personal computer via a network, record the obtained image data onto the recording medium 19, and read and reproduce the recorded image data.

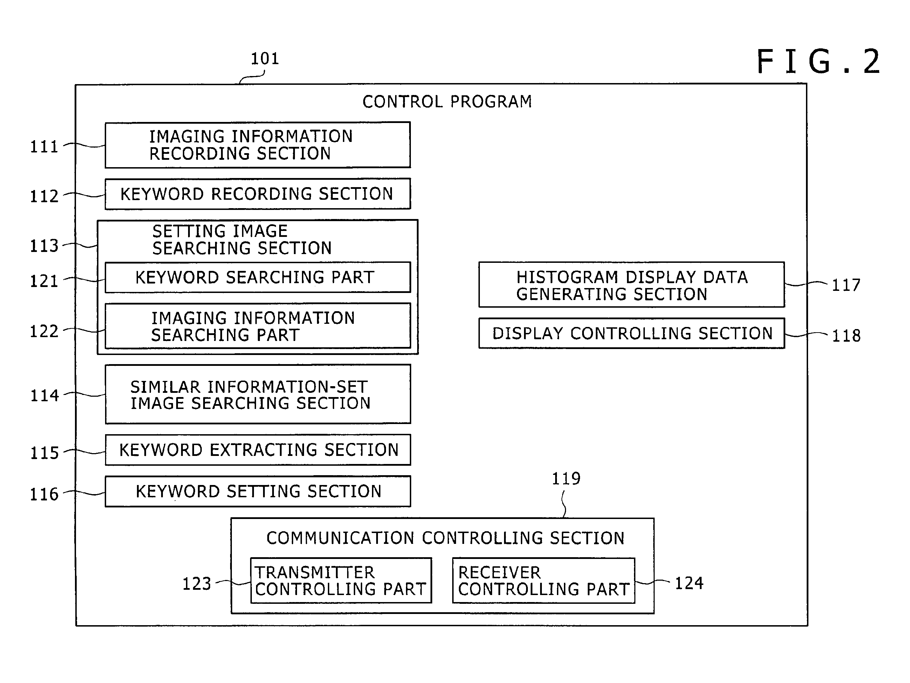

FIG. 2 is a block diagram showing a configuration of a control program 101 executed in the control unit 14.

The control program 101 is for example stored in the flash ROM 53 of the control unit 14. The control program 101 is stored from the flash ROM 53 into the RAM 52 as necessary, and executed by the CPU 51. For example, the control program 101 is stored from the flash ROM 53 into the RAM 52 as necessary, and performs for example a search by information set as appropriate by the user after image pickup (hereinafter referred to as a keyword) or information set at a time of image pickup (hereinafter referred to as imaging information).

The control program 101 includes an imaging information recording section 111, a keyword recording section 112, a setting image search section 113, a similar information-set image searching section 114, a keyword extracting section 115, a keyword setting section 116, a histogram display data generating section 117, a display controlling section 118, and a communication controlling section 119.

The imaging information recording section 111 records imaging information onto the recording medium 19 in correspondence with image data when the image data is recorded onto the recording medium 19 at a time of image pickup. For example, the imaging information recording section 111 records an image pickup date of "2004.02.28" onto the recording medium 19 in correspondence with image data.

The keyword recording section 112 records a keyword onto the recording medium 19 in correspondence with image data on the basis of an operation of the operating unit 15 by a user. For example, the keyword recording section 112 records a keyword of "snowboard" onto the recording medium 19 in correspondence with image data.

The setting image search section 113 searches image data to which a keyword is set.

The setting image search section 113 includes a keyword search part 121 and an imaging information searching part 122.

The keyword search part 121 searches keywords set to image data recorded on the recording medium 19. When no keyword is specified by the user, the keyword search part 121 searches keywords set to all the image data recorded on the recording medium 19. When a keyword is specified by the user, the keyword search part 121 searches other keywords set to image data to which the keyword specified by the user is set (other keywords than the keyword specified by the user), of the image data recorded on the recording medium 19.

With the keyword specified by the user as a criterion for search (hereinafter referred to as a search condition), the keyword search part 121 searches other keywords set to image data to which the keyword specified by the user is set from the image data and keywords recorded on the recording medium 19. For example, when a keyword of "daughter" is specified as a search condition by the user, the keyword search part 121 searches other keywords than "daughter", the other keywords being set to image data to which the keyword of "daughter" is set, from the recording medium 19 loaded in the medium interface 18 with the keyword of "daughter" as the search condition.

In addition, the keyword search part 121 determines whether the searched keywords are stored in a keyword table (a table that stores information associating keywords and frequencies of the keywords with each other). When the keyword search part 121 determines that a searched keyword is stored in the keyword table, the keyword search part 121 increases the frequency of the searched keyword stored in the keyword table by one. On the other hand, when the keyword search part 121 determines that a searched keyword is not stored in the keyword table, the keyword search part 121 adds the searched keyword as a new keyword to the keyword table. Further, the keyword search part 121 sorts keywords in the keyword table in order of frequency.

For example, the keyword search part 121 reads the keyword of "daughter" searched by the keyword search part 121 from the recording medium 19, and determines whether the keyword of "daughter" is stored as a keyword in the keyword table. When the keyword search part 121 determines that the keyword of "daughter" is stored as a keyword in the keyword table, the keyword search part 121 increases the frequency of the keyword of "daughter" stored in the keyword table by one. On the other hand, when the keyword search part 121 determines that the keyword of "daughter" is not stored in the keyword table, the keyword search part 121 adds a frequency of "1" to the keyword table in association with the keyword of "daughter".

For example, when searching other keywords than "daughter", the other keywords being set to image data to which the keyword of "daughter" is set, the keyword search part 121 reads a keyword of "baseball" set to the image data to which the keyword of "daughter" searched by the keyword search part 121 is set from the recording medium 19, and determines whether the keyword of "baseball" is stored as a keyword in the keyword table. When the keyword search part 121 determines that the keyword of "baseball" is stored as a keyword in the keyword table, the keyword search part 121 increases the frequency of the keyword of "baseball" stored in the keyword table by one. On the other hand, when the keyword search part 121 determines that the keyword of "baseball" is not stored in the keyword table, the keyword search part 121 adds a frequency of "1" to the keyword table in association with the keyword of "baseball".

In addition, the keyword search part 121 sorts the keywords in the keyword table in order of decreasing frequency (descending order). For example, the keyword search part 121 sorts keywords of "daughter" (for example a frequency of "2000"), "ski" (for example a frequency of "1008"), "baseball" (for example a frequency of "680"), and "hot spring" (for example a frequency of "1355") in the keyword table in descending order of "daughter", "hot spring", "ski", and "baseball".

The imaging information searching part 122 searches imaging information attached to image data recorded on the recording medium 19. The imaging information is information related to pickup of image data. For example, the imaging information is a photographing date, a photographing time, a photographing location, information identifying a device that picked up the image data, information identifying a photographer who picked up the image data, photographing conditions at the time of the image pickup, such as a shutter speed, an F value, an EV value, and the like.

Incidentally, a kind of information such as the information on the time, the information on the location, the information on the device, the information on the photographer, and the like will hereinafter be referred to also as a category.

When a category of imaging information is specified by the user, the imaging information searching part 122 searches imaging information that is attached to image data recorded on the recording medium 19 and is in the category specified by the user. In addition, when a specific value of imaging information in a predetermined category (for example a photographing date of "2003.10.12" or a photographing location near Ikebukuro Station) is specified by the user, the imaging information searching part 122 searches imaging information that is attached to image data recorded on the recording medium 19 and having the specified specific value of imaging information attached thereto, and is in categories other than the category specified by the user, that is, other categories.

Categories of imaging information, specific values of imaging information, and keywords specified by the user in search will hereinafter be referred to also as search conditions.

When imaging information of "2003.10.12" is specified as a search condition by the user, the imaging information searching part 122 searches other imaging information set to image data to which the imaging information of "2003.10.12" is attached from the recording medium 19 with the imaging information of "2003.10.12" as the search condition.

For example, when imaging information as image pickup date is specified as a search condition by the user, the imaging information searching part 122 searches an "image pickup date" set to image data, such as "2003.10.12", "2003.09.15", "2003.04.01", "2004.04.01", or the like, from the recording medium 19 with the search category of the imaging information as image pickup date as search condition.

Further, the imaging information searching part 122 reads the searched imaging information from the recording medium 19, and determines whether the searched imaging information is included in an imaging information table (a table that stores information associating imaging information and frequencies of the imaging information with each other). When the imaging information searching part 122 determines that the searched imaging information is stored in the imaging information table, the imaging information searching part 122 increases the frequency of the searched imaging information in the imaging information table by one. On the other hand, when the imaging information searching part 122 determines that the searched imaging information is not stored in the imaging information table, the imaging information searching part 122 adds the searched imaging information as new imaging information to the imaging information table. Further, the imaging information searching part 122 sorts the imaging information in the imaging information table in order of frequency.

For example, the imaging information searching part 122 reads the searched imaging information of "2003.10.12" from the recording medium 19, and determines whether the imaging information of "2003.10.12" is stored in the imaging information table. When the imaging information searching part 122 determines that the imaging information of "2003.10.12" is stored in the imaging information table, the imaging information searching part 122 increases the frequency of the imaging information of "2003.10.12" stored in the imaging information table by one. On the other hand, when the imaging information searching part 122 determines that the imaging information of "2003.10.12" is not stored in the imaging information table, the imaging information searching part 122 adds a frequency of "1" to the imaging information table in association with the imaging information of "2003.10.12".

Further, the imaging information searching part 122 sorts the imaging information in the imaging information table in order of decreasing frequency (descending order). For example, the imaging information searching part 122 sorts imaging information of "2003.10.12" (for example a frequency of "200"), "2003.04.01" (for example a frequency of "60"), "2004.04.01" (for example a frequency of "25"), and "2003.09.15" (for example a frequency of "90") in the imaging information table in descending order of "2003.10.12", "2003.09.15", "2003.04.01", and "2004.04.01".

The similar information-set image searching section 114 searches image data to which keywords different from a keyword specified by the user are set and to which the keyword specified by the user is set. In addition, the similar information-set image searching section 114 searches image data to which keywords different from a keyword specified by the user are set and to which the keyword and imaging information specified by the user are set.

That is, the similar information-set image searching section 114 searches image data to which a keyword or imaging information as a search condition in search of image data by the setting image search section 113 is set and to which keywords that are not set as search conditions are set.

For example, when narrowing down for setting a keyword is performed by the keyword of "daughter" and the imaging information of "2003.10.12" on the basis of an instruction by the user (when the setting image search section 113 searches image data), the similar information-set image searching section 114 searches image data to which the keyword of "daughter" is set, the imaging information as image pickup date of "2003.10.12" is added, and keywords other than the keyword of "daughter" are set from the image data recorded on the recording medium 19.

In addition, the similar information-set image searching section 114 determines whether to search an image on the basis of an instruction by the user. For example, when a control key corresponding to a button for searching an image which button is displayed on the screen of the LCD 17 is pressed by an instruction by the user, the similar information-set image searching section 114 determines that an image is to be searched. Further, the similar information-set image searching section 114 sets indicating information indicating keyword input to desired image data. For example, the similar information-set image searching section 114 sets indicating information (for example a flag) to image data to which keywords are input.

The keyword extracting section 115 extracts keywords set to image data searched by the similar information-set image searching section 114. The keyword extracting section 115 supplies the extracted keywords to the display controlling section 118. For example, when the similar information-set image searching section 114 searches image data to which keywords of "wedding", ".. family", and "daughter" are set, the keyword extracting section 115 extracts the keywords of "wedding", ".. family", and "daughter" set to the searched image data, and then supplies the extracted keywords of "wedding", ".. family", and "daughter" to the display controlling section 118.

The keyword setting section 116 sets a keyword to image data recorded on the recording medium 19. For example, the keyword setting section 116 sets a keyword of "snowboarding" to image data (for example an image showing snowboarding) recorded on the recording medium 19.

In addition, the keyword setting section 116 sets a keyword extracted by the keyword extracting section 115 to image data to which indicating information is set by the similar information-set image searching section 114. More specifically, when keywords of "wedding" and ".. family" are extracted by the keyword extracting section 115, the keyword setting section 116 sets the keywords of "wedding" and " .. family" to image data to which indicating information is set.

Further, the keyword setting section 116 sets a keyword and related information corresponding to the keyword to image data recorded on the recording medium 19. For example, the keyword setting section 116 sets a keyword of ".. hot spring" and related information of "A restaurant called .. near the .. hot spring serves delicious food", for example, corresponding to the keyword of ".. hot spring" to image data recorded on the recording medium 19.

Related information is information related to a keyword. For example, the information of "A restaurant called .. near the .. hot spring serves delicious food" corresponding to the keyword of ".. hot spring" is related information.

Further, the keyword setting section 116 sets a keyword and URL (Uniform Resource Locator) information corresponding to the keyword to image data recorded on the recording medium 19. For example, the keyword setting section 116 sets a keyword of ".. hot spring" and URL information such for example as "INTRODUCTION TO .. HOT SPRING http://www.aaa.or.jp" and ".. HOT SPRING TOURIST ASSOCIATION http://www.bbb.or.jp" corresponding to the keyword of ".. hot spring" to image data recorded on the recording medium 19.

URL information refers to information composed of for example information on a link to a Web page of a URL system and a title of the linked page. For example, the information of "INTRODUCTION TO .. HOT SPRING http://www.aaa.or.jp" corresponding to the keyword of ".. hot spring" is URL information. Incidentally, URL information may be composed of only information on a link to a Web page of the URL system.

The histogram display data generating section 117 generates data (hereinafter referred to as histogram display data) for displaying keyword frequencies (number of keywords) corresponding to keywords in a histogram format on the screen of the LCD 17 on the basis of data stored in the keyword table supplied from the keyword search part 121. In addition, the histogram display data generating section 117 generates histogram display data for displaying imaging information frequencies (number of imaging information) corresponding to imaging information in a histogram format on the screen of the LCD 17 on the basis of data stored in the imaging information table supplied from the imaging information searching part 122. The histogram display data generating section 117 supplies the generated histogram display data to the display controlling section 118.

For example, when data stored in the keyword table supplied from the keyword search part 121 is the keyword of "daughter" and a frequency of "2000" corresponding to the keyword of "daughter", the histogram display data generating section 117 generates histogram display data for displaying a histogram indicating the frequency of "2000" corresponding to the keyword of "daughter". The histogram display data generating section 117 supplies the generated histogram display data to the display controlling section 118.

The display controlling section 118 controls the LCD controller 16 to display an image corresponding to image data recorded on the recording medium 19, keywords, imaging information, or the like on the screen of the LCD 17 according to a predetermined format (for example a histogram format or a thumbnail format).

For example, the display controlling section 118 displays a frequency corresponding to a keyword or imaging information in a histogram format on the screen of the LCD 17 according to histogram display data supplied from the histogram display data generating section 117.

The communication controlling section 119 controls the external interface 20 to make the external interface 20 exchange data with a server via a network such for example as the Internet.

The communication controlling section 119 includes a transmitter controlling part 123 and a receiver controlling part 124.

The transmitter controlling part 123 controls transmission of keywords or imaging information, for example, which transmission is performed in the external interface 20. For example, when a user performs a predetermined operation for inquiring of a server about a keyword to be set to image data, the transmitter controlling part 123 controls the external interface 20 to make the external interface 20 transmit imaging information to the server.

The receiver controlling part 124 controls reception of related information or URL information to be described later, for example. The reception is performed in the external interface 20. For example, the receiver controlling part 124 controls the external interface 20 to make the external interface 20 receive related information transmitted from the server.

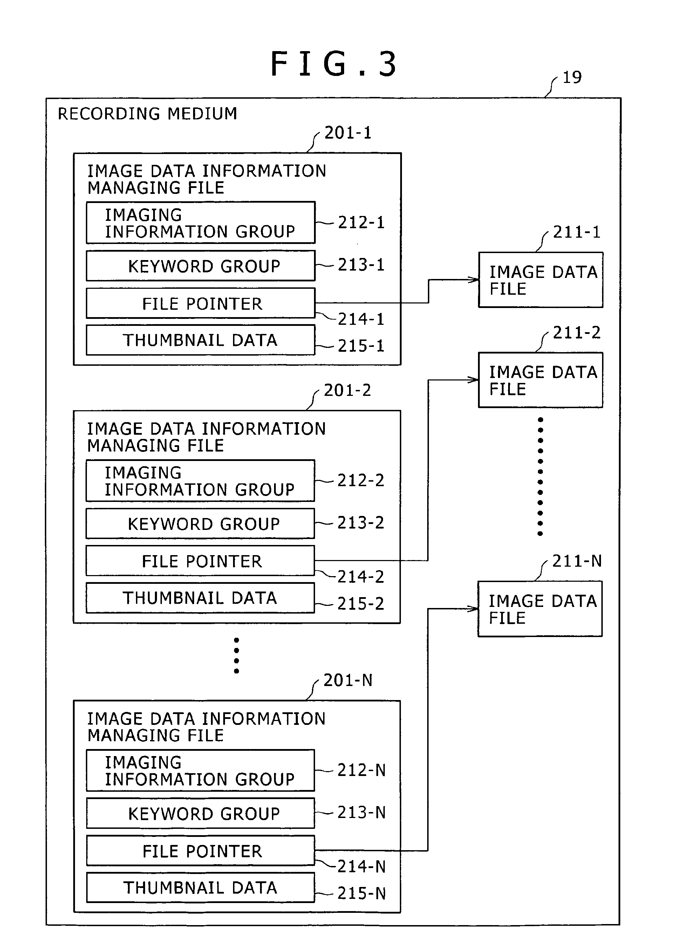

FIG. 3 is a diagram showing an example of correspondences between image data information managing files and image data files.

Image data information managing files 201-1 to 201-N and image data files 211-1 to 211-N are recorded on the recording medium 19, for example.

The image data information managing file 201-1 records therein information related to the image data file 211-1. The image data information managing file 201-1 includes for example an imaging information group 212-1, a keyword group 213-1, a file pointer 214-1, and thumbnail data 215-1. The file pointer 214-1 and the image data file 211-1 are associated with each other.

The imaging information group 212-1 is imaging information, such as a photographing date, location information, camera information, a photographer, or the like, set to the image data file 211-1. The imaging information group 212-1 includes for example an image pickup date of "2003.10.12" and "vicinity of Ikebukuro Station".

The keyword group 213-1 records therein zero, one, or a plurality of keywords set to the image data file 211-1. The keyword group 213-1 includes for example the keyword of "daughter".

In the following, imaging information and keywords as described above will be described in more detail. Imaging information and keywords will be referred to collectively as added information.

A keyword can be set on the basis of imaging information. For example, a keyword can be set by storing in advance a conversion table associating imaging information with keywords (storing the conversion table in the flash ROM 53, for example). More specifically, a keyword of "morning" is stored in advance in the conversion table in correspondence with an image pickup time of "6:00 to 10:00", whereby the keyword of "morning" is set to an image picked up at eight o'clock, for example.

Though described later in detail, a keyword of "home" is set in advance in correspondence with location information of a location identified in advance (for example a location and an area identified by latitude and longitude or the like), whereby the keyword of "home" is set to an image photographed at the specific location, for example.

Further, a keyword can be set by supplying imaging information to a device other than the digital still camera 1 (for example a personal computer). More specifically, for example, the external interface 20 under control of the CPU 51 supplies imaging information to an external server (not shown) via a network. The server searches a keyword corresponding to the obtained imaging information on the basis of the obtained imaging information and a conversion table stored in advance, and then supplies the searched keyword to the digital still camera 1 via the network. The digital still camera 1 obtains the keyword supplied from the server, and sets the obtained keyword to an intended image under control of the CPU 51.

Incidentally, search can be performed with imaging information and a keyword set as a compound condition (AND condition). More specifically, it is possible to first search images by the keyword of "daughter" and then search images by imaging information as a photographing date (for example "October 12, 2003"). That is, images having "daughter" set thereto as a keyword and taken on "October 12, 2003" can be searched.

Keywords may be not only numbers and symbols but also arbitrary languages such as Japanese, English, French, and the like.

The file pointer 214-1 is information indicating an association between the image data information managing file 201-1 and the image data file 211-1. The file pointer 214-1 is set as a variable indicating a memory area of the image data file 211-1 on the recording medium 19, that is, a so-called pointer. The file pointer 214-1 thereby associates the image data information managing file 201-1 and the image data file 211-1 with each other.

The thumbnail data 215-1 is image data obtained by reducing screen size and data size of the image data file 211-1. By recording the thumbnail data 215-1 corresponding to the image data file 211-1, it is possible to display images in a thumbnail format using the thumbnail data 215-1 rather than the image data file 211-1 when displaying the images in the thumbnail format on the screen of the LCD 17, for example. Therefore the images in the thumbnail format can be displayed on the screen of the LCD 17 more quickly.

The image data file 211-1 stores therein image data compressed by a JPEG system, for example.

Correspondences between the image data information managing file 201-2 and the image data file 211-2 to correspondences between the image data information managing file 201-N and the image data file 211-N are the same as the correspondences between the image data information managing file 201-1 and the image data file 211-1, and therefore description thereof will be omitted.

The image data information managing files 201-2 to 201-N are formed in the same manner as the image data information managing file 201-1, and therefore description thereof will be omitted.

Thus, the image data information managing files 201-1 to 201-N for managing information on image data and the image data files 211-1 to 211-N storing the image data are recorded separately from each other. Therefore, when added information is desired to be displayed on the screen of the LCD 17, for example, it suffices to read only necessary data (information) of added information and thumbnail data from the image data information managing files 201-1 to 201-N. It is thus possible to reduce an amount of read data and the number of seeks to and display added information or thumbnails on the screen of the LCD 17 more quickly.

Incidentally, while description has been made of a case where the image data information managing files 201-1 to 201-N and the image data files 211-1 to 211-N are recorded as separate files, information included in the image data information managing files 201-1 to 201-N may be embedded in information included in the image data files 211-1 to 211-N, respectively, and the image data files 211-1 to 211-N including the respective embedded information (in an EXIF (Exchangeable Image File Format) format, for example) may each be recorded as one file.

In addition, the information recorded in the image data information managing files 201-1 to 201-N is not limited to the imaging information groups 212-1 to 212-N, the keyword groups 213-1 to 213-N, the file pointers 214-1 to 214-N, and the thumbnail data 215-1 to 215-N described above; for example, related information groups for recording related information and URL information groups for recording URL information may be provided.

When the image data information managing files 201-1 to 201-N do not need to be individually distinguished from each other, the image data information managing files 201-1 to 201-N will hereinafter be referred to simply as an image data information managing file 201. When the imaging information groups 212-1 to 212-N do not need to be individually distinguished from each other, the imaging information groups 212-1 to 212-N will hereinafter be referred to simply as an imaging information group 212. When the keyword groups 213-1 to 213-N do not need to be individually distinguished from each other, the keyword groups 213-1 to 213-N will hereinafter be referred to simply as a keyword group 213.

When the file pointers 214-1 to 214-N do not need to be individually distinguished from each other, the file pointers 214-1 to 214-N will hereinafter be referred to simply as a file pointer 214. When the thumbnail data 215-1 to 215-N does not need to be individually distinguished from each other, the thumbnail data 215-1 to 215-N will hereinafter be referred to simply as thumbnail data 215. When the image data files 211-1 to 211-N do not need to be individually distinguished from each other, the image data files 211-1 to 211-N will hereinafter be referred to simply as an image data file 211.

Description will next be made of a process of associating the image data file 211 with the imaging information group 212 or the keyword group 213 as described above.

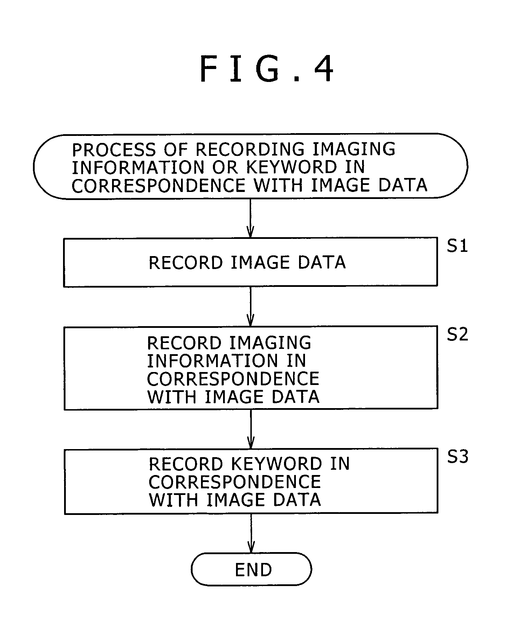

FIG. 4 is a flowchart of assistance in explaining a process of recording imaging information or a keyword in correspondence with image data.

In step S1, as described above, the camera DSP 12 under control of the control unit 14 supplies compressed image data to the recording medium 19 via the system bus 55 to record the image data as an image data file 211 on the recording medium 19.

In step S2, the imaging information recording section 111 records imaging information in correspondence with the image data (image data file 211). For example, the imaging information recording section 111 obtains a present date from the real-time clock 54, sets the obtained date as an image pickup date, and records the image pickup date of "2004.02.28" in an imaging information group 212 in correspondence with the image data file 211.

In step S3, the keyword recording section 112 records a keyword in correspondence with the image data (image data file 211) on the basis of a signal from the operating unit 15 which signal corresponds to operation by the user, whereby the process is ended. For example, the keyword recording section 112 records a keyword of "snowboarding" in a keyword group 213 in correspondence with the image data file 211 on the basis of operation by the user.

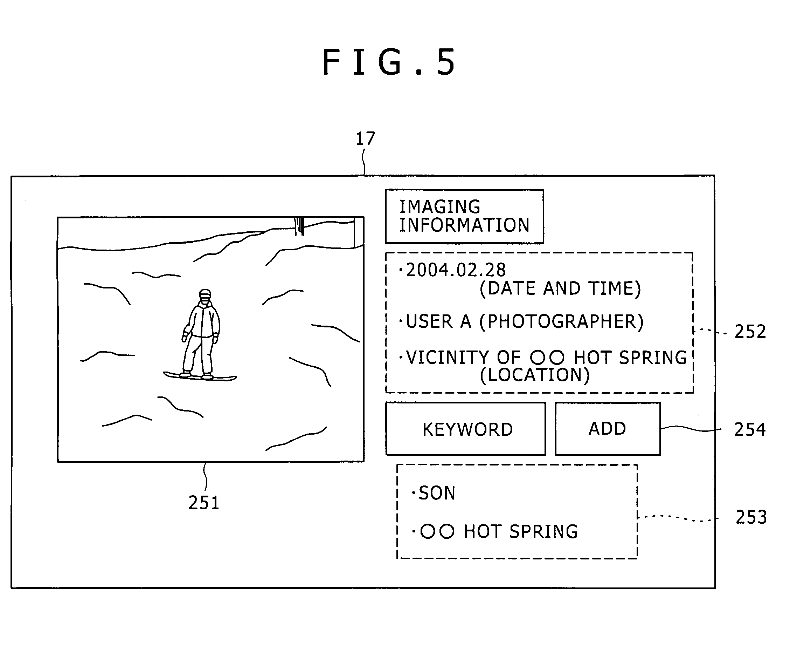

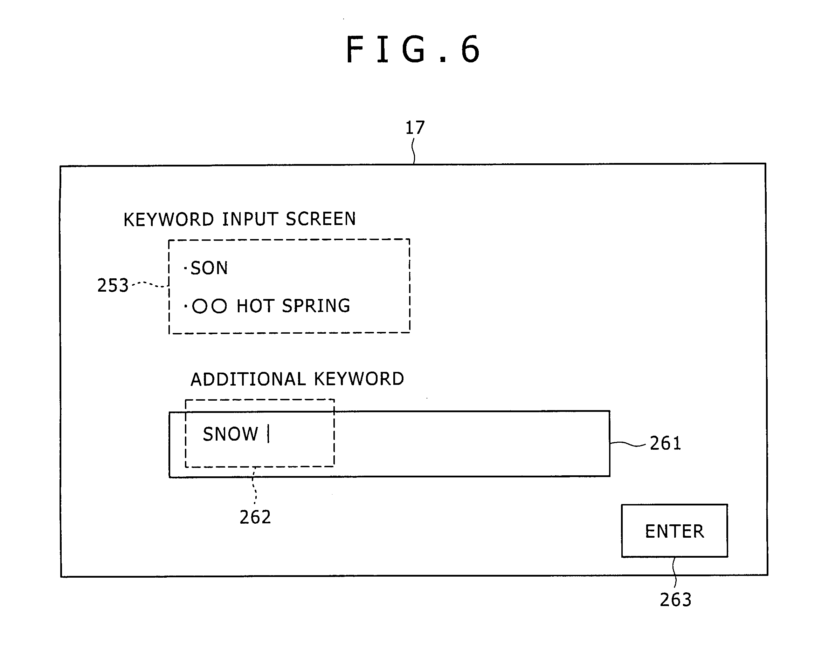

Methods for setting a keyword to image data as described above (for example the process of step S3 in FIG. 4) include a method of the user manually inputting the keyword from the screen for setting the keyword and setting the manually input keyword to the image data and a method of extracting the keyword already set to image data and setting the extracted keyword to the desired image data. In the following, an example of setting a keyword by the manual input of the user will first be described with reference to FIG. 5 and FIG. 6.

FIG. 5 is a diagram showing an example of the screen of the LCD 17 displaying an image and added information.

The screen showing the image and the added information is for example displayed on the screen of the LCD 17 after one image displayed in the thumbnail format is selected by an operation by the user and a predetermined control key is pressed.

The image 251 is an image to which imaging information as imaging information 252 and a keyword as a keyword 253 are set as the added information.

The imaging information 252 is imaging information set to the image 251 (image data for displaying the image 251). The imaging information 252 includes a date (image pickup date) of "2004.02.28", a photographer of a "user A", and a place in the "vicinity of the .. hot spring" (image pickup location). These are set as the imaging information of the image 251 (image data for displaying the image 251). The keyword 253 is set to the image 251 (image data for displaying the image 251). The keyword 253 includes "son" and ".. hot spring". These are set as the keyword of the image 251 (image data for displaying the image 251).

For example, when the user presses a switch provided to the operating unit 15 of the digital still camera 1 (hereinafter referred to simply as a switch), a signal corresponding to an adding button 254 is supplied to the CPU 51. That is, the adding button 254 is operated by the user when a keyword other than the keyword 253 is desired to be set to the image 251.

The process of supplying the signal corresponding to the adding button 254 to the CPU 51 is not limited to the above-described example. For example, a touch panel may be provided on an upper side of the LCD 17, and the signal corresponding to the adding button 254 may be supplied to the CPU 51 when the user touches the adding button 254 displayed on the screen of the LCD 17 (when the user presses the touch panel).

Incidentally, while the following description will be made supposing that signals corresponding to various buttons displayed on the screen of the LCD 17 are supplied to the CPU 51 when the user presses the switch of the operating unit 15, the present invention is not limited to this, and the signals may be supplied to the CPU 51 when the user operates the touch panel, a dial, a keyboard, a jog dial, or the like.

FIG. 6 is a diagram showing an example of the screen of the LCD 17 displaying a keyword input screen.

When the switch corresponding to the adding button 254 in FIG. 5 is pressed by an operation by the user, for example, the CPU 51 makes the LCD controller 16 display the keyword input screen on the screen of the LCD 17 according to the signal supplied from the adding button 254.

Description will be made below of a case where the switch corresponding to the adding button 254 in FIG. 5 is pressed. Since a keyword is to be added to the image 251 in FIG. 5, the keyword 253 of the image 251, a text box 261 for inputting the keyword to be added, and an enter button 263 are displayed on the keyword input screen displayed on the screen of the LCD 17.

The keyword 253 is set before a keyword is added to the image 251. The keyword 253 is for example "son" and ".. hot spring". The keyword desired to be added to the image 251 is input in the text box 261 by operation by the user. For example, since the image 251 is an image showing snowboarding, a keyword of "snowboarding" is input as a character string for suggesting the image 251 (in the example shown in FIG. 6, characters 262 are letters "snow" in a process of inputting the keyword of "snowboarding").

As for the enter button 263, for example, when the user presses the switch corresponding to the enter button 263, a signal corresponding to the enter button 263 is supplied to the CPU 51. The keyword setting section 116 sets the keyword input in the text box 261 to the intended image under control of the CPU 51 according to the supplied signal. For example, the keyword setting section 116 sets the keyword of "snowboarding" input in the text box 261 as a keyword of the image 251 (image data for displaying the image 251).

That is, the keywords of "son", ".. hot spring", and "snowboarding" are set to the image 251 (image data for displaying the image 251).

Thus, an arbitrary keyword can be set to an arbitrary image by an operation by the user, that is, by manually inputting the keyword.

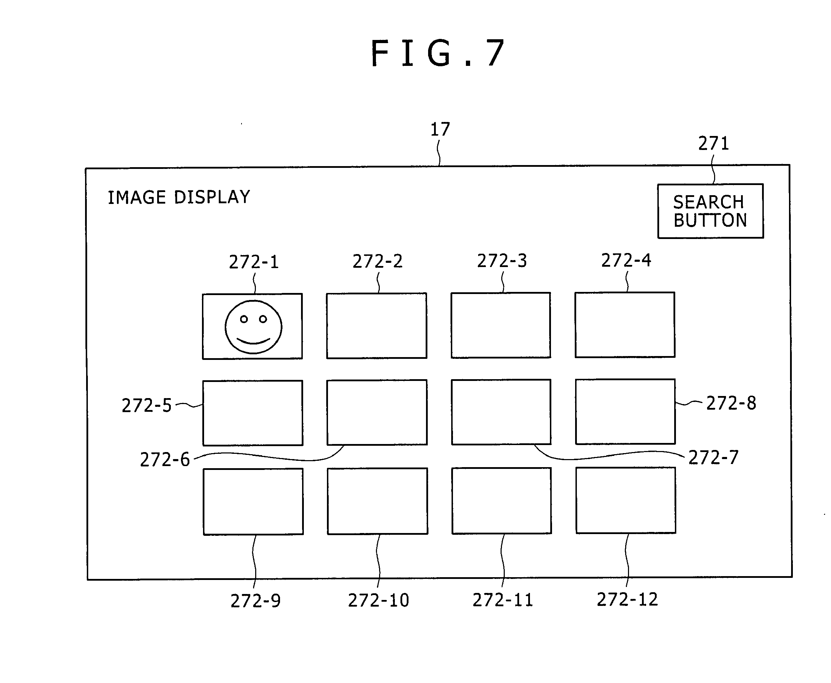

Next, referring to FIGS. 7 to 30, description will be made of an example of extracting a keyword already set to image data and setting the extracted keyword to desired image data instead of the above-described method of setting a keyword by manual input.

FIG. 7 is a diagram showing an example of the screen of the LCD 17 displaying images in the thumbnail format.

The images 272-1 to 272-12 are thumbnail images corresponding to image data recorded on the recording medium 19.

More specifically, under control of the CPU 51 executing the display controlling section 118 of the control program 101, the LCD controller 16 obtains thumbnail data 215 for displaying the images in the thumbnail format as reduced images for list display of a plurality of images from the recording medium 19, generates an image signal corresponding to the obtained thumbnail data 215, and then supplies the generated image signal to the LCD 17. The LCD 17 displays the images 272-1 to 272-12 on the basis of the image signal supplied from the LCD controller 16.

A search button 271 supplies a signal corresponding to the search button 271 to the CPU 51 when the user presses the switch corresponding to the search button 271, for example. For example, the search button 271 is selected by an operation by the user when a desired image is desired to be searched on the basis of added information.

Description will be made below of a case where the switch corresponding to the search button 271 is pressed by an operation by the user.

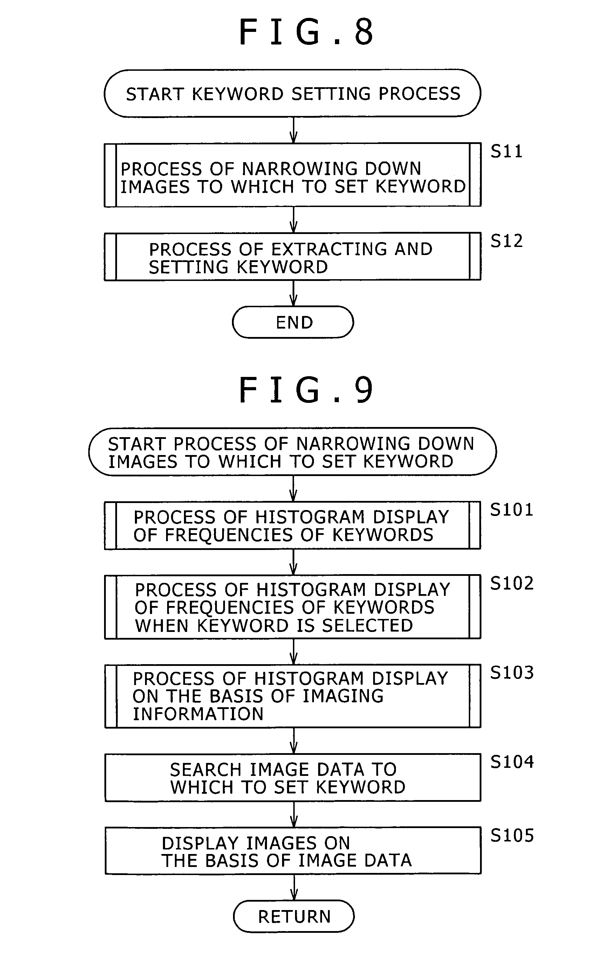

FIG. 8 is a flowchart of assistance in explaining a keyword setting process that extracts a keyword already set to image data and sets the extracted keyword to desired image data.

In step S11, the control program 101 narrows down images to which a keyword is set by a keyword or imaging information on the basis of a specification by the user. Details of the process of narrowing down images to which a keyword is set will be described later.

In step S12, the control program 101 extracts a keyword to be set to the images narrowed down by the process of step S11, and sets the extracted keyword to the narrowed-down images, whereby the process is ended. Details of the process of extracting and setting the keyword will be described later.

The process of narrowing down images to which a keyword is set in FIG. 8, which process corresponds to the process of step S11, will next be described with reference to a flowchart of FIG. 9.

In step S101, the keyword search part 121, the histogram display data generating section 117, and the display controlling section 118 perform a process of displaying a histogram of frequencies of keywords. For example, in the process of displaying a histogram of frequencies of keywords, the keyword search part 121 searches keywords set to all image data on the basis of an instruction from the user. Details of the process of histogram display of frequencies of keywords will be described later.

In step S102, the keyword search part 121, the histogram display data generating section 117, and the display controlling section 118 perform a process of displaying a histogram of frequencies of keywords when a keyword is selected. For example, in the process of step S102, when the user selects a keyword of "daughter", the keyword search part 121 searches other keywords of image data to which the keyword of "daughter" is set. Details of the process of histogram display of frequencies of keywords when a keyword is selected will be described later.

In step S103, the imaging information searching part 122, the histogram display data generating section 117, and the display controlling section 118 perform a process of displaying a histogram on the basis of imaging information. For example, in the process of step S103, when the user selects imaging information of "2003.10.12", the imaging information searching part 122 searches imaging information of image data to which the imaging information of "2003.10.12" is set. Details of the process of histogram display on the basis of imaging information will be described later.

Incidentally, description has been made of an example in which the process of histogram display of frequencies of keywords, the process of histogram display of frequencies of keywords when a keyword is selected, and the process of histogram display on the basis of imaging information are performed in that order, the present invention is not limited to this, and the processes may be performed in desired order. For example, the process of histogram display on the basis of imaging information may be performed first, and then the process of histogram display of frequencies of keywords and the process of histogram display of frequencies of keywords when a keyword is selected may be performed. Alternatively, after the process of histogram display on the basis of imaging information, the process of histogram display of frequencies of keywords and the process of histogram display of frequencies of keywords when a keyword is selected may be performed again.

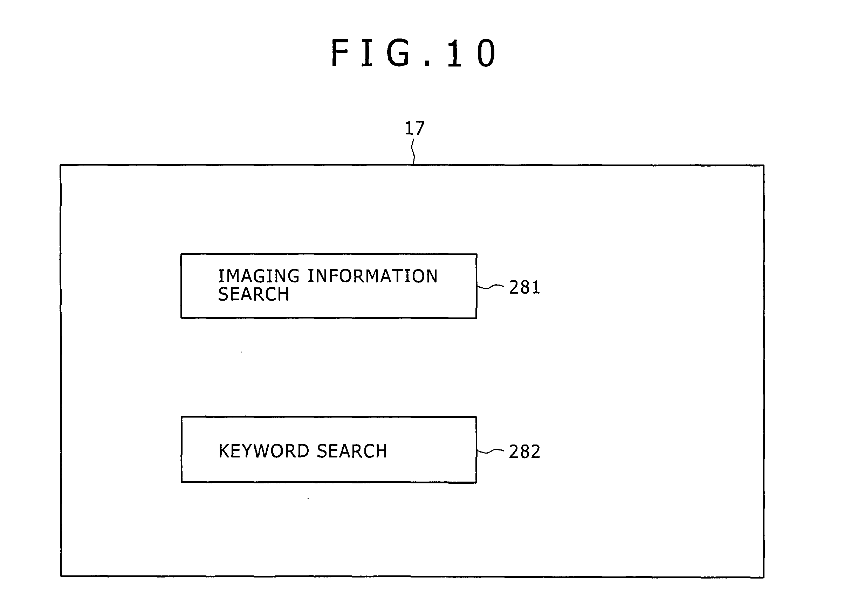

The order of the process of histogram display of frequencies of keywords, the process of histogram display of frequencies of keywords when a keyword is selected, and the process of histogram display on the basis of imaging information can be determined by an instruction from the user. FIG. 10 is a diagram showing an example of the screen of the LCD 17 displaying a search category selecting screen for determining the order.

When the switch corresponding to the search button 271 in FIG. 7 is pressed by an operation by the user, for example, the CPU 51 makes the LCD controller 16 display a search category selecting screen on the screen of the LCD 17 according to a signal supplied from the search button 271. An imaging information search button 281 and a keyword search button 282 are displayed on the search category selecting screen.

For example, when the user presses the switch corresponding to the keyword search button 282, the process of histogram display of frequencies of keywords and the process of histogram display of frequencies of keywords when a keyword is selected are performed.

For example, when the user presses the switch corresponding to the imaging information search button 271, the process of histogram display on the basis of imaging information is performed.

In step S104, the setting image search section 113 searches image data narrowed down by the process of steps S101 to S103 with a keyword or imaging information as a search condition.

In step S105, on the basis of the image data searched by the process of step S104, the display controlling section 118 displays images displayed by the image data to which a keyword is set on the screen of the LCD 17, whereby the process is ended.

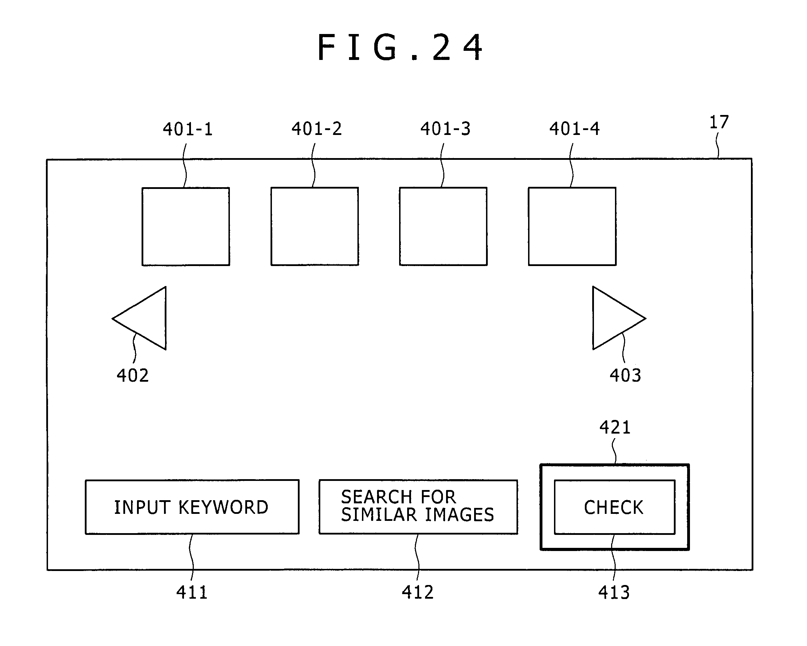

For example, when the keyword of "daughter" is specified as a search condition in the process of step S101 or step S102, and imaging information of "2003.10.12" is specified in the process of step S103, the display controlling section 118 sets image data to which the keyword of "daughter" and the imaging information of "2003.10.12" are set as image data to which a keyword is set. The display controlling section 118 displays images displayed by the image data on the screen of the LCD 17. For example, as shown in FIG. 24 to be described later, a list of images extracted with a keyword or imaging information as a search condition is displayed.

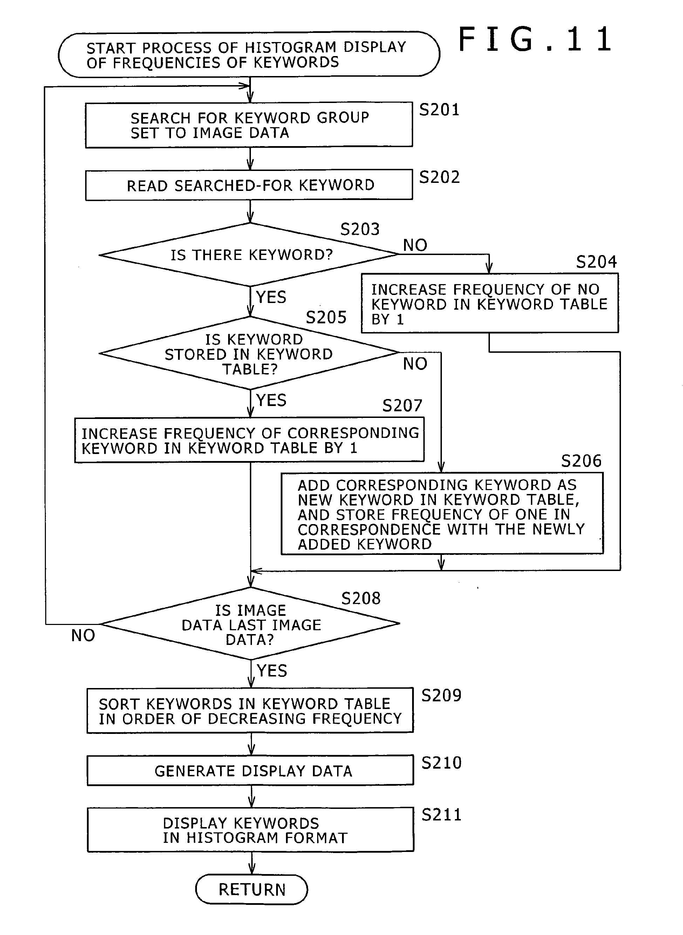

Details of the process of histogram display of frequencies of keywords, which process corresponds to the process of step S101 in FIG. 9, will next be described with reference to a flowchart of FIG. 11.

In step S201, the keyword search part 121 searches a keyword group 213 set to one piece of image data from the recording medium 19. For example, the keyword search part 121 searches a keyword group 213 indicating the keyword of "daughter" set to one piece of image data recorded on the recording medium 19.

The keyword group 213 refers to a set of zero, one, or a plurality of keywords set to one piece of image data, as described above. For example, a keyword group 213 for image data to which keywords of "daughter" and "ski" are set includes the keyword of "daughter" and the keyword of "ski". There are image data to which keywords are set and image data to which no keyword is set. The keyword search part 121 obtains "no keyword" as a result of search of image data to which no keyword is set.

In step S202, the keyword search part 121 reads the keyword group 213 searched by the process of step S201 from the recording medium 19.

In step S203, the keyword search part 121 determines whether there is a keyword on the basis of the keyword included in the keyword group 213 read in the process of step S202. For example, when the keyword group 213 includes the keyword of "daughter" (when the keyword of "daughter" is set to the image data), the keyword search part 121 determines that there is a keyword. When the keyword group 213 includes no keyword (when a search result of "no keyword" is obtained), the keyword search part 121 determines that there is no keyword.

When the keyword search part 121 determines in step S203 that there is no keyword, the process proceeds to step S204, where the keyword search part 121 increases the frequency of "no keyword" in the keyword table by one.

Incidentally, the keyword table may be recorded in advance in the RAM 52 or on the recording medium 19, for example. Alternatively, the keyword search part 121 may generate the keyword table before performing the process of histogram display of frequencies of keywords.

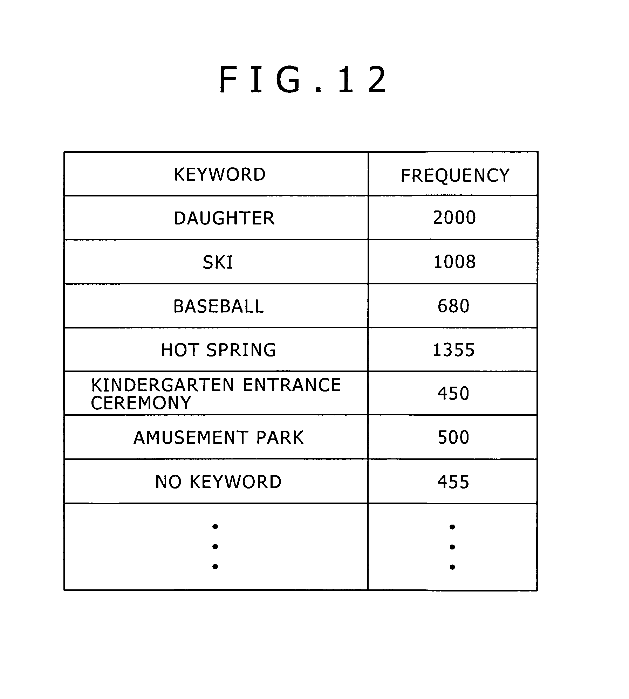

FIG. 12 is a diagram showing an example of the keyword table.

In the example of the keyword table shown in FIG. 12, a first row shows items, and a second row and subsequent rows show the frequencies of respective keywords. A first column on a left side shows "keywords" and a second column on a right side shows "frequencies". That is, the keyword table stores keywords and frequencies as values indicating the number of occurrences of the respective keywords which frequencies are associated with the keywords.

For example, in the example of the keyword table shown in FIG. 12, a frequency of "2000" is recorded in correspondence with the keyword of "daughter". A frequency of "1008" is recorded in correspondence with the keyword of "ski". A frequency of "680" is recorded in correspondence with the keyword of "baseball". A frequency of "1355" is recorded in correspondence with the keyword of "hot spring". A frequency of "450" is recorded in correspondence with the keyword of "kindergarten entrance ceremony". A frequency of "500" is recorded in correspondence with the keyword of "amusement park". A frequency of "455" is recorded in correspondence with the keyword of "no keyword". Incidentally, the frequency corresponding to "no keyword" represents the number of pieces of image data to which no keyword is set.

For example, when the keyword search part 121 determines in step S203 that there is no keyword, the keyword search part 121 for example increases the frequency corresponding to "no keyword" in the keyword table of FIG. 12 from "455" to "456".

Returning to FIG. 11, when the keyword search part 121 determines in step S203 that there is a keyword, on the other hand, the process proceeds to step S205, where the keyword search part 121 determines whether the keyword included in the keyword group 213 is included among keywords stored in the keyword table.

For example, in step S205, the keyword search part 121 determines whether the keyword included in the keyword group 213 is included in the keyword table of FIG. 12. More specifically, for example, when the keyword of "daughter" is included in the keyword group 213, the keyword of "daughter" is stored in the keyword table of FIG. 12, and therefore the keyword search part 121 determines that the keyword of interest (the keyword of "daughter") is stored in the keyword table. On the other hand, for example, when a keyword of "son" is included in the keyword group 213, the keyword of "son" is not stored in the keyword table of FIG. 12, and therefore the keyword search part 121 determines that the keyword of interest (the keyword of "son") is not stored in the keyword table.

When the keyword search part 121 determines in step S205 that the keyword included in the keyword group 213 is not included in the keyword table, the process proceeds to step S206, where the keyword search part 121 adds the corresponding keyword as a new keyword to the keyword table, and adds a frequency of "1" to the newly added keyword.

For example, when the keyword in the keyword group 213 is "son", the keyword of "son" is not present as a keyword stored in the keyword table of FIG. 12, and therefore the keyword search part 121 records the keyword of "son" and a frequency of "1" in correspondence with the keyword of "son" in the keyword table of FIG. 12. That is, the keyword of "son" is newly added to the keyword table of FIG. 12 (not shown).

On the other hand, when the keyword search part 121 determines in step S205 that the keyword included in the keyword group 213 is included in the keyword table, the process proceeds to step S207, where the keyword search part 121 increases the frequency of the corresponding keyword in the keyword table by one. For example, when the keyword in the keyword group 213 is "daughter", the keyword search part 121 increases the frequency corresponding to "daughter" in the keyword table of FIG. 12 from "2000" to "2001".

Incidentally, in a case of image data to which a plurality of keywords are set, the keyword search part 121 repeats the process of steps S205 to S207 a number of times which number is equal to the number of the keywords. For example, when the keyword of "daughter" and the keyword of "ski" are included in the keyword group 213, the keyword search part 121 increases the frequency corresponding to "daughter" in the keyword table of FIG. 12 from "2000" to "2001", and further increases the frequency corresponding to "ski" from "1008" to "1009".

In step S208, the keyword search part 121 determines whether the image data whose keyword group 213 is searched in the process of step S201 is last image data.

When the keyword search part 121 determines in step S208 that the image data whose keyword group 213 is searched in the process of step S201 is not the last image data, there is still remaining image data (there are keywords yet to be searched). Therefore the process returns to step S201 to repeat the above-described process.

On the other hand, when the keyword search part 121 determines in step S208 that the image data whose keyword group 213 is searched in the process of step S201 is the last image data, all the keywords have been searched. Therefore the process proceeds to step S209, where the keyword search part 121 sorts the keywords in the keyword table in order of decreasing frequency (descending order). The keyword search part 121 supplies the sorted data of the keyword table to the histogram display data generating section 117.

For example, the keyword search part 121 sorts the keywords of "daughter", "ski", "baseball", "hot spring", "kindergarten entrance ceremony", "amusement park", and "no keyword" in the keyword table of FIG. 12 into descending order of "daughter", "hot spring", "ski", and "baseball". Further, the keyword search part 121 arranges "others", which are keywords other than "daughter", "hot spring", "ski", and "baseball" and "no keyword" indicating image data to which no keyword is set in this order. The keyword search part 121 supplies the sorted data of the keyword table to the histogram display data generating section 117.

In step S210, the histogram display data generating section 117 generates histogram display data, which is data for displaying the keywords in the histogram format on the screen of the LCD 17, on the basis of the data of the keyword table supplied from the keyword search part 121. The histogram display data generating section 117 supplies the generated histogram display data to the display controlling section 118.

For example, the histogram display data generating section 117 generates histogram display data on the basis of the data of the keyword table of FIG. 12 which data is supplied from the keyword search part 121, and then supplies the generated histogram display data to the display controlling section 118.

In step S211, the display controlling section 118 displays the keywords in the histogram format on the screen of the LCD 17 on the basis of the histogram display data supplied from the histogram display data generating section 117, whereby the process is ended.

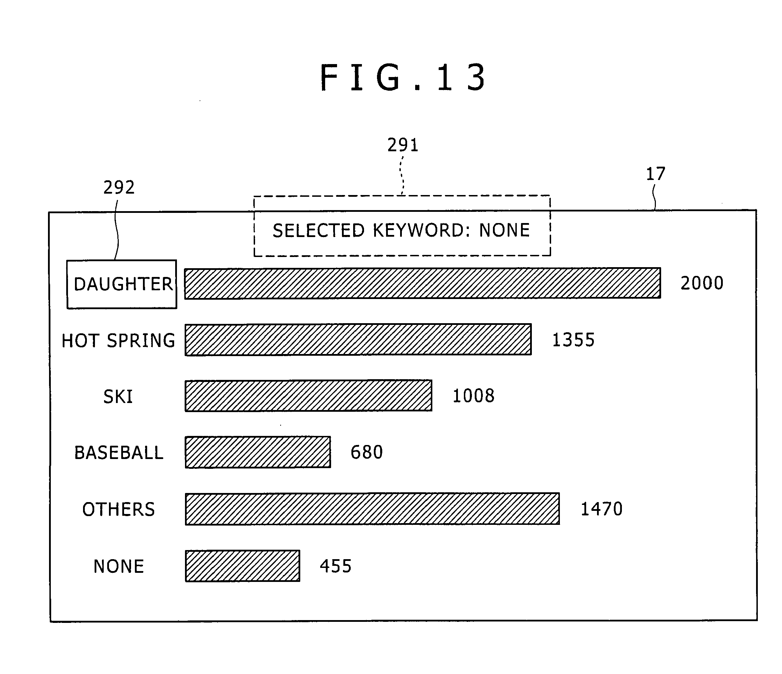

FIG. 13 is a diagram showing an example of the screen of the LCD 17 displaying the keywords in the histogram format on the basis of the keyword table of FIG. 12 as a result of the process of histogram display of the frequencies of the keywords.

In correspondence with the keywords on a left side of the figure, rectangles (columns) having lengths corresponding to the frequencies of the keywords are displayed, and the frequencies are displayed as numbers on the right side of the rectangles. In addition, a keyword as a narrowing-down condition (an already selected keyword) is displayed on the basis of a specification by the user in a selected keyword display area 291 (in the example shown in FIG. 13, narrowing down by keyword has not been performed yet [no keyword has been selected yet], and therefore "selected keyword: none" is displayed).

A cursor 292 is a cursor for selecting a keyword. For example, when the user moves the cursor 292 and presses a switch in a state of a desired keyword being selected by the cursor 292, images are further narrowed down from the keywords displayed in the histogram format on the screen of the LCD 17 by the keyword selected by the operation by the user.

For example, in the example of the screen of the LCD 17 displaying the keywords shown in FIG. 12 in the histogram format, a rectangle having a length corresponding to the frequency of "2000" is displayed in correspondence with the keyword of "daughter" on the screen of the LCD 17. A rectangle having a length corresponding to the frequency of "1355" is displayed in correspondence with the keyword of "hot spring" on the screen of the LCD 17. A rectangle having a length corresponding to the frequency of "1008" is displayed in correspondence with the keyword of "ski" on the screen of the LCD 17. A rectangle having a length corresponding to the frequency of "680" is displayed in correspondence with the keyword of "baseball" on the screen of the LCD 17. A rectangle having a length corresponding to the frequency of "1470" is displayed in correspondence with the keyword of "others" on the screen of the LCD 17. A rectangle having a length corresponding to the frequency of "455" is displayed in correspondence with the keyword of "none" on the screen of the LCD 17.

That is, keywords and frequencies are set in the keyword table by the process of steps S201 to S208, the keywords are sorted in descending order on the basis of the set keyword table in the process of step S209, and a histogram is displayed on the basis of the keyword table in which the keywords are sorted in the process of step S210 and step S211.

Thus, since a result of an image search by keyword is displayed in the histogram format on the screen of the LCD 17, the user can intuitively grasp the number of keywords, that is, the number of images to which keywords are set.

Description will next be made of a case where after the keywords are displayed in the histogram format on the screen of the LCD 17 as described with reference to FIG. 13, a desired keyword (keyword of "daughter") is selected from among the keywords displayed in the histogram format by a specification by the user.

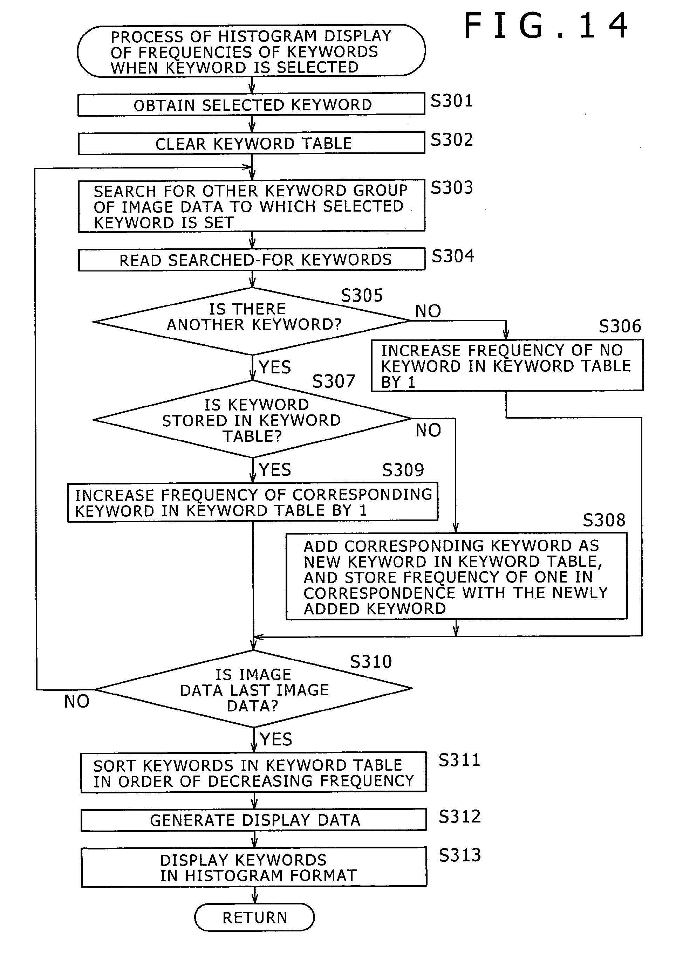

FIG. 14 is a flowchart of assistance in explaining details of the process of histogram display of frequencies of keywords when a keyword is selected, which process corresponds to the process of step S102 in FIG. 9.

In step S301, the keyword search part 121 obtains a desired keyword selected by a specification by the user. For example, in the example shown in FIG. 13, when the user selects the keyword of "daughter" by the cursor 292, and presses the switch, the keyword search part 121 obtains the keyword of "daughter".

In step S302, the keyword search part 121 clears the keyword table in order to display keywords in the histogram format again. For example, the keyword search part 121 clears the keyword table of FIG. 12 that served as a basis for displaying the keywords in the histogram format in FIG. 13.

In step S303, on the basis of the obtained keyword, the keyword search part 121 searches an other keyword group 213 set to image data to which the obtained keyword is set from the recording medium 19. For example, when the keyword of "daughter" is obtained, the keyword search part 121 searches "hot spring", "kindergarten entrance ceremony", "baseball", "ski", "amusement park", "tennis", or the like of image data to which the keyword of "daughter" is set, as another keyword than the keyword of "daughter" set to the image data, from the image data recorded on the recording medium 19.

For image data to which no keyword is set except the keyword of "daughter", that is, image data to which only the keyword of "daughter" is set, "no keyword" is obtained as a result of the search.

In step S304, the keyword searching part 121 reads the keyword group 213 searched by the process of step S303 from the recording medium 19. For example, the keyword searching part 121 reads the keyword group 213 including "hot spring", "kindergarten entrance ceremony", "baseball", "ski", "amusement park", "tennis", or the like other than the keyword of "daughter" of the image data to which the keyword of "daughter" is set from the recording medium 19. The keyword group 213 is searched by the process of step S303 and recorded on the recording medium 19.

In step S305, the keyword searching part 121 determines whether there is another keyword than the selected keyword on the basis of the keywords included in the keyword group 213 read by the process of step S304. For example, when the keyword of "daughter" is selected, and the keyword of "baseball" and the keyword of "daughter" are included in the keyword group 213 (the keyword of "baseball" and the keyword of "daughter" are set to the image data), the keyword searching part 121 determines that the other keyword of "baseball" than the keyword of "daughter" is present. When only the keyword of "baseball" is included in the keyword group 213 (that is, a search result of "no keyword" is obtained), the keyword searching part 121 determines that there is no other keyword than the keyword of "daughter".

When the keyword searching part 121 determines in step S305 that there is no other keyword, the process proceeds to step S306, where the keyword searching part 121 increases the frequency of "no keyword" in the keyword table by one. The process proceeds to step S310.

When the keyword searching part 121 determines in step S305 that there is another keyword, the process proceeds to step S307, where the keyword searching part 121 determines whether the keyword included in the keyword group 213 read by the process of step S304 is stored in the keyword table.

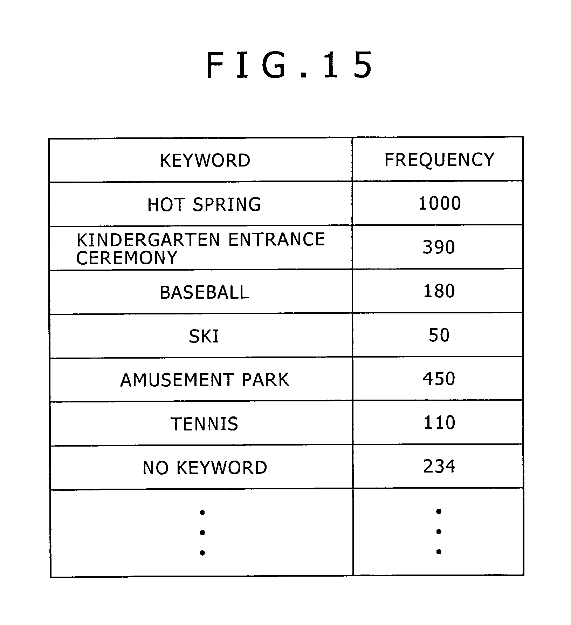

FIG. 15 is a diagram showing an example of the keyword table when the keyword of "daughter" is selected.

In the example of the keyword table shown in FIG. 15, a first row shows items, and a second row and subsequent rows show the frequencies of respective keywords. A first column on a left side shows "keywords" and a second column on a right side shows "frequencies". That is, the keyword table stores keywords and frequencies as values indicating the number of occurrences of the respective keywords which frequencies are associated with the keywords.

The frequencies in the example of the keyword table shown in FIG. 15 represent the numbers of other keywords (keywords different from "daughter") set to the image data to which the keyword of "daughter" is set.

For example, in the example of the keyword table shown in FIG. 15, a frequency of "1000" is recorded in correspondence with the keyword of "hot spring". A frequency of "390" is recorded in correspondence with the keyword of "kindergarten entrance ceremony". A frequency of "180" is recorded in correspondence with the keyword of "baseball". A frequency of "50" is recorded in correspondence with the keyword of "ski". A frequency of "450" is recorded in correspondence with the keyword of "amusement park". A frequency of "110" is recorded in correspondence with the keyword of "tennis". A frequency of "234" is recorded in correspondence with the keyword of "no keyword".

For example, in step S307, the keyword searching part 121 determines whether the keyword included in the keyword group 213 is stored in the keyword table of FIG. 15. More specifically, for example, when the keyword in the keyword group 213 is "hot spring", the keyword of "hot spring" is stored in the keyword table of FIG. 15, and therefore the keyword searching part 121 determines that the keyword of interest (the keyword of "hot spring") is stored in the keyword table. On the other hand, for example, when the keyword in the keyword group 213 is "sea bathing", the keyword of "sea bathing" is not stored in the keyword table of FIG. 15, and therefore the keyword searching part 121 determines that the keyword of interest (the keyword of "sea bathing") is not stored in the keyword table.

Returning to FIG. 14, when the keyword searching part 121 determines in step S307 that the keyword included in the keyword group 213 is not included in the keyword table, the process proceeds to step S308, where the keyword searching part 121 adds the corresponding keyword as a new keyword to the keyword table, and adds a frequency of "1" to the newly added keyword.

For example, when the keyword in the keyword group 213 is "sea bathing", the keyword of "sea bathing" is not present in the keyword table of FIG. 15, and therefore the keyword searching part 121 records the frequency of "1" in correspondence with the keyword of "sea bathing" in the keyword table of FIG. 15. That is, the keyword of "sea bathing" is newly added to the keyword table of FIG. 15 (not shown).

On the other hand, when the keyword searching part 121 determines in step S307 that the keyword included in the keyword group 213 is included in the keyword table, the process proceeds to step S309, where the keyword searching part 121 increases the frequency of the corresponding keyword in the keyword table by one. For example, when the keyword in the keyword group 213 is "hot spring", the keyword searching part 121 increases the frequency of the keyword of "hot spring" in the keyword table of FIG. 15 from "1000" to "1001".

Incidentally, when a plurality of keywords different from the selected keyword are set to the image data, the keyword searching part 121 repeats the process of steps S307 to S309 a number of times which number is equal to the number of the keywords different from the selected keyword. For example, in a case of image data to which the keywords of "daughter", "hot spring", and "ski" are set, the keyword searching part 121 increases the frequency corresponding to "hot spring" in the keyword table of FIG. 15 from "1000" to "1001", and further increases the frequency corresponding to "ski" from "50" to "51".

In step S310, the keyword searching part 121 determines whether the image data whose keyword group 213 is searched in the process of step S303 is last image data.

When the keyword searching part 121 determines in step S310 that the image data whose keyword group 213 is searched in the process of step S303 is not the last image data, there is still remaining image data (there is a possibility of there being still remaining keywords yet to be searched which keywords are different from the selected keyword). Therefore the process returns to step S303 to repeat the above-described process.

On the other hand, when the keyword searching part 121 determines in step S310 that the image data whose keyword group 213 is searched in the process of step S303 is the last image data, the process proceeds to step S311, where the keyword searching part 121 sorts keywords in the keyword table in order of decreasing frequency (descending order). The keyword searching part 121 supplies the sorted data of the keyword table to the histogram display data generating section 117.

For example, the keyword searching part 121 sorts the keywords of "hot spring", "kindergarten entrance ceremony", "baseball", "ski", "amusement park", "tennis", and "no keyword" in the keyword table of FIG. 15 into descending order of "hot spring", "amusement park", "kindergarten entrance ceremony", and "baseball". Further, the keyword searching part 121 arranges "others", which are keywords other than "hot spring", "amusement park", "kindergarten entrance ceremony", and "baseball", and "no keyword" indicating image data to which no keyword is set in this order. The keyword searching part 121 supplies the sorted data of the keyword table to the histogram display data generating section 117.

In step S312, the histogram display data generating section 117 generates histogram display data on the basis of the data of the keyword table supplied from the keyword searching part 121. The histogram display data generating section 117 supplies the generated histogram display data to the display controlling section 118.

For example, the histogram display data generating section 117 generates histogram display data on the basis of the data of the keyword table of FIG. 15 which data is supplied from the keyword searching part 121, and then supplies the generated histogram display data to the display controlling section 118.

In step S313, the display controlling section 118 displays the keywords in the histogram format on the screen of the LCD 17 on the basis of the histogram display data supplied from the histogram display data generating section 117, whereby the process is ended.

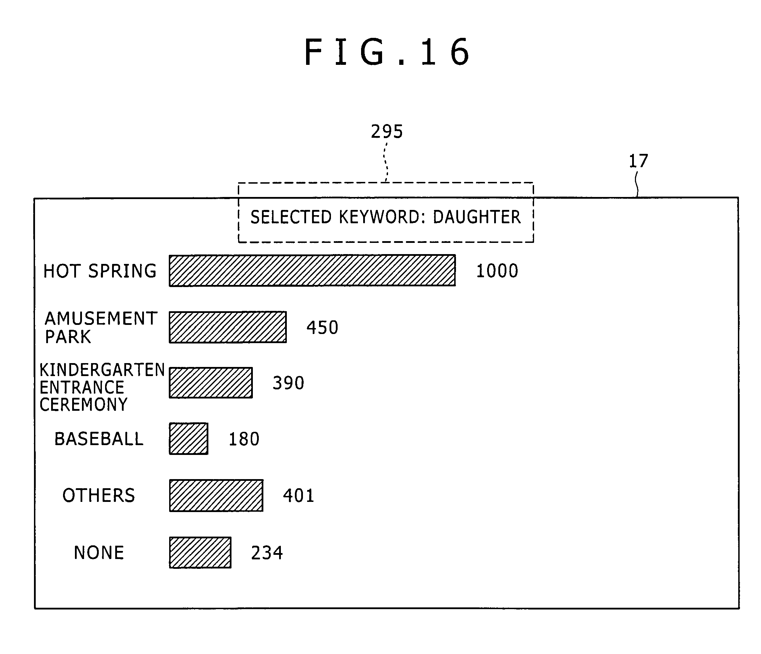

FIG. 16 is a diagram showing an example of the screen of the LCD 17 displaying the keywords in the histogram format on the basis of the keyword table of FIG. 15 as a result of the process of histogram display of the frequencies of the keywords when a keyword is selected.

In correspondence with the keywords on a left side of the figure, rectangles (columns) having lengths corresponding to the numbers of the keywords are displayed, and the frequencies in the histogram are displayed as numbers on the right side of the rectangles. In addition, a selected keyword as a narrowing-down condition is displayed on the basis of a specification by the user in a selected keyword display area 295. In the example shown in FIG. 16, the keyword of "daughter" is selected and then image data is narrowed down, so that "selected keyword: daughter" is displayed in the selected keyword display area 295.

For example, in the example of the screen of the LCD 17 displaying the keywords shown in FIG. 16 in the histogram format, a rectangle having a length corresponding to the frequency of "1000" is displayed in correspondence with the keyword of "hot spring" on the screen of the LCD 17. A rectangle having a length corresponding to the frequency of "450" is displayed in correspondence with the keyword of "amusement park" on the screen of the LCD 17. A rectangle having a length corresponding to the frequency of "390" is displayed in correspondence with the keyword of "kindergarten entrance ceremony" on the screen of the LCD 17. A rectangle having a length corresponding to the frequency of "180" is displayed in correspondence with the keyword of "baseball" on the screen of the LCD 17. A rectangle having a length corresponding to the frequency of "401" is displayed in correspondence with the keyword of "others" on the screen of the LCD 17. A rectangle having a length corresponding to the frequency of "234" is displayed in correspondence with "none" on the screen of the LCD 17.

That is, a result of counting keywords other than "daughter" of the image data to which the keyword of "daughter" is set is displayed by keyword. In FIG. 16, "none" indicates that only the keyword of "daughter" is set, and the frequency of "none" represents the number of pieces of image data to which only the keyword of "daughter" is set.

More specifically, for other keywords of images to which a selected keyword is set, the keywords or frequencies are set in the keyword table by the process of steps S301 to S310, the keywords are sorted in order of decreasing frequency on the basis of the keyword table in which the keywords or the frequencies are set in the process of step S311, and a histogram is displayed on the basis of the keyword table in which the keywords are sorted in the process of step S312 and step S313.

Thus, for example, a result of counting the numbers of keywords other than "daughter" of images to which the selected keyword of "daughter" is set is displayed by keyword. Therefore the user can intuitively grasp the keywords set to images of the daughter. In addition, since the keyword of "none" is provided, the user can intuitively grasp the number of images to which keywords other than "daughter" are not set (images to which only the keyword of "daughter" is set).

Incidentally, when the user selects the keyword of "baseball" from among keywords displayed in the histogram format after the keywords are displayed in the histogram format on the screen of the LCD 17 as described with reference to FIG. 16, image data to which the keywords of "daughter" and "baseball" are set is further searched, and keywords of the searched image data can be displayed in the histogram format on the screen of the LCD 17.

Thus, by sequentially selecting keywords displayed in the histogram format, it is possible to sequentially add the selected keywords to a search condition and narrow down image data. Therefore desired images can be searched more surely.

Description will next be made of a case where after the keywords are displayed in the histogram format on the screen of the LCD 17 as described with reference to the flowchart of FIG. 14, image data is further narrowed down by imaging information.

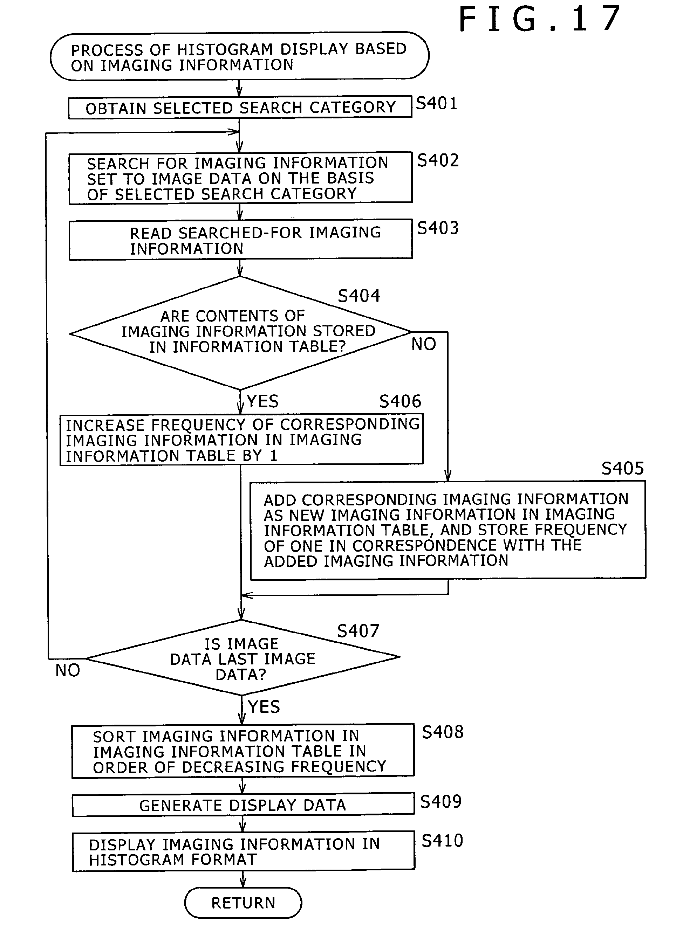

FIG. 17 is a flowchart of assistance in explaining the process of histogram display on the basis of imaging information, which process corresponds to the process of step S103 in FIG. 9.

In step S401, the imaging information searching part 122 obtains a search category (of imaging information) on the basis of a specification by the user. For example, the imaging information searching part 122 obtains a search category of "image pickup date" on the basis of a specification by the user.

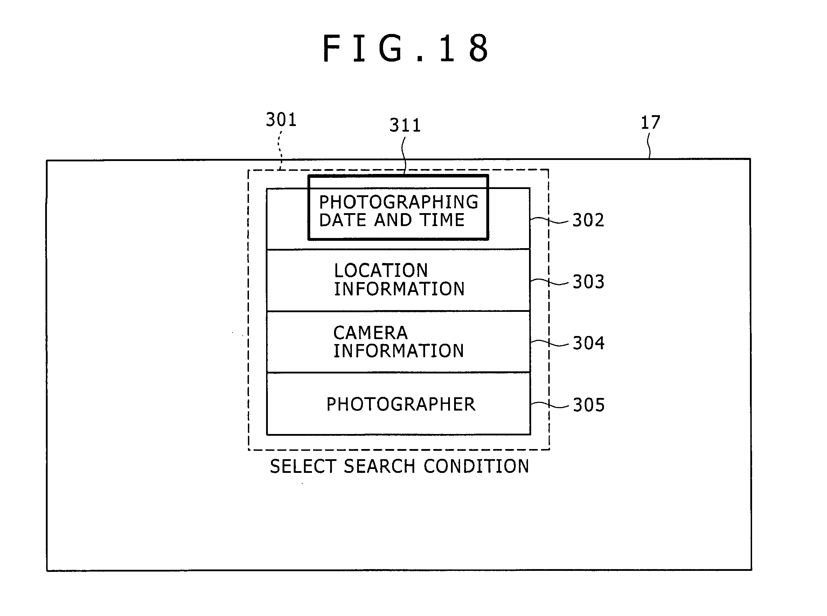

FIG. 18 is a diagram showing an example of the screen of the LCD 17 displaying a menu 301 of search categories by imaging information (hereinafter referred to simply as an imaging information menu).

The imaging information menu 301 shows for example image pickup date 302, location information 303, camera information 304, and photographer 305 as search categories. Incidentally, imaging information as search categories is not limited to the above examples, and may be any information as long as the information can be added to an image at a time of image pickup.

In addition, related information or URL information can be provided as a search category. For example, when related information is provided as a search category, the user can search image data on the basis of related information set to image data. When URL information is provided as a search category, the user can search image data on the basis of URL information set to image data.

A cursor 311 selects one of the image pickup date 302, the location information 303, the camera information 304, and the photographer 305 on the imaging information menu 301 including the image pickup date 302, the location information 303, the camera information 304, and the photographer 305, for example, on the basis of a specification by the user.

For example, when the user presses a switch, the imaging information searching part 122 obtains, as a search category, one category of the image pickup date 302, the location information 303, the camera information 304, and the photographer 305 which category is selected by the cursor 311. For example, when the image pickup date 302 is selected by the cursor 311 on the basis of a specification by the user, the imaging information searching part 122 obtains the "image pickup date" as a search category.

Returning to FIG. 17, in step S402, the imaging information searching part 122 searches imaging information in the obtained search category from imaging information attached to image data on the basis of the obtained search category. When a predetermined keyword is selected, in step S402, the imaging information searching part 122 searches imaging information in the obtained search category from imaging information attached to image data to which the selected keyword is set on the basis of the obtained search category. For example, when a keyword of "daughter" is selected, the imaging information searching part 122 searches imaging information of "image pickup dates" from imaging information attached to image data to which the keyword of "daughter" is set on the basis of the obtained search category of the "image pickup date".

In step S403, the imaging information searching part 122 reads the imaging information searched by the process of step S403 from the recording medium 19. For example, the imaging information searching part 122 reads the imaging information of "image pickup dates" of the image data to which the keyword of "daughter" is set from the recording medium 19. The imaging information is searched by the process of step S403.

In step S404, the imaging information searching part 122 determines whether contents of the imaging information read in the process of step S404 are stored in the imaging information table (not shown).

Incidentally, in this case, the above-described keyword table may be used in place of the imaging information table. That is, the keyword table can be used again by clearing the keyword table before the process of step S402. For example, the imaging information searching part 122 clears the keyword table of FIG. 15, which served as a basis for displaying keywords in the histogram format in FIG. 16, whereby the keyword table can be used again as an imaging information table.

When the imaging information searching part 122 determines in step S404 that the contents of the imaging information (a specific value of the imaging information) are not stored in the imaging information table, the process proceeds to step S405, where the imaging information searching part 122 adds the corresponding contents of the imaging information as new contents to the imaging information table, and stores a frequency of "1" in correspondence with the added imaging information.

For example, when the contents of the imaging information are "2004.05.05", and though not shown, "2004.05.05" is not present in the imaging information table, the contents of the imaging information of "2004.05.05" are not present in the imaging information table, and therefore the imaging information searching part 122 records the contents of the imaging information of "2004.05.05" and a frequency of "1" corresponding to the contents of the imaging information of "2004.05.05" in the imaging information table. That is, the contents of the imaging information of "2004.05.05" (the specific value of the imaging information) are newly added to the imaging information table.

On the other hand, when the imaging information searching part 122 determines in step S404 that the contents of the imaging information are included in the imaging information table, the process proceeds to step S406, where the imaging information searching part 122 increases the frequency of the corresponding contents of the imaging information in the imaging information table by one. For example, when the contents of the imaging information are "2003.10.12", and though not shown, "200" is stored as the frequency of the contents of the imaging information of "2003.10.12" in the imaging information table, the imaging information searching part 122 increases the frequency of the contents of the imaging information of "2003.10.12" in the imaging information table from "200" to "201".

In step S407, the imaging information searching part 122 determines whether the image data whose imaging information is searched in the process of step S402 is last image data.

When the imaging information searching part 122 determines in step S407 that the image data whose imaging information is searched in the process of step S402 is not the last image data, image data still remains. Therefore the process returns to step S402 to repeat the above-described process.

On the other hand, when the imaging information searching part 122 determines in step S407 that the image data whose imaging information is searched in the process of step S402 is the last image data, the process proceeds to step S408, where the imaging information searching part 122 sorts the imaging information in the imaging information table in order of decreasing frequency (descending order). The imaging information searching part 122 supplies the sorted data of the imaging information table to the histogram display data generating section 117.

For example, the imaging information searching part 122 sorts the imaging information of "2003.10.12" (for example a frequency of "200"), "2003.04.01" (for example a frequency of "60"), "2004.04.01" (for example a frequency of "25"), and "2003.09.15" (for example a frequency of "90") in the imaging information table (not shown) into descending order of "2003.10.12", "2003.09.15", "2003.04.01", and "2004.04.01". Further, the imaging information searching part 122 arranges "others" as imaging information other than "2003.10.12", "2003.09.15", "2003.04.01", and "2004.04.01" in this order. The imaging information searching part 122 supplies the sorted data of the imaging information table to the histogram display data generating section 117.

In step S409, the histogram display data generating section 117 generates histogram display data on the basis of the data of the imaging information table supplied from the imaging information searching part 122. The histogram display data generating section 117 supplies the generated histogram display data to the display controlling section 118.

In step S410, the display controlling section 118 displays the imaging information in the histogram format on the screen of the LCD 17 on the basis of the histogram display data supplied from the histogram display data generating section 117, whereby the process is ended.

It is to be noted that the process of searching imaging information set to image data is not limited to the example of searching imaging information set to image data on the basis of the above-described imaging information table (or the keyword table). For example, the imaging information searching part 122 (or the keyword searching part 121) may store a search condition in the RAM 52 as necessary, and when searching imaging information set to image data, the imaging information searching part 122 (or the keyword searching part 121) may read the stored search condition and search the imaging information set to the image data.

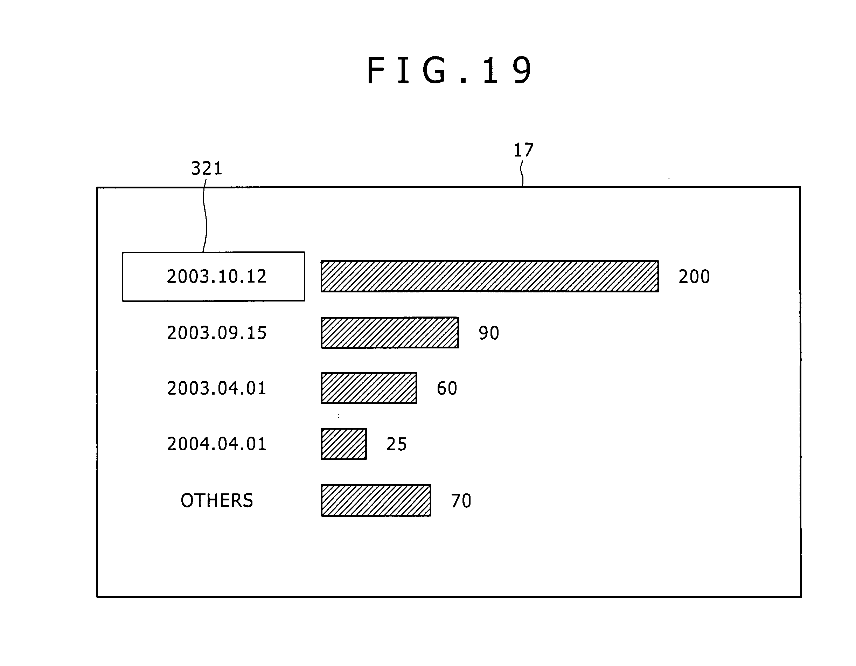

FIG. 19 is a diagram showing an example of the screen of the LCD 17 displaying photographing dates in the histogram format.

In correspondence with the image pickup dates on a left side of the figure, a histogram by photographing date is displayed, and frequencies in the histogram are displayed on the right side of the histogram. A cursor 321 can select for example an image pickup date of "2003.10.12" on the basis of a specification by the user.

For example, in the example shown in FIG. 19, a rectangle (column) having a length corresponding to the frequency of "200" is displayed in correspondence with the image pickup date of "2003.10.12" on the screen of the LCD 17. A rectangle (column) having a length corresponding to the frequency of "90" is displayed in correspondence with the image pickup date of "2003.09.15" on the screen of the LCD 17. A rectangle (column) having a length corresponding to the frequency of "60" is displayed in correspondence with the image pickup date of "2003.04.01" on the screen of the LCD 17. A rectangle (column) having a length corresponding to the frequency of "25" is displayed in correspondence with the image pickup date of "2004.04.01" on the screen of the LCD 17. A rectangle (column) having a length corresponding to the frequency of "70" is displayed in correspondence with the image pickup dates of "others" on the screen of the LCD 17.

Thus, since a result of an image search by imaging information is displayed in the histogram format on the screen of the LCD 17, the user can intuitively grasp the number of images to which each piece of imaging information is set.

While imaging information is searched on the basis of the imaging information of "image pickup date" in the above-described example, image data can be further narrowed down by imaging information other than the imaging information of "image pickup date".

Description will be made below of a case where the user selects the image pickup date of "2003.10.12" by the cursor 321 in the example shown in FIG. 19, and then presses a switch.

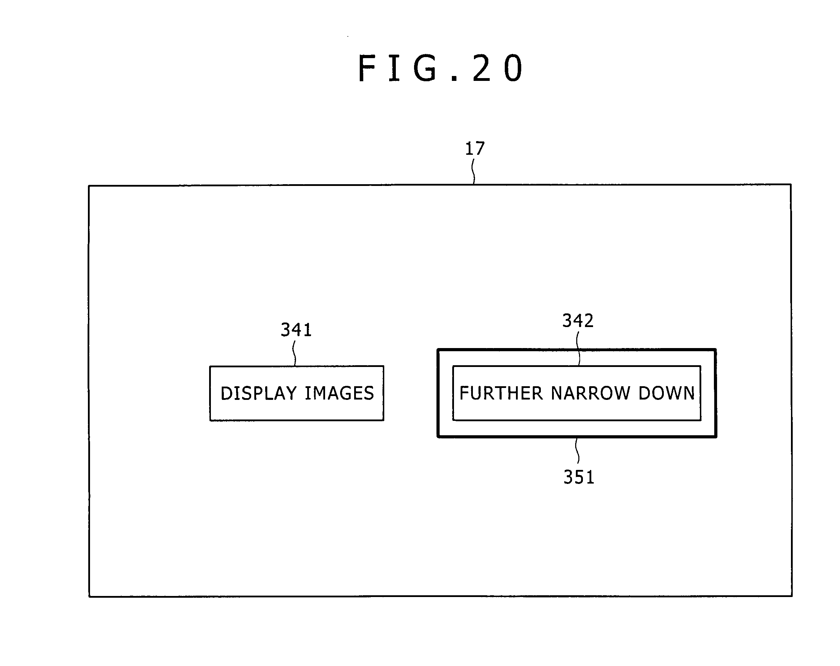

FIG. 20 is a diagram showing an example of the screen of the LCD 17 displaying a screen for specifying whether to display images or to perform a search on the basis of other imaging information.

For example, an image displaying button 341, a further-narrow-down button 342, and a cursor 351 are displayed on the screen of the LCD 17.

The image displaying button 341 is for example selected by the cursor 351 in response to an operation by the user. When the user presses the switch, a signal corresponding to the image displaying button 341 is supplied to the CPU 51. In this case, images searched by a present search condition are displayed in the thumbnail format on the screen of the LCD 17.

The further-narrow-down button 342 is for example selected by the cursor 351 in response to an operation by the user. When the user presses the switch, a signal corresponding to the further-narrow-down button 342 is supplied to the CPU 51. In this case, an imaging information menu is displayed on the screen of the LCD 17.

When a search is to be performed by other imaging information on the basis of a specification by the user (that is, when the user selects the further-narrow-down button 342), a screen for selection of a search category is displayed to further narrow down by the image information.

Description will be made below of a case where the user selects the further-narrow-down button 342 by the cursor 351 in the example shown in FIG. 20, and then presses the switch.

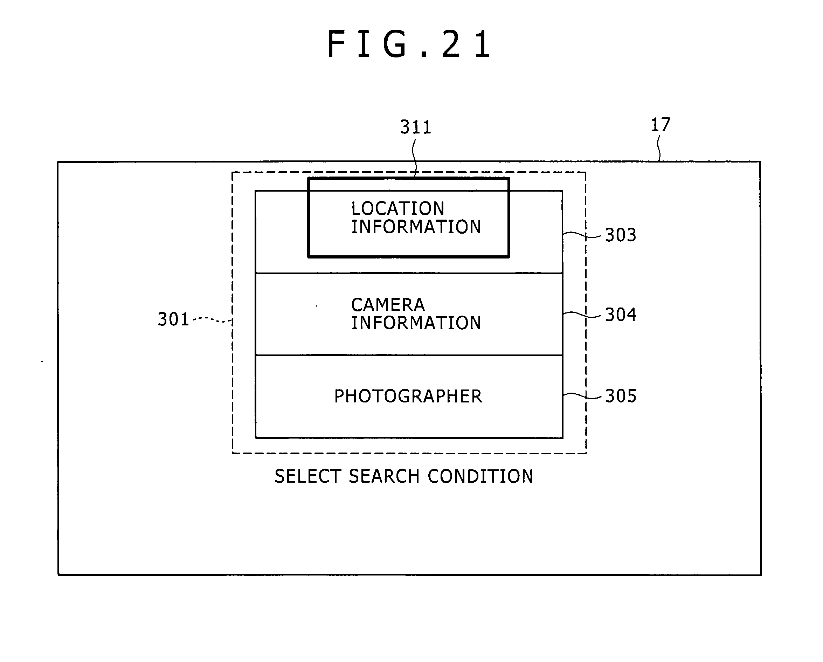

FIG. 21 is a diagram showing an example of the screen of the LCD 17 displaying an imaging information menu 301 in this case.

The imaging information menu 301 shows for example location information 303, camera information 304, and photographer 305 as items serving as a key for a search by imaging information. Incidentally, unlike the above-described imaging information menu 301 in FIG. 18, the imaging information menu 301 in FIG. 21 does not show the image pickup date 302. This is because the image pickup date 302 is already selected as a search condition in the process of step S401 in FIG. 17 and therefore it is not necessary to perform a search by image pickup date again. Thus, the image pickup date 302 is not displayed as the imaging information menu 301 on the screen of the LCD 17.

A cursor 311 selects the imaging information menu 301 of the location information 303, the camera information 304, or the photographer 305, for example, on the basis of a specification by the user.

For example, when the user presses the switch, the imaging information searching part 122 obtains the imaging information menu 301 selected by the cursor 311 as a search category, and then supplies the obtained search category to the imaging information searching part 122. More specifically, when the location information 303 is selected by the cursor 311 on the basis of a specification by the user, the imaging information searching part 122 obtains "location information" as a search category, and then supplies the search category of the obtained "location information" to the imaging information searching part 122.

Description will be made below of a case where the user selects the location information 303 by the cursor 311 in the example shown in FIG. 21, and then presses the switch.

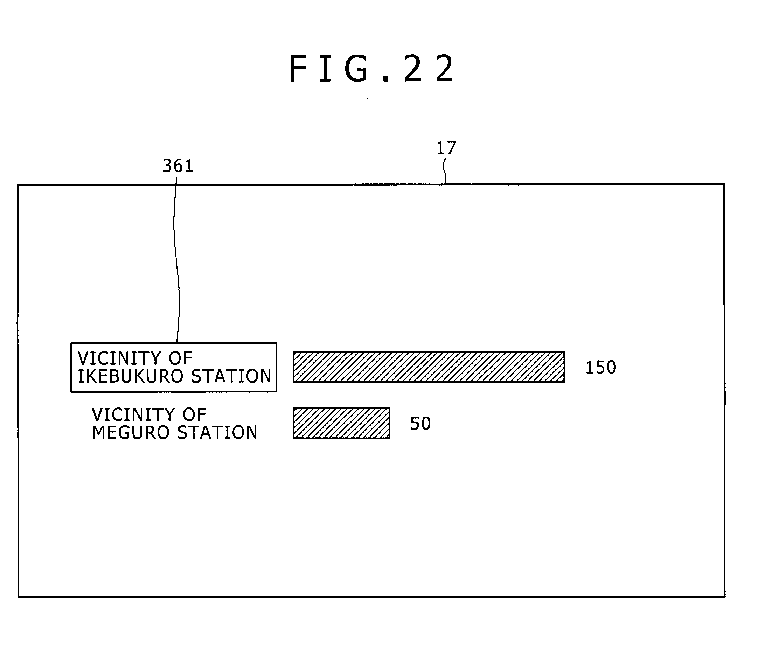

FIG. 22 is a diagram showing an example of the screen of the LCD 17 displaying a result of a search by location information in the histogram format.

In correspondence with location information on a left side of the figure, rectangles having lengths corresponding to frequencies by location name are displayed, and the frequencies are displayed as numbers on the right side of the rectangles. A cursor 361 can select for example location information of "vicinity of Ikebukuro Station" on the basis of a specification by the user. Hereinafter, the name of a specific location (for example the "vicinity of Ikebukuro Station") will be referred to as a location name, and information for identifying the location of the location name will be referred to as location coordinates (for example latitude and longitude).

For example, in the example shown in FIG. 22, on the basis of histogram display data supplied from the histogram display data generating section 117, the display controlling section 118 displays a rectangle having a length corresponding to a frequency of "150" in correspondence with the location name of the "vicinity of Ikebukuro Station" on the screen of the LCD 17. The display controlling section 118 displays a rectangle having a length corresponding to a frequency of "50" in correspondence with the location name of "vicinity of Meguro Station" on the screen of the LCD 17.

Location information will be described in more detail. For example, the digital still camera 1 is provided with a receiver device (not shown) for obtaining location coordinates, and thereby obtains location information from the GPS (Global Positioning System), the PHS (Personal Handyphone System), or the like. Location coordinates are for example composed of two-dimensional information indicating latitude and longitude (or three-dimensional information indicating latitude, longitude, and altitude). When the obtained location coordinates are included in an area predetermined by a specification by the user, the display controlling section 118 displays a location name corresponding to the predetermined area as location information on the screen of the LCD 17.

More specifically, in advance, the user sets an arbitrary area on a map and sets a location name corresponding to the set arbitrary area. For example, a landmark such as a station, a park, an amusement park, a zoo, a museum, or the like included in the set arbitrary area is set as the location name. By thus setting the location name corresponding to the location information in advance, the display controlling section 118 can for example display the location name on the screen of the LCD 17 on the basis of the location information.

Thus, a result of an image search by location information is displayed in the histogram format on the screen of the LCD 17, so that the user can intuitively grasp the number of images picked up at a predetermined location.

Incidentally, location names may be set on the basis of specification by the user as described above, or main areas may be set as landmarks in advance as so-called settings at a time of shipment from a factory.

Description will be made below of a case where the location name of the "vicinity of Ikebukuro Station" is selected by the cursor 361 in correspondence with an operation by the user in the example shown in FIG. 22, and then the user presses a switch.

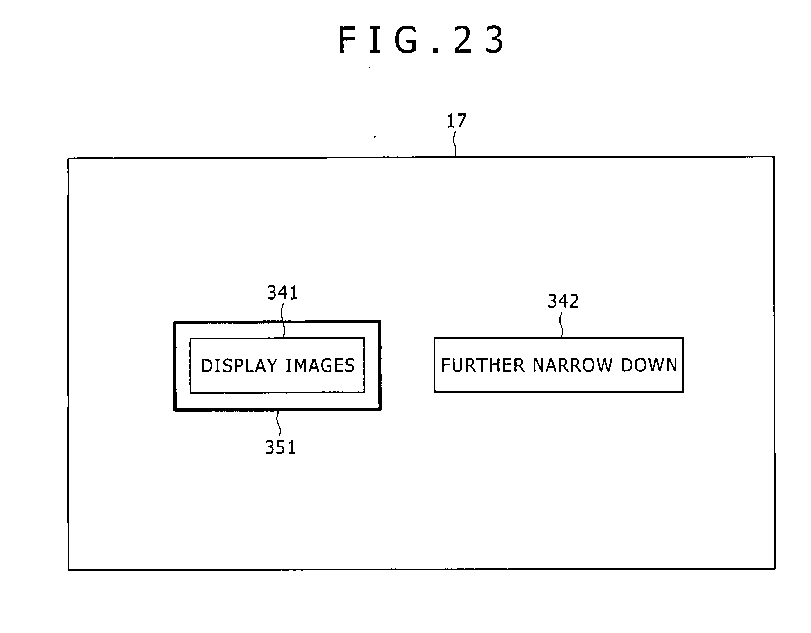

FIG. 23 is a diagram showing an example of the screen of the LCD 17 displaying a screen for specifying whether to display images or to perform a search by other imaging information. The same parts as in FIG. 20 are identified by the same reference numerals, and description thereof will be omitted.

For example, when an image displaying button 341 is selected by a cursor 351 in correspondence with an operation by the user, a search using imaging information as a search condition is not performed any further. The process of step S104 and step S105 in FIG. 9 is performed to search image data to which a keyword is set and display images on the basis of the searched image data. On the other hand, when a further-narrow-down button 342 is selected by the cursor 351 in correspondence with an operation by the user, imaging information attached to image data is searched with other imaging information added to search conditions in addition to the keyword of "daughter" and the imaging information of "2003.10.12" and "vicinity of Ikebukuro Station".

Description will be made below of a case where the user selects the image displaying button 341 by the cursor 351 in the example shown in FIG. 23, and then presses a switch.

FIG. 24 is a diagram showing an example of the screen of the LCD 17 displaying a list of images, which are displayed on the basis of image data searched with a keyword or imaging information as a search condition (for example displayed by the above-described process of step S104 in FIG. 9). In the example of the screen of the LCD 17 shown in FIG. 24, images of candidates of image data to which a keyword is set are displayed.

For example, the screen of the LCD 17 displays images 401-1 to 401-4, a scroll button 402, a scroll button 403, a keyword input button 411, a similar search button 412, a check button 413, and a cursor 421.

The images 401-1 to 401-4 are images of candidates of image data to which a keyword is set. The images 401-1 to 401-4 are displayed in the thumbnail format by the display controlling section 118. For example, the images 401-1 to 401-4 are thumbnail images corresponding to image data searched by the setting image searching section 113 with the keyword of "daughter" and "2003.10.12" and "vicinity of Ikebukuro Station" as a search condition. That is, the images 401-1 to 401-4 are thumbnail images corresponding to image data to which the keyword of "daughter" and the imaging information of "2003.10.12" and "vicinity of Ikebukuro Station" are set.

For example, when the user presses a switch corresponding to the scroll button 402, the screen of the LCD 17 is scrolled to the left, and four images displayed in the thumbnail format are displayed in order of the image 401-2, the image 401-3, the image 401-4, and an image 401-5 from the left. When the user further presses the switch corresponding to the scroll button 402, four images displayed in the thumbnail format are displayed on the screen of the LCD 17 in order of the image 401-3, the image 401-4, the image 401-5, and an image 401-6 from the left.

For example, when the user presses a switch corresponding to the scroll button 403, the screen of the LCD 17 is scrolled to the right. For example, when there are 150 pieces of image data matching search conditions of "daughter", "2003.10.12", and "vicinity of Ikebukuro Station", and when the user presses the switch corresponding to the scroll button 403, four images displayed in the thumbnail format are displayed on the screen of the LCD 17 in order of an image 401-150, the image 401-1, the image 401-2, and the image 401-3 from the left. When the user further presses the switch corresponding to the scroll button 403, four images displayed in the thumbnail format are displayed on the screen of the LCD 17 in order of an image 401-149, the image 401-150, the image 401-1, and the image 401-2 from the left.

When the keyword input button 411 is selected by the cursor 421, and the switch is pressed, a signal corresponding to the keyword input button 411 is supplied to the CPU 51. The display controlling section 118 displays a keyword input screen (for example the keyword input screen of FIG. 6).

When the similar image search button 412 is selected by the cursor 421, and the switch is pressed, a signal corresponding to the similar image search button 412 is supplied to the CPU 51. The similar information-set image searching section 114 searches similar image data. The similar image data refers to image data to which a selected keyword is set, to which selected imaging information is attached, and to which another keyword than the selected keyword is set. For example, when the keyword of "daughter" is selected, and when the imaging information of "2003.10.12" and "vicinity of Ikebukuro Station" is selected, the similar information-set image searching section 112 searches image data to which the keyword of "daughter" is set, to which the imaging information of "2003.10.12" and "vicinity of Ikebukuro Station" is attached, and to which another keyword than the keyword of "daughter" is set.

The check button 413 is a button for selecting image data to which a keyword is set among candidates of image data to which a keyword is set. One of the images 401-1 to 401-4 is selected, the check button 413 is selected by the cursor 421 by a user operation, for example, and then the switch is pressed by the user, whereby image data corresponding to the selected image 401-1 to 401-4 is selected as image data to which a keyword is set. The thus selected image data to which a keyword is set is designated by a flag, for example.

Thus, on the basis of the flag added to the image data, the keyword setting section 116 can set a keyword to the image data whose flag is set.

The process of narrowing down images to which a keyword is set in the process of step S11 is not limited to the above-described narrowing down by displaying keywords in the histogram format (for example the process, which has been described with reference to FIG. 11, of histogram display of frequencies of keywords); images may be narrowed down by other methods.

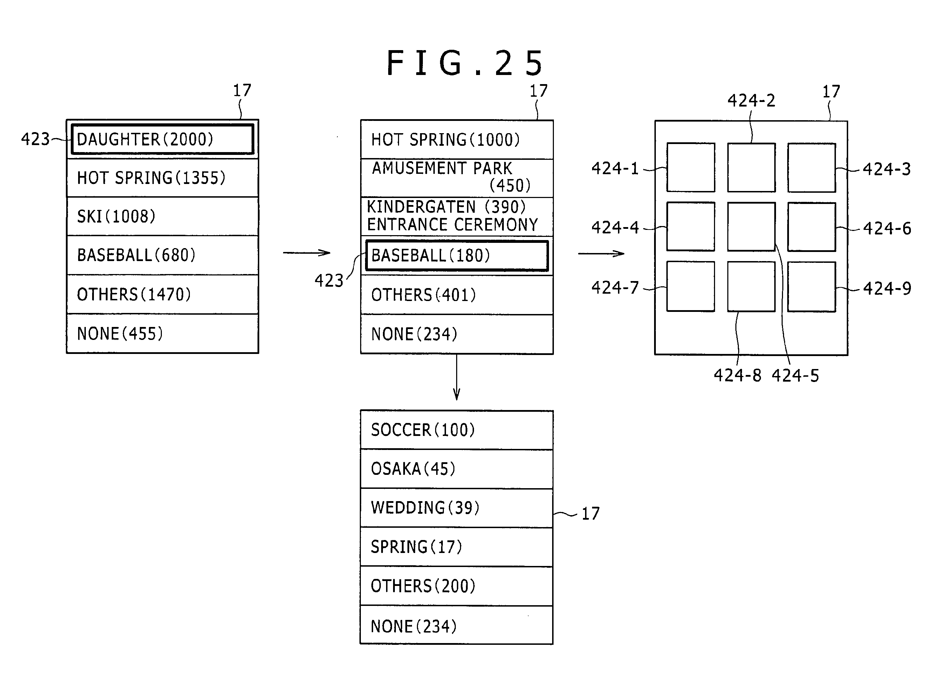

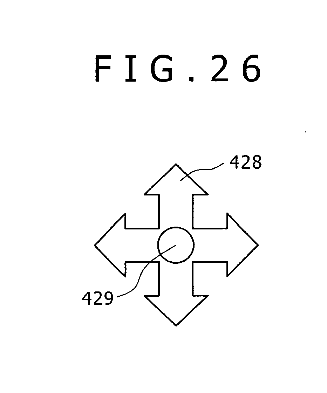

Referring to FIG. 25 and FIG. 26, description will be made below of a case where images to which a keyword is set are narrowed down by a cross button of the digital still camera 1.

FIG. 25 is a diagram of assistance in explaining an example of narrowing down images by the cross button provided to the operating unit 15 of the digital still camera 1.

The screen of the LCD 17 shown on a left side of FIG. 25 is a diagram showing an example of display of a list of searched keywords (hereinafter referred to as a keyword list) on the screen of the LCD 17. For example, the keyword list on the screen of the LCD 17 shown on the left side of FIG. 25 is displayed on the screen of the LCD 17 when the user selects the keyword search button 282 on the search category selecting screen of FIG. 10.

For the process of displaying the screen of the LCD 17 shown on the left side of FIG. 25, it suffices for example to similarly perform the processes of steps S201 to S209 in the process, which has been described with reference to FIG. 11, of histogram display of frequencies of keywords, and for the display controlling section 118 to display the keyword list on the screen of the LCD 17 shown on the left side of FIG. 25 on the basis of data of the keyword table, in place of the processes of step S210 and step S211.

That is, because the keyword list on the screen of the LCD 17 shown on the left side of FIG. 25 has not been narrowed down by a keyword (no keyword has been selected yet), keywords set to all image data are displayed.

In the example on the screen of the LCD 17 shown on the left side of FIG. 25, each row shows a keyword and the frequency (a number in parentheses on a right side of the keyword) of the keyword. Specifically, a frequency of "2000" is displayed in a first row on the screen of the LCD 17 in correspondence with a keyword of "daughter". A frequency of "1335" is displayed in a second row on the screen of the LCD 17 in correspondence with a keyword of "hot spring". A frequency of "1008" is displayed in a third row on the screen of the LCD 17 in correspondence with a keyword of "ski". A frequency of "680" is displayed in a fourth row on the screen of the LCD 17 in correspondence with a keyword of "baseball". A frequency of "1470" is displayed in a fifth row on the screen of the LCD 17 in correspondence with keywords of "others". A frequency of "455" is displayed in a sixth row on the screen of the LCD 17 in correspondence with "none".

Incidentally, a cursor 423 selects a keyword on the basis of an instruction by the user.

FIG. 26 is a diagram showing an example of a cross key 428 provided to the operating unit 15 of the digital still camera 1.

The cross key 428 and an enter button 429 to be pressed by the user are disposed on a top surface of the digital still camera 1 to give an instruction to move the cursor 423 or determine a command, for example, according to an operation by the user.

Incidentally, hereinafter, an operation of pressing an arrow on an upper side of the cross key 428 by the user will be referred to as an operation of pressing an upper cross key. An operation of pressing an arrow on a lower side of the cross key 428 by the user will be referred to as an operation of pressing a lower cross key. An operation of pressing an arrow on a right side of the cross key 428 by the user will be referred to as an operation of pressing a right cross key. An operation of pressing an arrow on a left side of the cross key 428 by the user will be referred to as an operation of pressing a left cross key.

When the upper cross key or the lower cross key is pressed, the cursor 423 is moved on the basis of a signal corresponding to an operation by the user from the operating unit 15, whereby a desired keyword is selected from the keyword list.

When the right cross key is pressed, images are narrowed down by a keyword selected by the cursor 423 on the basis of a signal corresponding to an operation by the user from the operating unit 15.

When the left cross key is pressed, images are narrowed down by keywords excluding a last selected keyword (hereinafter referred to as a last keyword) among keywords as search conditions (that is, the keywords as search conditions are reduced by one) on the basis of a signal corresponding to an operation by the user from the operating unit 15.

When the enter button 429 is pressed, images narrowed down so far are displayed in the thumbnail format on the screen of the LCD 17 on the basis of a signal corresponding to an operation by the user from the operating unit 15.

Returning to FIG. 25, when the user selects the keyword of "daughter" by the cursor 423 in the keyword list on the screen of the LCD 17 shown on the left side of FIG. 25, and then presses the right cross key, a keyword list on the screen of the LCD 17 shown on an upper side of a center of FIG. 25 is displayed on the screen of the LCD 17.

The keyword list on the screen of the LCD 17 shown on the upper side of the center of FIG. 25 is a list of keywords narrowed down with the keyword of "daughter" as a search condition in the keyword list on the screen of the LCD 17 shown on the left side of FIG. 25. That is, the keyword list on the screen of the LCD 17 shown on the upper side of the center of FIG. 25 shows other keywords of image data to which the keyword of "daughter" is set.

For the process of displaying the screen of the LCD 17 shown on the upper side of the center of FIG. 25, it suffices for example to similarly perform the processes of steps S301 to S311 in the above-described process of histogram display of frequencies of keywords when a keyword is selected in FIG. 14. The display controlling section 118 displays the keyword list on the screen of the LCD 17 shown on the upper side of the center of FIG. 25 on the basis of data of the keyword table, in place of the processes of step S312 and step S313.

In the example on the screen of the LCD 17 shown on the upper side of the center of FIG. 25, each row shows a keyword and the frequency (a number in parentheses on a right side of the keyword) of the keyword. Specifically, a frequency of "1000" is displayed in a first row on the screen of the LCD 17 in correspondence with a keyword of "hot spring". A frequency of "450" is displayed in a second row on the screen of the LCD 17 in correspondence with a keyword of "amusement park". A frequency of "390" is displayed in a third row on the screen of the LCD 17 in correspondence with a keyword of "kindergarten entrance ceremony". A frequency of "180" is displayed in a fourth row on the screen of the LCD 17 in correspondence with a keyword of "baseball". A frequency of "401" is displayed in a fifth row on the screen of the LCD 17 in correspondence with keywords of "others". A frequency of "234" is displayed in a sixth row on the screen of the LCD 17 in correspondence with "none".

That is, when the right cross key is pressed, images can be further narrowed down by a keyword selected by the cursor 423. For example, when the user selects the keyword of "hot spring" by the cursor 423 on the screen of the LCD 17 shown on the upper side of the center of FIG. 25, and then presses the right cross key, other keywords of image data to which the keyword of "daughter" and the keyword of "hot spring" are set are displayed on a keyword list (not shown).

When the left cross key is pressed on the keyword list on the screen of the LCD 17 shown on the upper side of the center of FIG. 25, the keyword searching part 121 performs a search with the last keyword excluded from search conditions, and the display controlling section 118 displays a keyword list of other keywords of image data set to a keyword. The other keywords are searched by the keyword searching part 121, on the screen of the LCD 17. More specifically, for example, when the left cross key is pressed on the above-described keyword list (not shown) which shows the other keywords of the image data to which the keyword of "daughter" and the keyword of "hot spring" are set, the keyword searching part 121 performs a search with a keyword (that is, only the keyword of "daughter") as a search condition. The keyword is obtained by excluding from search conditions the keyword of "hot spring" as the last keyword of the keyword of "daughter" and the keyword of "hot spring" as the search conditions. The display controlling section 118 displays the keyword list on the screen of the LCD 17 shown on the upper side of the center of FIG. 25. The keyword list shows the other keywords of the image data to which the keyword of "daughter" is set on the screen of the LCD 17. The other keywords are searched by the keyword searching part 121.

When the left cross key is further pressed on the keyword list on the screen of the LCD 17 shown on the upper side of the center of FIG. 25, the display controlling section 118 displays the keyword list on the screen of the LCD 17 shown on the left side of FIG. 25. The keyword list shows the keywords searched by the keyword searching part 121 with the last keyword of "daughter" excluded from search conditions, that is, the keywords of all the image data, on the screen of the LCD 17.

Incidentally, the display controlling section 118 may set the position of the cursor 423 at a time of a screen transition when the left cross key is pressed to a keyword having the highest frequency or to the last keyword as a search condition.

More specifically, for example, when the keyword of "ski" is selected by the cursor 423 on the keyword list on the screen of the LCD 17 shown on the left side of FIG. 25, and then the enter button 429 is pressed, other keywords of image data to which the keyword of "ski" is set are displayed on a keyword list (not shown). When the left cross key is pressed on the keyword list (not shown) showing the other keywords of the image data to which the keyword of "ski" is set, the screen makes a transition to the screen of the LCD 17 shown on the left side of FIG. 25, as described above. The position of the cursor 423 at this time may be set to the keyword of "daughter" having the highest frequency or the keyword of "ski" as the last keyword.

When the user selects the keyword of "baseball" by the cursor 423 on the keyword list on the screen of the LCD 17 shown on the upper side of the center of FIG. 25, and then presses the enter button 429, images 424-1 to 424-9 in the thumbnail format on the screen of the LCD 17 shown on a right side of FIG. 25 are displayed on the screen of the LCD 17.

That is, when the user presses the enter button 429, the images 424-1 to 424-9 to which the keywords set as narrowing-down conditions so far (for example "daughter" [the screen of the LCD 17 shown on the left side of FIG. 25] and "baseball" [the screen of the LCD 17 shown on the upper side of the center of FIG. 25]) are displayed in the thumbnail format on the screen of the LCD 17.

In other words, the images 424-1 to 424-9 in the thumbnail format on the screen of the LCD 17 shown on the right side of FIG. 25 are images to which the keyword of "daughter" and the keyword of "baseball" are set.

Because the images are thus displayed in the thumbnail format, the images in the thumbnail format can be displayed on the screen of the LCD 17 more quickly.

Incidentally, when nine pieces of image data to which the keyword of "daughter" and the keyword of "baseball" are set are searched, the images 424-1 to 424-9 in the thumbnail format on the screen of the LCD 17 shown on the right side of FIG. 25 are displayed on the screen of the LCD 17. However, it is of course possible to deal with a case where more than (less than) nine pieces of image data are searched. Specifically, when more than nine pieces of image data are searched, for example, a message prompting for narrowing down images to a predetermined number of images may be displayed on the screen of the LCD 17, or for example, a scroll button may be displayed on the screen of the LCD 17. Therefore, when the user presses the scroll button, next images (for example images 424-10 to 424-18) are displayed, and when the scroll button is further displayed, further next images (for example images 424-19 to 424-27) are displayed on the screen of the LCD 17.

When the user selects the keywords of "others" by the cursor 423 on the keyword list on the screen of the LCD 17 shown on the upper side of the center of FIG. 25, and then presses the enter button 429, a keyword list on the screen of the LCD 17 shown on a lower side of the center of FIG. 25 is displayed.

The keyword list on the screen of the LCD 17 shown on the lower side of the center of FIG. 25 is a list of details of keywords collected as "others", which are a set of keywords having low frequencies among the keywords narrowed down with the keyword of "daughter" on the keyword list on the screen of the LCD 17 shown on the left side of FIG. 25 set as a search condition. That is, the keywords of "others" are a set of keywords that include the keyword of "daughter" and are other than the keywords of "hot spring", "amusement park", "kindergarten entrance ceremony", and "baseball" and "none".

In the example on the screen of the LCD 17 shown on the lower side of the center of FIG. 25, each row shows a keyword and the frequency (a number in parentheses on a right side of the keyword) of the keyword. Specifically, a frequency of "100" is displayed in a first row on the screen of the LCD 17 in correspondence with a keyword of "soccer". A frequency of "45" is displayed in a second row on the screen of the LCD 17 in correspondence with a keyword of "Osaka". A frequency of "39" is displayed in a third row on the screen of the LCD 17 in correspondence with a keyword of "wedding". A frequency of "17" is displayed in a fourth row on the screen of the LCD 17 in correspondence with a keyword of "spring". A frequency of "200" is displayed in a fifth row on the screen of the LCD 17 in correspondence with keywords of "others". A frequency of "234" is displayed in a sixth row on the screen of the LCD 17 in correspondence with "none".

That is, because keywords set to image data and have low frequencies can also be searched, desired images can be searched more accurately.

Thus, a search by keyword can be performed more quickly by pressing the right cross key, for example. It is more effective especially because an operation of pressing a button on the digital still camera 1 is a trouble for the user.

Description will next be made of a process of setting a keyword to images searched by keyword or imaging information as described above.

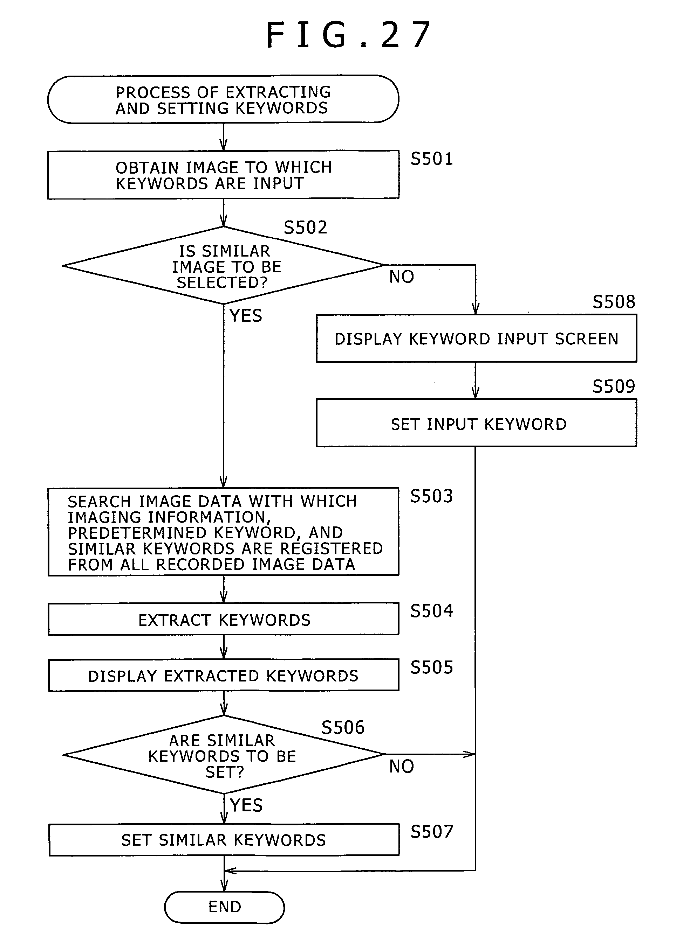

FIG. 27 is a flowchart of assistance in explaining the process of extracting and setting a keyword. The process corresponds to the process of step S12 in FIG. 8.

In step S501, the similar information-set image searching section 114 obtains (selects) images to which a keyword is input on the basis of a specification by the user. The images selected by the process of step S501 for inputting a keyword are will hereinafter be referred to simply as selected images.

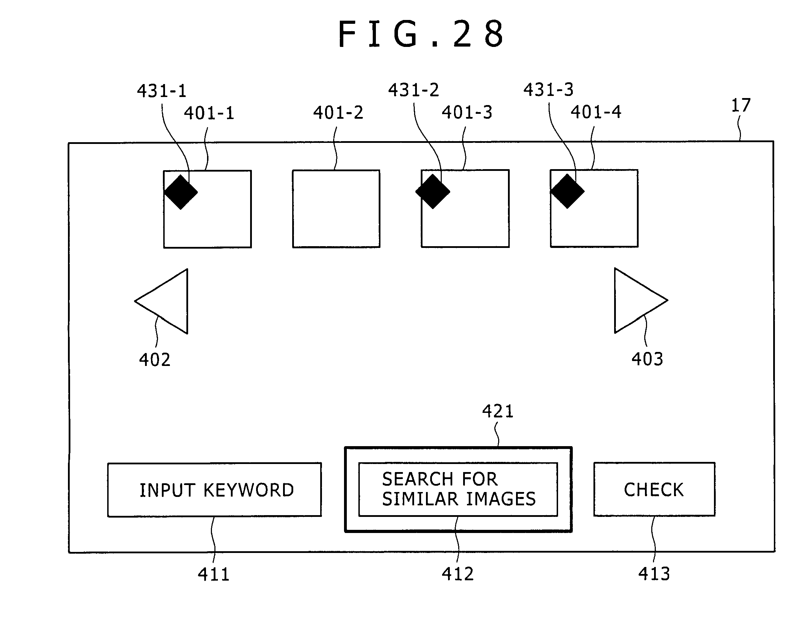

FIG. 28 is a diagram showing an example of the screen of the LCD 17 displaying a list of images extracted with a keyword or imaging information as a search condition. The same parts as in FIG. 24 are identified by the same reference numerals, and description thereof will be omitted as appropriate.

Marks 431-1 to 431-3 indicate images for inputting a keyword. The marks 431-1 to 431-3 are for example added by an operation of the check button 413 by the user as described above. A keyword is set to the image data to which the marks 431-1 to 431-3 are added (for example the selected images of an image 401-1, an image 401-2, and an image 401-4).

Returning to FIG. 27, in step S502, the similar information-set image searching section 114 determines whether to search similar images. For example, when a similar image search button 412 is selected by a cursor 421 according to a specification of the user in the example shown in FIG. 28, the similar information-set image searching section 114 determines that similar images are to be searched. When a keyword input button 411 is selected by the cursor 411, the similar information-set image searching section 114 determines that the similar image search is not to be performed.

When the similar information-set image searching section 114 determines in step S503 that the similar image search is to be performed, the process proceeds to step S503, where the similar information-set image searching section 114 searches image data to which imaging information, a predetermined keyword, and keywords other than the predetermined keyword (the keywords other than the predetermined keyword will be referred to as similar keywords) are set from all the image data recorded on the recording medium 19. That is, in step S503, the similar information-set image searching section 114 searches image data to which a selected keyword is set, to which selected imaging information is attached, and to which other keywords than the selected keyword are set. For example, the similar information-set image searching section 114 searches image data to which imaging information of "2003.10.12" and "vicinity of Ikebukuro Station", a keyword of "daughter", and keywords other than "daughter" are set from all the image data recorded on the recording medium 19.

Incidentally, the similar information-set image searching section 114 may search image data to which the similar keywords and one of the imaging information and the predetermined keyword are set from all the image data recorded on the recording medium 19.

In step S504, the keyword extracting section 115 extracts the keywords set to the image data searched by the process of step S503. The keyword extracting section 115 supplies the extracted keywords to the display controlling section 118 and the keyword setting section 116. For example, the keyword extracting section 115 extracts keywords of "wedding", " .. family", and "daughter" set to the image data searched by the process of step S503. The keyword extracting section 115 supplies the extracted keywords to the display controlling section 118 and the keyword setting section 116.

In step S505, the display controlling section 118 displays the keywords supplied from the keyword extracting section 115 on the screen of the LCD 17 according to a predetermined format. For example, the display controlling section 118 displays the keywords of "wedding", ".. family", and "daughter" which are supplied from the keyword extracting section 115 on the screen of the LCD 17 according to a predetermined format.

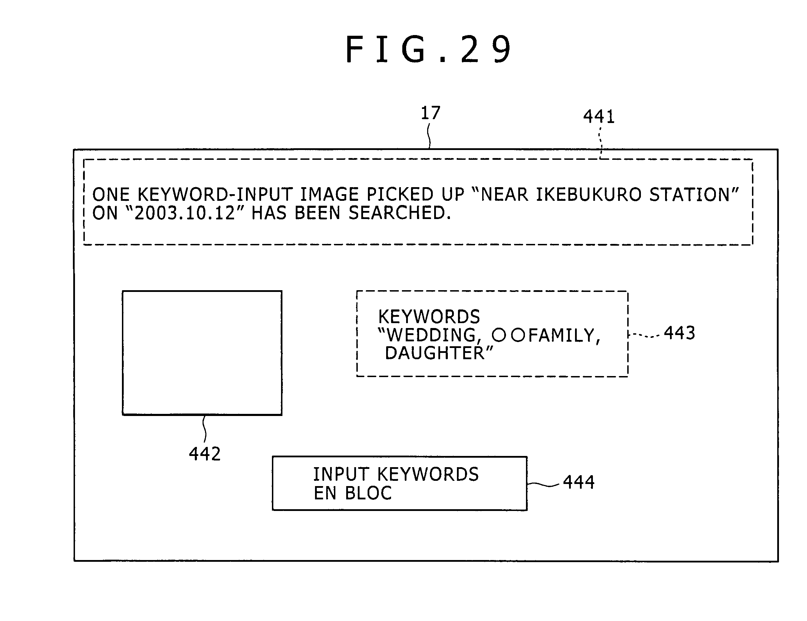

FIG. 29 is a diagram showing an example of the screen of the LCD 17 displaying the keywords searched by the similar image search.

Search result contents 441 show a message including search conditions and the number of searched images. For example, when a search is performed with the imaging information of "2003.10.12" and "vicinity of Ikebukuro Station", the desired keyword of "daughter", and keywords other than "daughter" set as search conditions, and one piece of image data is searched, the search result contents 441 show a message that "one keyword-input image picked up "near Ikebukuro Station" on "2003.10.12" has been searched".

An image 442 is displayed on the basis of the image data searched by the process of step S503 in FIG. 27. For example, when a search is performed with the imaging information of "2003.10.12" and "vicinity of Ikebukuro Station", the desired keyword of "daughter", and keywords other than "daughter" set as search conditions, and one piece of image data is searched, the image 442 is displayed on the basis of the one piece of image data that has been searched.

Set keywords 443 are keywords set to the image data for displaying the image 442. For example, the set keywords 443 include the keywords of "wedding", " .. family", "daughter", and the like. That is, the keywords of "wedding", ".. family", and "daughter" are set to the image 442.

For example, when the user presses a switch corresponding to a keyword en bloc input button 444, the keyword setting section 116 sets the set keywords 443 to the selected images. For example, the keyword setting section 116 sets the set keywords 443 of "wedding", ".. family", and "daughter" to the selected images (for example the selected images of the image 401-1, the image 401-2, and the image 401-4).

Returning to FIG. 27, in step S506, the keyword setting section 116 determines whether to set the similar keywords to the selected images. For example, when the keyword en bloc input button 444 is pressed on an instruction by the user in the example shown in FIG. 29, the keyword setting section 116 determines that the similar keywords are to be set to the selected images (for example the selected images of the image 401-1, the image 401-2, and the image 401-4). When the keyword en bloc input button 444 is not pressed, the user does not intend to set the keywords, and therefore the keyword setting section 116 determines that the similar keywords are not to be set.

When the keyword setting section 116 determines in step S506 that the similar keywords are to be set to the selected images, the process proceeds to step S507, where the keyword setting section 116 sets the similar keywords to the selected images, whereby the process is ended. For example, when an already set keyword is "daughter", the keyword setting section 116 sets the similar keywords of "wedding" and " .. family" other than the keyword of "daughter" to the selected images (for example the selected images of the image 401-1, the image 401-2, and the image 401-4). That is, the keyword setting section 116 stores the similar keywords in keyword groups 213 corresponding to the selected images.

On the other hand, when the keyword setting section 116 determines in step S506 that the similar keywords are not to be set to the selected images, the similar keywords are not to be set, and therefore the process of step S507 is skipped, whereby the process is ended.

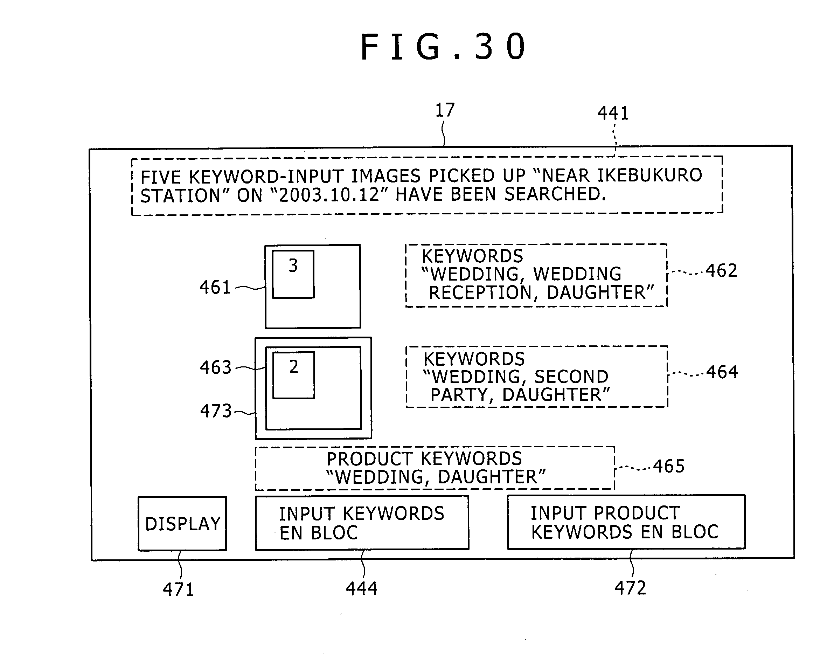

FIG. 30 is a diagram showing an example of the screen of the LCD 17 displaying a result of search of a plurality of images searched by the similar image search. The same parts as shown in FIG. 29 are identified by the same reference numerals, and description thereof will be omitted as appropriate.

Search result contents 441 show a message including search conditions and the number of searched images. For example, when a search is performed with the imaging information of "2003.10.12" and "vicinity of Ikebukuro Station", the desired keyword of "daughter", and keywords other than "daughter" set as search conditions, and a plurality of images (five images, for example) are searched, the search result contents 441 are a message that "five keyword-input images picked up "near Ikebukuro Station" on "2003.10.12" have been searched".

An image 461 is displayed on the basis of image data searched by the process of step S503 in FIG. 27. For example, when a search is performed with the imaging information of "2003.10.12" and "vicinity of Ikebukuro Station", the desired keyword of "daughter", and keywords other than "daughter" set as search conditions, and three images to which the keywords of "wedding", ".. family", and "daughter" are set as set keywords 462 are searched, the number of the searched images "3", is displayed in such a manner as to be superimposed on the image 461.

The set keywords 462 are keywords set to the image 461. For example, the set keywords 462 are "wedding", "wedding reception", and "daughter". That is, the keywords of "wedding", "wedding reception", and "daughter" are set to the image 461.

An image 463 is displayed on the basis of image data searched by the process of step S503 in FIG. 27. For example, when a search is performed with the imaging information of "2003.10.12" and "vicinity of Ikebukuro Station", the keyword of "daughter", and keywords other than "daughter" set as search conditions, and two images to which the keywords of "wedding", "second party", and "daughter" are set as set keywords 464 are searched, the number of the searched images "2", is displayed in such a manner as to be superimposed on the image 463.

The set keywords 464 are keywords set to the image 463. For example, the set keywords are "wedding", "second party", and "daughter". That is, the keywords of "wedding", "second party", and "daughter" are set to the image 463.

Product keywords 465 are common keywords set to searched images when the plurality of images are searched. For example, when the image 461 to which the set keywords 462 of "wedding", "wedding reception", and "daughter" are set and the image 463 to which the set keywords 464 of "wedding", "second party", and "daughter" are set are searched, the keywords of "wedding" and "daughter" common to the image 461 and the image 463 are the product keywords 465.

For example, when the user presses a switch corresponding to a display button 471, a thumbnail display section 116 displays images selected by a cursor 473. For example, when the image 461 is selected by the cursor 473, the three images 461 to which the set keywords 462 of "wedding", "wedding reception", and "daughter" are set are displayed in the thumbnail format on the screen of the LCD 17. When the image 463 is selected by the cursor 473, the two images 463 to which the set keywords 464 of "wedding", "second party", and "daughter" are set are displayed in the thumbnail format on the screen of the LCD 17.

For example, when the user presses a switch corresponding to a keyword en bloc input button 444, the keyword setting section 116 sets the set keywords to the selected images. For example, the keyword setting section 116 sets the set keywords 464 of "wedding", "second party", and "daughter" to the selected images (for example the selected images of the image 401-1, the image 401-2, and the image 401-4).

For example, when the user presses a switch corresponding to a product keyword en bloc button 472, the keyword setting section 116 sets the product keywords to the selected images. For example, the keyword setting section 116 sets the product keywords 465 of "wedding" and "daughter" to the selected images (for example the selected images of the image 401-1, the image 401-2, and the image 401-4).

Thus, even when a plurality of similar images are searched, it is possible to set keywords without inputting the keywords on the basis of the searched similar images.

Returning to FIG. 27, when the similar information-set image searching section 114 determines in step S502 that the similar image search is not to be performed (when for example the keyword input button 411 in FIG. 28 is pressed), on the other hand, the process proceeds to step S508, where the display controlling section 118 displays an keyword input screen (for example the keyword input screen of FIG. 6).

In step S509, the keyword setting section 116 sets a keyword input on the keyword input screen on the basis of an instruction of the user, whereby the process is ended. For example, the keyword setting section 116 sets the keyword input in the text box 261 on the keyword input screen of FIG. 6 to the selected images (for example the selected images of the image 401-1, the image 401-2, and the image 401-4).

More specifically, for example, the keyword setting section 116 sets a keyword of "church" input in the text box 261 to the selected images (for example the selected images of the image 401-1, the image 401-2, and the image 401-4). That is, in this case, the keywords of "daughter" and "church" and the imaging information of "2003.10.12" and "vicinity of Ikebukuro Station" are set as added information to the selected images (for example the selected images of the image 401-1, the image 401-2, and the image 401-4).

It is thus possible to search one or a plurality of similar images and set keywords to desired images without inputting the keywords on the basis of the keywords set to the searched similar image(s). Therefore the user can be saved the trouble of inputting the keywords. In addition, since once input keywords are used again, keywords are unified. It is thus possible to search desired images more quickly and surely on the basis of the unified keywords.

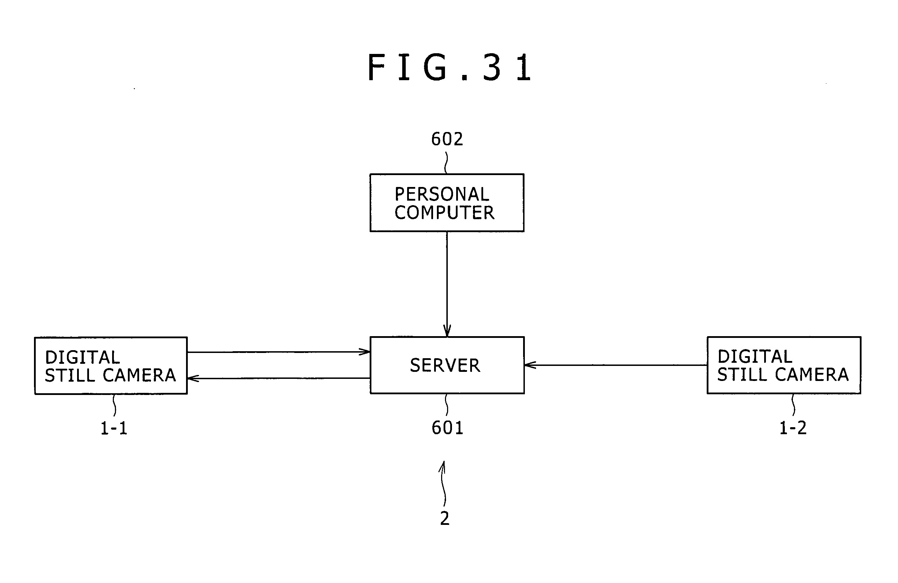

Referring to FIGS. 31 to 41, description will next be made of a configuration of an embodiment of an information processing system according to the present invention.

FIG. 31 is a diagram showing an embodiment of an information processing system 2 to which the present invention is applied. In the information processing system 2, a digital still camera 1-1, a digital still camera 1-2, and a personal computer 602 are connected to a server 601. Though not shown in the figure, the digital still camera 1-1, the digital still camera 1-2, the server 601, and the personal computer 602 are each connected via a network such as the Internet, for example.

The digital still camera 1-1 and the digital still camera 1-2 are an example of the above-described digital still camera 1, and thus have similar functions. For the convenience of description, however, suppose in the following that a digital still camera 1 that receives or transmits data from and to the server 601 is the digital still camera 1-1, and that a digital still camera 1 that only transmits data to the server 601 is the digital still camera 1-2. Also, description will be made supposing that the digital still camera 1-1 and the digital still camera 1-2 are used by different users.

The server 601 receives or transmits keywords, imaging information, or the like to be exchanged between the digital still camera 1-1, the digital still camera 1-2, or the personal computer 602 via a network such as the Internet, for example, and transmits related information, URL information, or the like in response to a request from the digital still camera 1-1. In addition, the server 601 records data necessary to transmit or receive keywords, imaging information, related information, or URL information. For example, the server 601 is provided as a keyword database server for managing keywords.

The personal computer 602 is for example a personal computer of a desktop type or a portable type. The personal computer 602 transmits keywords, related information, or the like input to a predetermined Web browser program to the server 601 via a network such as the Internet or the like on the basis of an instruction from a user.

Incidentally, while the two digital still cameras 1-1 and 1-2 are provided in the example of the information processing system 2 shown in FIG. 31, one digital still camera or a desired number of digital still cameras may be provided in practice. Similarly, while one server 601 is provided in the example of the information processing system 2 shown in FIG. 31, one server or a desired number of servers may be provided in practice. Similarly, while one personal computer is provided in the example of the information processing system 2 shown in FIG. 31, one personal computer or a desired number of personal computers may be provided in practice.

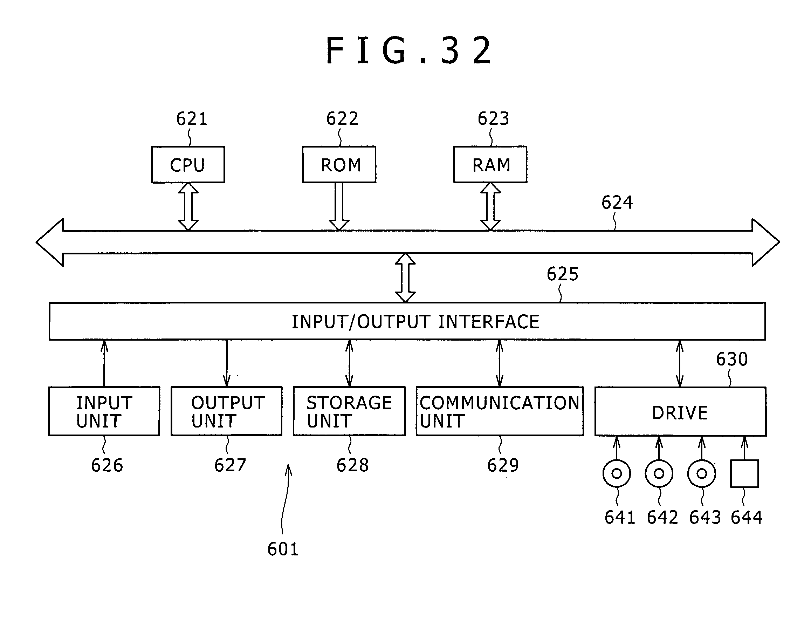

FIG. 32 is a block diagram showing an example of configuration of the server 601.

A CPU 621 performs various processes according to a program stored in a ROM 622 or a program recorded in a recording unit 628. A RAM 623 stores a program executed by the CPU 621, data, and the like as necessary. The CPU 621, the ROM 622, and the RAM 623 are interconnected via a bus 624.

The CPU 621 is also connected with an input-output interface 625 via the bus 624. The input-output interface 625 is connected with an input unit 626 formed by a keyboard, a mouse, and the like and an output unit 627 formed by a display and the like. The CPU 621 performs various processes in response to a command input from the input unit 626. The CPU 621 then outputs an image, audio, or the like obtained as a result of a process to the output unit 627.

The recording unit 628 connected to the input-output interface 625 is for example formed by a hard disk or the like. Programs to be executed by the CPU 621 and various data are recorded in the recording unit 628. A communication unit 629 communicates with external devices via a communication network, the Internet, and other networks or a communication medium.

In addition, a program may be obtained via the communication unit 629 and recorded in the recording unit 628.

When a magnetic disk 641, an optical disk 642, a magneto-optical disk 643, a semiconductor memory 644, or the like is loaded into a drive 630 connected to the input-output interface 625, the drive 630 drives the magnetic disk 641, the optical disk 642, the magneto-optical disk 643, the semiconductor memory 644, or the like and obtains programs, data, and the like recorded thereon. The obtained programs and data are transferred to the recording unit 628 to be recorded as necessary.

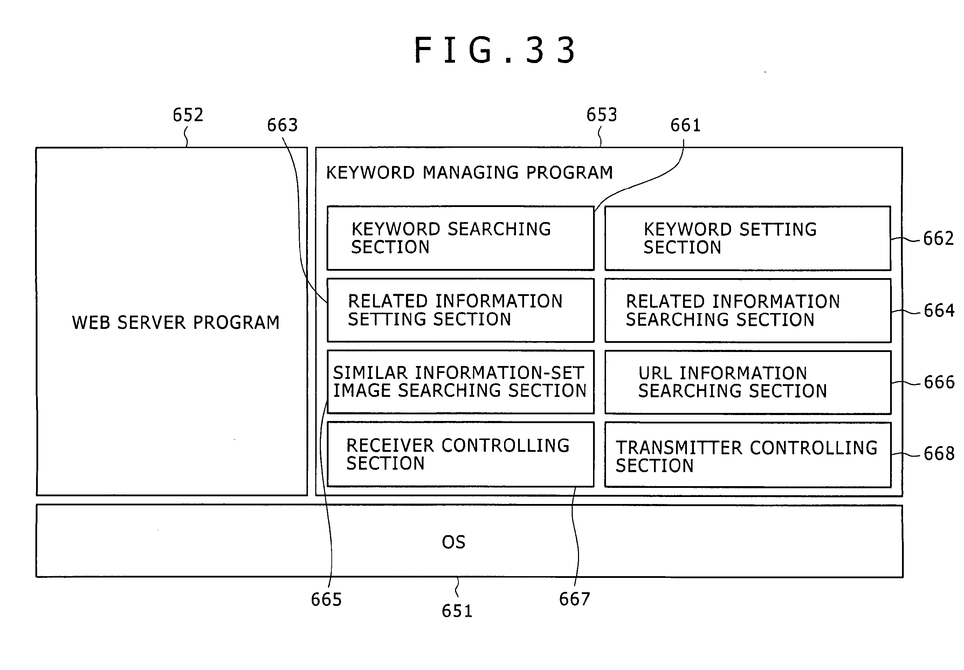

FIG. 33 is a diagram showing an example of a configuration of programs executed by the server 601 (an example of a configuration of functions).

An OS (Operating System) 651 is a basic program that manages files, manages memories, manages inputs and outputs, or provides a user interface, for example. For example, the OS 651 provides various functions in response to a request from another program.

A Web server program 652 provides data for viewing a Web page to another device via the Internet. For example, the Web server program 652 transmits information recorded in the recording unit 628 (for example documents described in HTML, image data, and the like) via the Internet or the like in response to a request according to a predetermined protocol such as an HTTP (HyperText Transfer Protocol) protocol or the like from a Web browser program (not shown) of the personal computer 602. That is, the Web browser program of the personal computer 602 receiving the information transmitted from the Web server program 652 displays text or an image based on a description of the received information on a display unit (not shown).

A keyword managing program 653 for example obtains keywords and provides keywords.

The keyword managing program 653 includes a keyword searching section 661, a keyword setting section 662, a related information setting section 663, a related information searching section 664, a similar information-set image searching section 665, a URL information searching section 666, a receiver controlling section 667, and a transmitter controlling section 668.

The keyword searching section 661 searches a keyword from the recording unit 628, for example, on the basis of imaging information supplied from the receiver controlling section 667. For example, on the basis of imaging information supplied from the receiver controlling section 667 as location coordinates of "Shinjuku Station", the keyword searching section 661 searches a keyword corresponding to the imaging information as location coordinates of "Shinjuku Station" from a correspondence table recorded in the recording unit 628 (for example a correspondence table in which information associating location coordinates and location names with each other is set), for example.

The keyword setting section 662 records image data to which keywords are set. The image data is supplied from the receiver controlling section 667 in the recording unit 628, for example. For example, the keyword setting section 662 records image data to which keywords of "daughter" and "athletic meet" are set. The image data is supplied from the receiver controlling section 667 in the recording unit 628.

The related information setting section 663 records a keyword and related information supplied from the receiver controlling section 667 in the recording unit 628, for example. For example, the related information setting section 663 records, in the recording unit 628, a keyword of ".. hot spring" and related information of "A restaurant called .. near the .. hot spring serves delicious food" corresponding to ".. hot spring" supplied from the receiver controlling section 667.

The related information searching section 664 searches related information corresponding to a keyword on the basis of the keyword supplied from the keyword searching section 661. The related information searching section 664 supplies the searched related information to the transmitter controlling section 668.

For example, on the basis of the keywords of ".. hot spring" and "Event 1" supplied from the keyword searching section 661, the related information searching section 664 searches the related information of "A restaurant called .. near the .. hot spring serves delicious food" corresponding to the keyword of " .. hot spring" and related information of "I saw xx at Event 1" corresponding to the keyword of "Event 1". The related information searching section 664 then supplies the searched related information of "A restaurant called .. near the .. hot spring serves delicious food" and "I saw xx at Event 1" to the transmitter controlling section 668.

The similar information-set image searching section 665 searches image data to which a keyword or imaging information supplied from the receiver controlling section 667 and a keyword other than the keyword supplied from the receiver controlling section 667 are set from image data recorded in the recording unit 628, for example, on the basis of the keyword or imaging information supplied from the receiver controlling section 667. The similar information-set image searching section 665 supplies the keywords set to the searched image data to the transmitter controlling section 668.

For example, the similar information-set image searching section 665 searches image data to which a keyword of "daughter" supplied from the receiver controlling section 667 and a keyword other than the keyword of "daughter" are set from the image data recorded in the recording unit 628. The similar information-set image searching section 665 supplies the keywords of "daughter" and "athletic meet" set to the searched image data to the transmitter controlling section 668.

The URL information searching section 666 searches Web pages on the Internet, for example, on the basis of a keyword supplied from the keyword searching section 661, and searches URL information corresponding to the keyword. The URL information searching section 666 supplies the searched URL information to the transmitter controlling section 668.

For example, the URL information searching section 666 has a function of a so-called Internet search engine that searches Web pages on the Internet, for example. On the basis of the keywords of ".. hot spring" and "Event 1" supplied from the keyword searching section 661, the URL information searching section 666 searches URL information of "Introduction to . . Hot Spring http://www.aaa.or.jp" and " . . Hot Spring Tourist Association http://www.bbb.or.jp" corresponding to the keyword of ". . hot spring" via the Internet. The URL information searching section 666 supplies the searched URL information of "Introduction to . . Hot Spring http://www.aaa.or.jp" and " . . Hot Spring Tourist Association http://www.bbb.or.jp" to the transmitter controlling section 668.

The receiver controlling section 667 controls for example reception of imaging information and the like performed in the communication unit 629. For example, the receiver controlling section 667 controls the communication unit 629 to make the communication unit 629 receive imaging information transmitted from the digital still camera 1-1.

The transmitter controlling section 668 controls for example transmission of a keyword and the like performed in the communication unit 629. For example, when a keyword is supplied from the keyword searching section 661, the reception section 668 controls the communication unit 629 to make the communication unit 629 transmit the supplied keyword to the digital still camera 1-1.

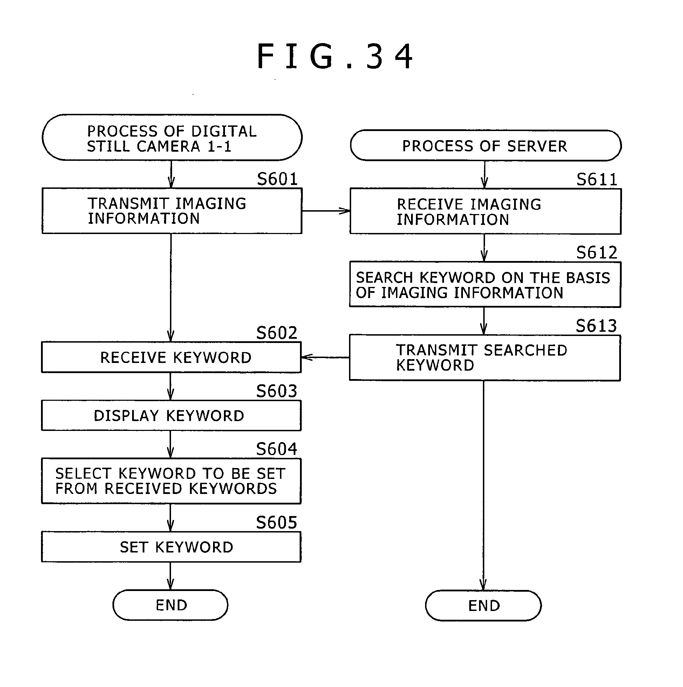

FIG. 34 is a flowchart of assistance in explaining a process in which the digital still camera 1-1 obtains a keyword from the server 601.

In step S601, when a user performs a predetermined operation for inquiring of the server 601 about a keyword to be set to image data, a transmitter controlling part 123 of a control program 101 of the digital still camera 1-1 makes an external interface 20 transmit imaging information to the server 601 via a network such as the Internet, for example.

More specifically, for example, when the user picks up an image in the vicinity of "Shinjuku Station", and performs an operation for inquiring of the server 601 about a keyword to be set to the picked-up image (hereinafter referred to as the image to which a keyword is to be set), a receiver device (not shown) for obtaining the location coordinates of the digital still camera 1-1 obtains location coordinates from for example the GPS, as described above, and then supplies the obtained location coordinates to the transmitter controlling part 123. For example, the transmitter controlling part 123 transmits location coordinates indicating a location where the image of the vicinity of "Shinjuku Station" was picked up (hereinafter referred to simply as the location coordinates of "Shinjuku Station") supplied from the receiver device, to the server 601 via the network.

In step S611, the receiver controlling section 667 of the keyword managing program 653 of the server 601 makes the communication unit 629 receive the imaging information transmitted from the digital still camera 1-1 via the network such as the Internet, for example. The receiver controlling section 667 supplies the received imaging information to the keyword searching section 661. For example, the receiver controlling section 667 supplies the keyword searching section 661 with the imaging information as the location coordinates of "Shinjuku Station" received from the digital still camera 1-1 via the network.

In step S612, the keyword searching section 661 searches a keyword on the basis of the imaging information supplied from the receiver controlling section 667. The keyword searching section 661 supplies the searched keyword to the transmitter controlling section 668.

For example, on the basis of the imaging information as the location coordinates of "Shinjuku Station" supplied from the receiver controlling section 667, the keyword searching section 661 searches a keyword corresponding to the imaging information as the location coordinates of "Shinjuku Station" from a correspondence table recorded in the recording unit 628 (for example a correspondence table in which information associating location coordinates and location names with each other is set), for example. More specifically, for example, when the location coordinates of "Shinjuku Station" and a location name of "vicinity of Shinjuku Station" are associated with each other in the correspondence table, the keyword searching section 661 searches the location name of "vicinity of Shinjuku Station" on the basis of the location coordinates of "Shinjuku Station". The keyword searching section 661 then supplies the searched location name of "vicinity of Shinjuku Station" (keyword) to the transmitter controlling section 668.

In step S613, the transmitter controlling section 668 makes the communication unit 629 transmit the keyword supplied from the keyword searching section 661 to the digital still camera 1-1 via the network such as the Internet, for example. For example, when the keyword of "vicinity of Shinjuku Station" is supplied from the keyword searching section 661 via the network, the transmitter controlling section 668 makes the communication unit 629 transmit the keyword of "vicinity of Shinjuku Station" to the digital still camera 1-1.

In step S602, a receiver controlling part 124 of the control program 101 of the digital still camera 1-1 makes the external interface 20 receive the keyword transmitted from the server 601 via the network such as the Internet, for example. The receiver controlling part 124 supplies the keyword received via the network to the display controlling section 118. For example, the receiver controlling part 124 receives the keyword of "vicinity of Shinjuku Station" transmitted from the server 601 and then supplies the received keyword of "vicinity of Shinjuku Station" to the display controlling section 118.

In step S603, the display controlling section 118 displays the keyword in a predetermined format on the screen of the LCD 17 on the basis of the keyword supplied from the receiver controlling part 124. For example, the display controlling section 118 displays the keyword of "vicinity of Shinjuku Station" supplied from the receiver controlling part 124 in a predetermined format on the screen of the LCD 17.

In step S604, a keyword searching part 121 selects a keyword to be set from keywords displayed in the predetermined format on the screen of the LCD 17 on the basis of an instruction from the user. The keyword searching part 121 supplies the selected keyword to a keyword setting section 116. For example, when the user selects the keyword of "vicinity of Shinjuku Station", the keyword searching part 121 supplies the selected keyword of "vicinity of Shinjuku Station" to the keyword setting section 116.

In step S605, the keyword setting section 116 sets the keyword supplied from the keyword searching part 121 to the image to which a keyword is to be set, whereby the process is ended. For example, the keyword setting section 116 sets the keyword of "vicinity of Shinjuku Station" supplied from the keyword searching part 121 to the image to which a keyword is to be set.

Thus, the digital still camera 1-1 can obtain a keyword from the server 601 via the network such as the Internet, for example, in addition to keywords set to image data recorded on the recording medium 19. It is therefore possible to save the trouble of inputting a keyword, and set an optimum keyword to an image.

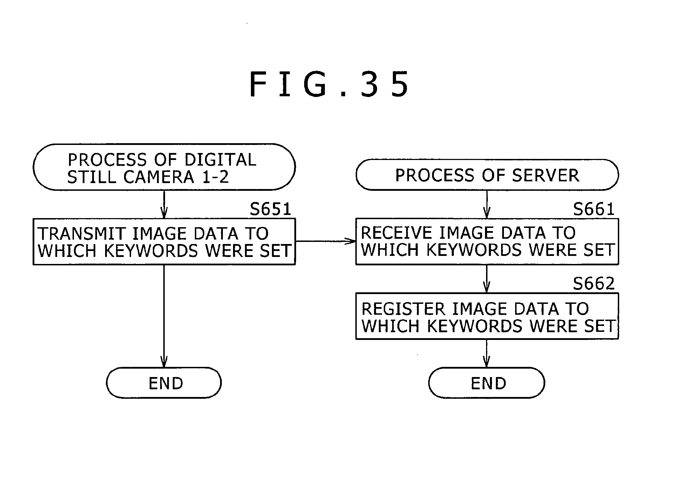

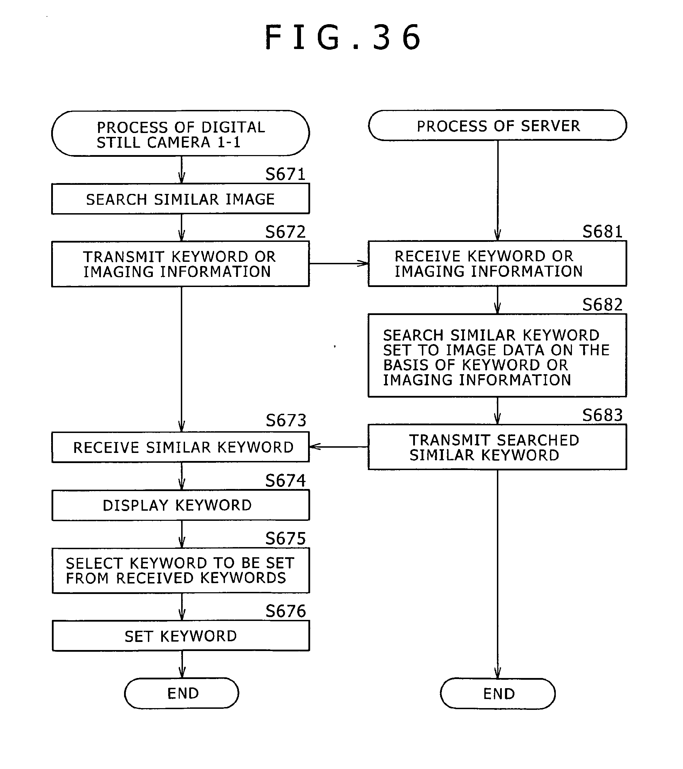

Next, referring to FIG. 35 and FIG. 36, description will be made of a process in which the digital still camera 1-1 searches similar images from image data recorded in the recording unit 628 of the server 601 rather than from the image data recorded on the recording medium 19, as the above-described process of searching similar images (for example the process of step S503 in FIG. 27).

FIG. 35 is a flowchart of assistance in explaining a process in which the digital still camera 1-2 sets image data to which a keyword is set in the server 601.

In step S651, a transmitter controlling part 123 of a control program 101 of the digital still camera 1-2 makes an external interface 20 transmit image data to which a keyword is set to the server 601 via a network such as the Internet, for example. For example, the transmitter controlling part 123 makes the external interface 20 transmit image data to which keywords of "daughter" and "athletic meet" are set to the server 601 via the network.

In step S661, the receiver controlling section 667 of the keyword managing program 653 of the server 601 makes the communication unit 629 receive the image data to which the keywords are set. The image data are transmitted from the digital still camera 1-2 via the network such as the Internet, for example. The receiver controlling section 667 supplies the received image data to which the keywords are set to the keyword setting section 662. For example, the receiver controlling section 667 makes the communication unit 629 receive the image data to which the keywords of "daughter" and "athletic meet" are set. The image data are transmitted from the digital still camera 1-2 via the network. The receiver controlling section 667 supplies the received image data to which the keywords of "daughter" and "athletic meet" are set to the keyword setting section 662.

In step S662, the keyword setting section 662 records the image data, which are supplied from the receiver controlling section 667 and to which the keywords are set, in the recording unit 628, for example, whereby the process is ended. For example, the keyword setting section 662 records the image data, which are supplied from the receiver controlling section 667 and to which the keywords of "daughter" and "athletic meet" are set, in the recording unit 628.

Thus, the server 601 can record the image data, which are transmitted from the digital still camera 1-2 via the network and to which the keywords are set, in the recording unit 628.

FIG. 36 is a flowchart of assistance in explaining a process in which the digital still camera 1-1 searches a similar keyword from the server 601.

In step S671, a similar information-set image searching section 114 of the control program 101 of the digital still camera 1-1 performs a similar image searching process for a desired image (hereinafter referred to as an image to which a similar keyword is to be set). The similar image searching process is similar to the above-described process of step S503 in FIG. 27, and description thereof will be omitted.

In step S672, the transmitter controlling part 123 makes the external interface 20 transmit a keyword or imaging information as a search condition for the process of step S671 to the server 601 via the network such as the Internet, for example. That is, transmitting the keyword or imaging information as search condition for the process of step S671 to the server 601 allows the similar image searching process to be also performed on image data recorded in the recording unit 628 of the server 601. For example, the transmitter controlling part 123 transmits a keyword of "daughter" to the server 601 via the network.

In step S681, the receiver controlling section 667 of the keyword managing program 653 of the server 601 makes the communication unit 629 receive the keyword or imaging information transmitted from the digital still camera 1-1 via the network such as the Internet, for example. The receiver controlling section 667 supplies the received keyword or imaging information to the similar information-set image searching section 665. For example, the receiver controlling section 667 makes the communication unit 629 receive the keyword of "daughter" transmitted from the digital still camera 1-1. The receiver controlling section 667 supplies the received keyword of "daughter" to the similar information-set image searching section 665.

In step S682, on the basis of the keyword or imaging information supplied from the receiver controlling section 667, the similar information-set image searching section 665 searches image data to which the keyword or imaging information supplied from the receiver controlling section 667 and a similar keyword other than the keyword supplied from the receiver controlling section 667 are set from the image data recorded in the recording unit 628, for example. The similar information-set image searching section 665 supplies the similar keyword set to the searched image data to the transmitter controlling section 668.

For example, the similar information-set image searching section 665 searches image data to which the keyword of "daughter" supplied from the receiver controlling section 667 and the similar keyword are set (for example the image data to which the keywords of "daughter" and "athletic meet" are set in the process of step S662 in FIG. 35) from the image data recorded in the recording unit 628. The similar information-set image searching section 665 supplies the similar keyword of "athletic meet" set to the searched image data to the transmitter controlling section 668.

In step S683, the transmitter controlling section 668 makes the communication unit 629 transmit the similar keyword supplied from the similar information-set image searching section 665 to the digital still camera 1-1 via the network such as the Internet, for example. For example, when the similar keyword of "athletic meet" is supplied from the similar information-set image searching section 665, the transmitter controlling section 668 makes the communication unit 629 transmit the similar keyword of "athletic meet" to the digital still camera 1-1 via the network.

In step S673, the receiver controlling part 124 of the control program 101 of the digital still camera 1-1 makes the external interface 20 receive the similar keyword supplied from the server 601 via the network such as the Internet, for example. The receiver controlling part 124 supplies the similar keyword received via the network to the display controlling section 118. For example, the receiver controlling part 124 makes the external interface 20 receive the similar keyword of "athletic meet" supplied from the server 601. The receiver controlling part 124 supplies the received similar keyword of "athletic meet" to the display controlling section 118.

In step S674, the display controlling section 118 displays the similar keyword in a predetermined format on the screen of the LCD 17 on the basis of the similar keyword supplied from the receiver controlling part 124. For example, the display controlling section 118 displays the similar keyword of "athletic meet" supplied from the receiver controlling part 124 in a predetermined format on the screen of the LCD 17.

In step S675, the keyword searching part 121 selects a similar keyword to be set from keywords displayed in the predetermined format on the screen of the LCD 17 on the basis of an instruction from the user. The keyword searching part 121 supplies the selected keyword to the keyword setting section 116. For example, when the user selects the similar keyword of "athletic meet", the keyword searching part 121 supplies the selected similar keyword of "athletic meet" to the keyword setting section 116.

In step S676, the keyword setting section 116 sets the similar keyword supplied from the keyword searching part 121 to the image to which a similar keyword is to be set, whereby the process is ended. For example, the keyword setting section 116 sets the similar keyword of "athletic meet" supplied from the keyword searching part 121 to the image to which a similar keyword is to be set.

Thus, the digital still camera 1-1 can obtain a similar keyword from the server 601 via the network such as the Internet, for example, in addition to keywords set to image data recorded on the recording medium 19. It is therefore possible to select a keyword from a larger number of keywords, and thus set an optimum keyword to an image.

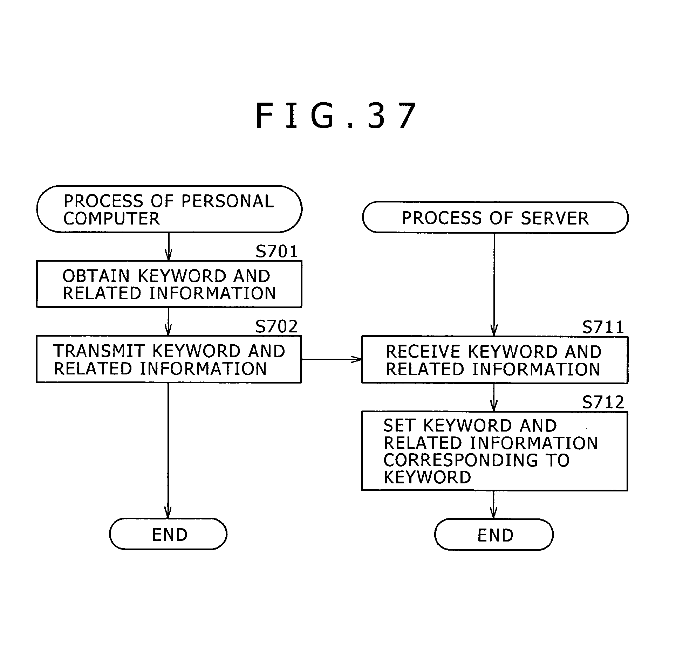

FIG. 37 is a flowchart of assistance in explaining a process in which the personal computer 602 sets a keyword or related information in the server 601.

In step S701, for example, the predetermined Web browser program (not shown) of the personal computer 602 obtains a keyword and related information on the basis of a user (for example a user other than the users of the digital still camera 1-1 and the digital still camera 1-2) operation (for example the keyword and the related information input by the user), that is, on the basis of a signal output from an input unit (not shown). The signal corresponds to an operation of the input unit by the user. The predetermined Web browser program supplies the obtained keyword and related information to a transmitter unit (not shown).

For example, when related information of "A restaurant called .. near the .. hot spring serves delicious food" is input by a user operation in correspondence with a keyword of ". . hot spring", the predetermined Web browser program obtains the keyword of ".. hot spring" and the related information of "A restaurant called .. near the .. hot spring serves delicious food" corresponding to the keyword of ".. hot spring". The predetermined Web browser program supplies the obtained keyword of ".. hot spring" and the related information of "A restaurant called .. near the .. hot spring serves delicious food" to the transmitter unit.

In step S702, the transmitter unit (not shown) transmits the keyword and the related information supplied from the predetermined Web browser program to the server 601 via a network such as the Internet, for example. For example, the transmitter unit transmits the keyword of ".. hot spring" and the related information of "A restaurant called near the hot spring serves delicious food" corresponding to the keyword of ".. hot spring" to the server 601 via the network.

In step S711, the receiver controlling section 667 receives the keyword and the related information transmitted from the personal computer 602 via the network such as the Internet, for example. The receiver controlling section 667 supplies the received keyword and related information to the related information setting section 663.

For example, the receiver controlling section 667 makes the communication unit 629 receive the keyword of ". . hot spring" and the related information of "A restaurant called .. near the .. hot spring serves delicious food" corresponding to the keyword of ". . hot spring". The keyword and the related information are transmitted from the personal computer 602 via the network. The receiver controlling section 667 supplies the received keyword of " .. hot spring" and the related information of "A restaurant called .. near the .. hot spring serves delicious food" corresponding to the keyword of ".. hot spring" to the related information setting section 663.

In step S712, the related information setting section 663 records the keyword and the related information supplied from the receiver controlling section 667 in the recording unit 628, for example, whereby the process is ended. For example, the related information setting section 663 records the keyword of ".. hot spring" and the related information of "A restaurant called .. near the .. hot spring serves delicious food" corresponding to the keyword of ".. hot spring" in the recording unit 628. The keyword and the related information are supplied from the receiver controlling section 667.

Incidentally, in step S712, the related information setting section 663 can refrain from recording the keyword and the related information supplied from the receiver controlling section 667 in the recording unit 628 on the basis of an instruction from a user (for example an administrator of the server 601). That is, when the related information corresponding to the keyword supplied from the receiver controlling section 667 is for example undesirable related information (for example words slandering and defaming another person), the user can perform a predetermined process for not setting the related information on a predetermined administrative screen or the like.

Thus, the server 601 can record the keyword and the related information transmitted from the personal computer 602 in the recording unit 628.

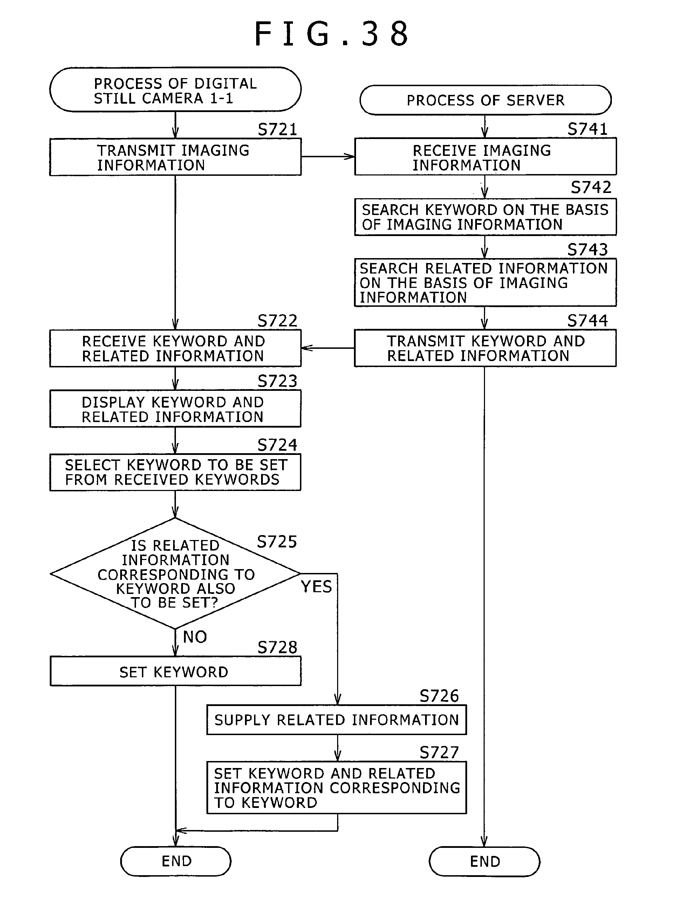

FIG. 38 is a flowchart of assistance in explaining a process in which the digital still camera 1-1 searches a keyword or related information from the server 601.

In step S721, when the user performs a predetermined operation for inquiring of the server 601 about a keyword or related information to be set to image data, the transmitter controlling part 123 of the control program 101 of the digital still camera 1-1 makes the external interface 20 transmit imaging information to the server 601 via a network such as the Internet, for example.

More specifically, for example, when the user picks up an image in the vicinity of the ".. hot spring", and performs an operation for inquiring of the server 601 about a keyword or related information to be set to the picked-up image (hereinafter referred to as the image to which related information is to be set), a receiver device (not shown) for obtaining the location coordinates of the digital still camera 1-1 obtains location coordinates from for example the GPS, as described above, and then supplies the obtained location coordinates to the transmitter controlling part 123. For example, the transmitter controlling part 123 transmits the location coordinates indicating a location where the image of the vicinity of the ".. hot spring" was picked up (hereinafter referred to simply as the location coordinates of the ".. hot spring") to the server 601 via the network. The location coordinates are supplied from the receiver device.

In step S741, the receiver controlling section 667 of the keyword managing program 653 of the server 601 makes the communication unit 629 receive the imaging information transmitted from the digital still camera 1-1 via the network such as the Internet, for example. The receiver controlling section 667 supplies the received imaging information to the keyword searching section 661. For example, the receiver controlling section 667 supplies the keyword searching section 661 with the imaging information as the location coordinates of the ".. hot spring" received from the digital still camera 1-1 via the network.

In step S742, the keyword searching section 661 searches a keyword corresponding to the imaging information on the basis of the imaging information supplied from the receiver controlling section 667. The keyword searching section 661 supplies the searched keyword to the related information searching section 664 and the transmitter controlling section 668.

For example, on the basis of the imaging information as the location coordinates of the ".. hot spring" supplied from the receiver controlling section 667, the keyword searching section 661 searches a keyword corresponding to the imaging information as the location coordinates of the ".. hot spring" from a correspondence table recorded in the recording unit 628 (for example a correspondence table in which information associating location coordinates and location names with each other is set), for example. More specifically, for example, when the location coordinates of the ".. hot spring" and a location name of the ".. hot spring" are associated with each other in the correspondence table, the keyword searching section 661 searches the location name of the ". . hot spring" on the basis of the location coordinates of the " .. hot spring". Further, when the location coordinates of the ".. hot spring" are associated with a location name of "Event 1" (event information) (that is, when "Event 1" is held at the ".. hot spring"), the keyword searching section 661 searches the event information of "Event 1" on the basis of the location coordinates of the ".. hot spring".

That is, the keyword searching section 661 searches the keywords of ".. hot spring" and "Event 1", and then supplies the searched keywords of ".. hot spring" and "Event 1" to the transmitter controlling section 668.

In step S743, on the basis of the keywords supplied from the keyword searching section 661, the related information searching section 664 searches related information corresponding to the keywords. The related information searching section 664 supplies the searched related information to the transmitter controlling section 668.

For example, on the basis of the keywords of ".. hot spring" and "Event 1" supplied from the keyword searching section 661, the related information searching section 664 searches the related information of "A restaurant called .. near the .. hot spring serves delicious food" corresponding to the keyword of ".. hot spring" (for example the related information of "A restaurant called .. near the .. hot spring serves delicious food" set in correspondence with the keyword of ".. hot spring" in the process of step S712 in FIG. 37). The related information searching section 664 also searches and related information of "I saw xx at Event 1" corresponding to the keyword of "Event 1". The related information searching section 664 supplies the searched related information of "A restaurant called .. near the .. hot spring serves delicious food" and "I saw x x at Event 1" to the transmitter controlling section 668.

In step S744, the transmitter controlling section 668 makes the communication unit 629 transmit the keywords supplied from the keyword searching section 661 and the related information supplied from the related information searching section 664 to the digital still camera 1-1 via the network such as the Internet, for example.

For example, when supplied with the keywords of ".. hot spring" and "Event 1" from the keyword searching section 661 and the related information of "A restaurant called .. near the .. hot spring serves delicious food" and "I saw x x at Event 1" from the related information searching section 664, the transmitter controlling section 668 transmits the keywords of ".. hot spring" and "Event 1", and the related information of "A restaurant called .. near the .. hot spring serves delicious food" corresponding to the keyword of ".. hot spring" and the related information of "I saw xx at Event 1" corresponding to the keyword of "Event 1" to the digital still camera 1-1 via the network.

In step S722, the receiver controlling part 124 of the control program 101 of the digital still camera 1-1 makes the external interface 20 receive the keywords and the related information transmitted from the server 601 via the network such as the Internet, for example. The receiver controlling part 124 supplies the received keywords and related information to the display controlling section 118. For example, the receiver controlling part 124 receives the keywords of ".. hot spring" and "Event 1", and the related information of "A restaurant called .. near the .. hot spring serves delicious food" corresponding to the keyword of ".. hot spring" and the related information of "I saw x x at Event 1" corresponding to the keyword of "Event 1". The keywords and the related information are transmitted from the server 601 via the network. The receiver controlling part 124 then supplies the keywords of ".. hot spring" and "Event 1", and the related information of "A restaurant called .. near the .. hot spring serves delicious food" corresponding to the keyword of ".. hot spring" and the related information of "I saw xx at Event 1" corresponding to the keyword of "Event 1" to the display controlling section 118.

In step S723, the display controlling section 118 displays the keywords and the related information in a predetermined format on the screen of the LCD 17 on the basis of the keywords and the related information supplied from the receiver controlling part 124. For example, the display controlling section 118 displays the keywords of ".. hot spring" and "Event 1", and the related information of "A restaurant called .. near the .. hot spring serves delicious food" corresponding to the keyword of ".. hot spring" and the related information of "I saw ×× at Event 1" corresponding to the keyword of "Event 1" in a predetermined format on the screen of the LCD 17. The keywords and the related information are supplied from the receiver controlling part 124.

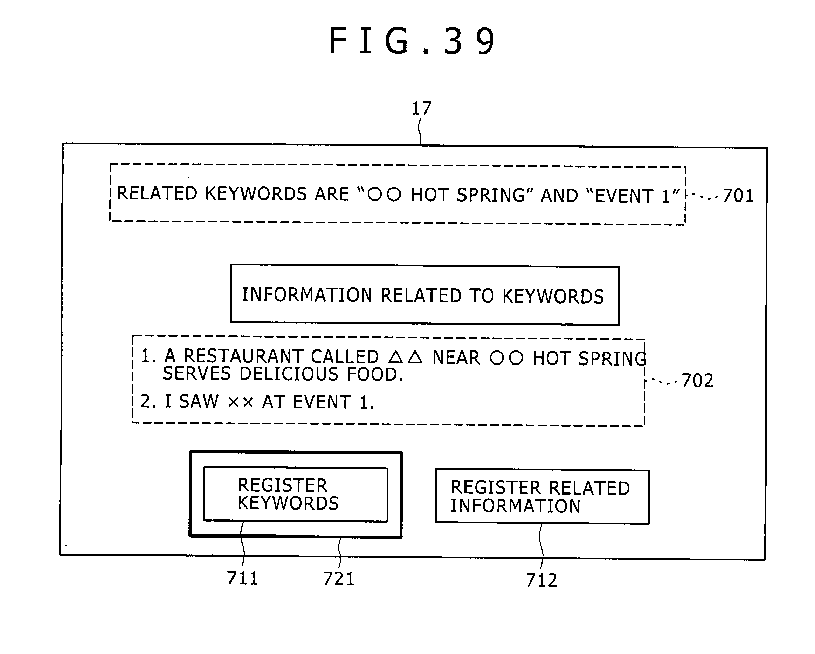

FIG. 39 is a diagram showing an example of the screen of the LCD 17 displaying the keywords and the related information searched by the server 601.

Search result contents 701 are a message about the searched keywords (hereinafter referred to as related keywords). For example, when the keywords of ".. hot spring" and "Event 1" are searched, a message that "related keywords are '.. hot spring' and 'Event 1'" is displayed as the search result contents 701.

Related information contents 702 are a message about the related information corresponding to the related keywords of the search result contents 701. For example, when the related information of "A restaurant called .. near the .. hot spring serves delicious food" is searched in correspondence with ".. hot spring", a message that "1. A restaurant called .. near the .. hot spring serves delicious food" is displayed as the related information contents 702. When the related information of "I saw x x at Event 1" is searched in correspondence with "Event 1", a message that "2. I saw ×× at Event 1" is displayed as the related information contents 702.

For example, when the user selects a keyword registering button 711 by a cursor 721 and then presses a switch, the keyword setting section 116 sets the related keywords displayed in the search result contents 701 to the image to which related information is to be set. For example, the keyword setting section 116 sets the related keywords of ".. hot spring" and "Event 1" to the image to which related information is to be set.

For example, when the user selects a related information registering button 712 by the cursor 721 and then presses a switch, the keyword setting section 116 sets the related information displayed in the related information contents 702 in correspondence with the related keywords to the image to which related information is to be set. For example, the keyword setting section 116 sets the related information of "A restaurant called .. near the .. hot spring serves delicious food" corresponding to ".. hot spring" and the related information of "I saw xx at Event 1" corresponding to "Event 1" to the image to which related information is to be set.

Returning to FIG. 38, in step S724, the keyword searching part 121 selects a keyword to be set from keywords displayed in the predetermined format on the screen of the LCD 17 on the basis of an instruction from the user. The keyword setting section 111 supplies the selected keyword to the keyword setting section 116. For example, when the user selects the keyword of ".. hot spring", the keyword searching part 121 supplies the selected keyword of ".. hot spring" to the keyword setting section 116.

In step S725, the keyword searching part 121 determines whether to set the related information corresponding to the keyword. For example, when the user presses the related information registering button 712, the keyword searching part 121 determines that the related information corresponding to the keyword is to be set. On the other hand, when the user presses the keyword registering button 711, the keyword searching part 121 determines that the related information corresponding to the keyword is to be set.

When the keyword searching part 121 determines in step S725 that the related information corresponding to the keyword is to be set, the process proceeds to step S726, where the keyword searching part 121 supplies the related information corresponding to the keyword selected by the user to the keyword setting section 116. For example, the keyword searching part 121 supplies the related information of "A restaurant called .. near the .. hot spring serves delicious food", which corresponds to the keyword of ".. hot spring" selected by the user, to the keyword setting section 116.

In step S727, the keyword setting section 116 sets the keyword and the related information corresponding to the keyword supplied from the keyword searching part 121 to the image to which related information is to be set, whereby the process is ended. For example, the keyword setting section 116 sets the keyword of ".. hot spring" and the related information of "A restaurant called .. near the .. hot spring serves delicious food", which corresponds to the keyword of ".. hot spring", to the image to which related information is to be set. The keyword and the related information are supplied from the keyword searching part 121.

Incidentally, the keyword setting section 116 may set both the keyword and the related information corresponding to the keyword to the image to which related information is to be set, as described above, or may set one of the keyword and the related information to the image to which related information is to be set. For example, the keyword setting section 116 can set only the related information of "A restaurant called .. near the .. hot spring serves delicious food", which corresponds to the keyword of ".. hot spring", to the image to which related information is to be set.

On the other hand, when the keyword searching part 121 determines in step S725 that the related information corresponding to the keyword is not to be set, the related information corresponding to the keyword is not to be set, and thus the process proceeds to step S728 where the keyword setting section 116 sets only the keyword supplied from the keyword searching part 121 to the image to which related information is to be set, whereby the process is ended. For example, the keyword setting section 116 sets only the keyword of ".. hot spring" supplied from the keyword searching part 121 to the image to which related information is to be set.

Thus, the digital still camera 1-1 can obtain not only keywords but also related information as detailed information corresponding to the keywords from the server 601, and set the keywords and the related information to images. Therefore the user can obtain not only the keywords but also more detailed information corresponding to the images from the related information.

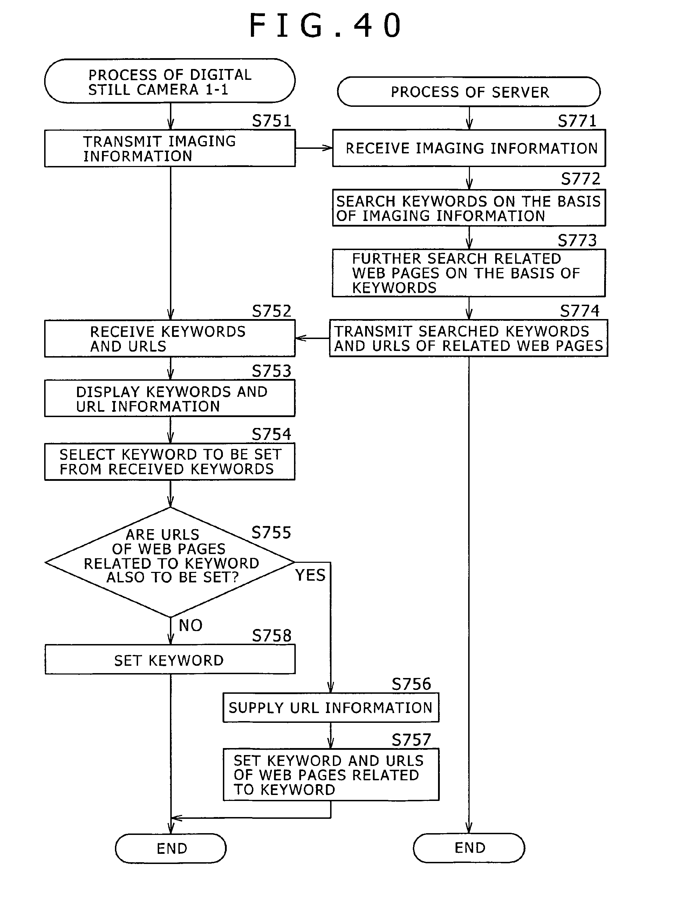

FIG. 40 is a flowchart of assistance in explaining a process in which the digital still camera 1-1 searches a keyword or URL information from the server 601.

In step S751, when the user performs a predetermined operation for inquiring of the server 601 about a keyword or URL information to be set to image data, the transmitter controlling part 123 of the control program 101 of the digital still camera 1-1 makes the external interface 20 transmit imaging information to the server 601 via a network such as the Internet, for example.

More specifically, for example, when the user picks up an image in the vicinity of the ".. hot spring", and performs an operation for inquiring of the server 601 about a keyword or URL information to be set to the picked-up image (hereinafter referred to as the image to which URL information is to be set), the receiver device (not shown) for obtaining the location coordinates of the digital still camera 1-1 obtains location coordinates from for example the GPS, as described above, and then supplies the obtained location coordinates to the transmitter controlling part 123. For example, the transmitter controlling part 123 transmits the location coordinates which is supplied from the receiver device and indicates a location where the image of the vicinity of the ".. hot spring" was picked up (hereinafter referred to simply as the location coordinates of the ".. hot spring"), to the server 601 via the network.

In step S771, the receiver controlling section 667 of the keyword managing program 653 of the server 601 makes the communication unit 629 receive the imaging information transmitted from the digital still camera 1-1 via the network such as the Internet, for example. The receiver controlling section 667 supplies the imaging information received via the network to the keyword searching section 661. For example, the receiver controlling section 667 supplies the keyword searching section 661 with the imaging information as the location coordinates of the ".. hot spring" received from the digital still camera 1-1.

In step S772, the keyword searching section 661 searches a keyword corresponding to the imaging information on the basis of the imaging information supplied from the receiver controlling section 667. The keyword searching section 661 supplies the searched keyword to the URL information searching section 666 and the transmitter controlling section 668.

For example, on the basis of the imaging information as the location coordinates of the ".. hot spring" supplied from the receiver controlling section 667, the keyword searching section 661 searches a keyword corresponding to the imaging information as the location coordinates of the ".. hot spring" from a correspondence table recorded in the recording unit 628 (for example a correspondence table in which information associating location coordinates and location names with each other is set), for example. More specifically, for example, when the location coordinates of the ".. hot spring" and a location name of the ".. hot spring" are associated with each other in the correspondence table, the keyword searching section 661 searches the location name of the ". hot spring" on the basis of the location coordinates of the " .. hot spring". Further, when the location coordinates of the ".. hot spring" are associated with a location name of "Event 1" (event information) (that is, when "Event 1" is held at the " hot spring"), the keyword searching section 661 searches the event information of "Event 1" on the basis of the location coordinates of the ".. hot spring".

That is, the keyword searching section 661 searches the keywords of ".. hot spring" and "Event 1", and then supplies the searched keywords of ".. hot spring" and "Event 1" to the URL information searching section 666 and the transmitter controlling section 668.

In step S773, on the basis of the keywords supplied from the keyword searching section 661, the related information searching section 664 searches Web pages on the Internet, for example, and searches URL information corresponding to the keywords. The URL information searching section 666 supplies the searched URL information to the transmitter controlling section 668.

For example, the URL information searching section 666 has a function of a so-called Internet search engine that searches Web pages on the Internet, for example. On the basis of the keywords of ".. hot spring" and "Event 1" supplied from the keyword searching section 661, the URL information searching section 666 searches URL information of "Introduction to .. Hot Spring http://www.aaa.or.jp" and " .. Hot Spring Tourist Association http://www.bbb.or.jp" corresponding to the keyword of ".. hot spring" via the Internet. The URL information searching section 666 supplies the searched URL information of "Introduction to .. Hot Spring http://www.aaa.or.jp" and " .. Hot Spring Tourist Association http://www.bbb.or.jp" to the transmitter controlling section 668.

In step S774, the transmitter controlling section 668 makes the communication unit 629 transmit the keywords supplied from the keyword searching section 661 and the URL information supplied from the URL information searching section 666 to the digital still camera 1-1 via the network such as the Internet, for example. For example, when supplied with the keywords of " .. hot spring" and "Event 1" from the keyword searching section 661 and the URL information of "Introduction to .. Hot Spring http://www.aaa.or.jp" and ".. Hot Spring Tourist Association http://www.bbb.or.jp" corresponding to the keyword of ".. hot spring" from the URL information searching section 666, the transmitter controlling section 668 transmits the keywords of ".. hot spring" and "Event 1", and the URL information of "Introduction to Hot Spring http://www.aaa.or.jp" and " .. Hot Spring Tourist Association http://www.bbb.or.jp" corresponding to the keyword of ".. hot spring" to the digital still camera 1-1 via the network.

In step S752, the receiver controlling part 124 of the control program 101 of the digital still camera 1-1 makes the external interface 20 receive the keywords and the URL information transmitted from the server 601 via the network such as the Internet, for example. The receiver controlling part 124 supplies the received keywords and the URL information via the network to the display controlling section 118. For example, the receiver controlling part 124 receives the keywords of ".. hot spring" and "Event 1", and the URL information of "Introduction to .. Hot Spring http://www.aaa.or.jp" and ".. Hot Spring Tourist Association http://www.bbb.or.jp" corresponding to the keyword of ".. hot spring". The keywords and the URL information are transmitted from the server 601. The receiver controlling part 124 then supplies the received keywords of ".. hot spring" and "Event 1", and the URL information of "Introduction to .. Hot Spring http://www.aaa.or.jp" and " .. Hot Spring Tourist Association http://www.bbb.or.jp" corresponding to the keyword of " .. hot spring" to the display controlling section 118.

In step S753, the display controlling section 118 displays the keywords and the URL information in a predetermined format on the screen of the LCD 17 on the basis of the keywords and the URL information supplied from the receiver controlling part 124. For example, the display controlling section 118 displays the keywords of ".. hot spring" and "Event 1", and the URL information of "Introduction to .. Hot Spring http://www.aaa.or.jp" and ".. Hot Spring Tourist Association http://www.bbb.or.jp" corresponding to the keyword of ".. hot spring" in a predetermined format on the screen of the LCD 17. The keywords and the URL information are supplied from the receiver controlling part 124.

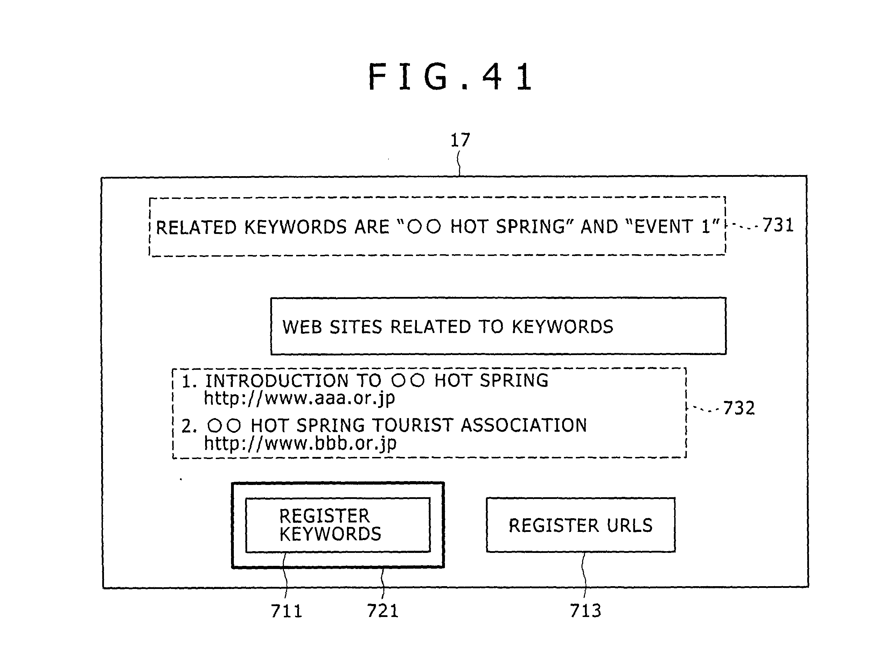

FIG. 41 is a diagram showing an example of the screen of the LCD 17 displaying the keywords and the URL information searched by the server 601.

Search result contents 731 are a message about the searched keywords (related keywords). For example, when the keywords of ".. hot spring" and "Event 1" are searched, a message that "related keywords are '.. hot spring' and 'Event 1'" is displayed as the search result contents 731.

URL information contents 732 are a message about the URL information corresponding to the related keywords of the search result contents 731. For example, when the URL information of "Introduction to .. Hot Spring http://www.aaa.or.jp" and " .. Hot Spring Tourist Association http://www.bbb.or.jp" is searched in correspondence with ".. hot spring", a message that "1. Introduction to .. Hot Spring http://www.aaa.or.jp 2. ".. Hot Spring Tourist Association http://www.bbb.or.jp" is displayed as the URL information contents 732.

For example, when the user selects a keyword registering button 711 by a cursor 721 and then presses a switch, the keyword setting section 116 sets the related keywords displayed in the search result contents 731 to the image to which URL information is to be set. For example, the keyword setting section 116 under control of the CPU 51 sets the related keywords of ".. hot spring" and "Event 1" to the image to which URL information is to be set.

For example, when the user selects a URL information registering button 713 by the cursor 721 and then presses a switch, the keyword setting section 116 sets the URL information displayed in the search result contents 731 in correspondence with the related keywords to the image to which URL information is to be set. For example, the keyword setting section 116 sets the URL information of "Introduction to . . Hot Spring http://www.aaa.or.jp" and " .. Hot Spring Tourist Association http://www.bbb.or.jp" corresponding to the keyword of ".. hot spring" to the image to which URL information is to be set.

Returning to FIG. 40, in step S754, the keyword searching part 121 selects a keyword to be set from keywords displayed in the predetermined format on the screen of the LCD 17 on the basis of an instruction from the user. The keyword searching part 121 supplies the selected keyword to the keyword setting section 116. For example, when the user selects the keyword of ".. hot spring", and presses the keyword registering button 711, the keyword searching part 121 supplies the selected keyword of ".. hot spring" to the keyword setting section 116.

In step S755, the keyword searching part 121 determines whether to set the URL information of the Web pages related to the keyword. For example, when the user presses the URL information setting button 712, the keyword searching part 121 determines that the URL information related to the keyword is to be set. On the other hand, when the user presses the keyword registering button 711, the keyword searching part 121 determines that the URL information related to the keyword is not to be set.

When the keyword searching part 121 determines in step S755 that the URL information related to the keyword is to be set, the process proceeds to step S756, where the keyword searching part 121 supplies the URL information corresponding to the keyword selected by the user to the keyword setting section 116. For example, the keyword searching part 121 supplies the URL information of "Introduction to ..Hot Spring http://www.aaa.or.jp" and ".. Hot Spring Tourist Association http://www.bbb.or.jp", which corresponds to the keyword of ".. hot spring" selected by the user, to the keyword setting section 116.

In step S757, the keyword setting section 116 sets the keyword and the URL information corresponding to the keyword supplied from the keyword searching part 121 to the image to which URL information is to be set, whereby the process is ended. For example, the keyword setting section 116 sets the keyword of ".. hot spring" and the URL information of "Introduction to .. Hot Spring http://www.aaa.or.jp" and " .. Hot Spring Tourist Association http://www.bbb.or.jp" corresponding to the keyword of ".. hot spring" to the image to which URL information is to be set. The keyword and the URL information are supplied from the keyword searching part 121.

Incidentally, the keyword setting section 116 may set both the keyword and the URL information corresponding to the keyword to the image to which URL information is to be set, as described above, or may set one of the keyword and the URL information to the image to which URL information is to be set. For example, the keyword setting section 116 can set only the URL information of "Introduction to .. Hot Spring http://www.aaa.or.jp" and " .. Hot Spring Tourist Association http://www.bbb.or.jp", which corresponds to the keyword of ".. hot spring", to the image to which URL information is to be set.

On the other hand, when the keyword searching part 121 determines in step S755 that the URL information related to the keyword is not to be set, the process proceeds to step S758 where the keyword setting section 116 sets only the keyword supplied from the keyword searching part 121 to the image to which URL information is to be set, whereby the process is ended. For example, the keyword setting section 116 sets only the keyword of ".. hot spring" supplied from the keyword searching part 121 to the image to which URL information is to be set.

Thus, the digital still camera 1-1 can obtain not only keywords but also URL information as information on links to Web pages corresponding to the keywords from the server 601, and set the keywords and the URL information to images. Therefore the user can obtain more detailed information corresponding to the keywords by accessing so-called homepages on the basis of URLs designated by the URL information.

As described above, picked-up images are searched by imaging information or keyword, and keywords can be set to images searched by imaging information or keyword on the basis of keywords set to searched images. Therefore, the keywords are unified, it becomes easy to grasp images recorded on the recording medium, and desired images can be searched more quickly and surely.

The series of processes described above can be carried out not only by hardware but also by software. When the series of processes is to be carried out by software, a program constituting the software is installed from a recording medium onto a computer incorporated in special hardware, or a general-purpose personal computer, for example, that can perform various functions by installing various programs thereon.

As shown in FIG. 1, the recording medium is not only formed by a packaged medium distributed to users to provide the program separately from the computer and having the program recorded thereon but also formed by the ROM 52, the flash ROM 53, or the like where the program is recorded and which is provided to the user in a state of being preincorporated in the computer. The packaged medium includes the magnetic disk 71 (including flexible disks), the optical disk 72 (including CD-ROM [Compact Disk-Read Only Memory]), the magneto-optical disk 73 (including MD [MiniDisc] [trademark]), the semiconductor memory 74, or the like.

As shown in FIG. 32, the recording medium is not only formed by a packaged medium distributed to users to provide the program separately from the computer and having the program recorded thereon but also formed by the ROM 622, the hard disk included in the recording unit 628, or the like where the program is recorded and which is provided to the user in a state of being preincorporated in the computer. The packaged medium includes the magnetic disk 641 (including flexible disks), the optical disk 642 (including CD-ROM and DVD), the magneto-optical disk 643 (including MD [MiniDisc] [trademark]), the semiconductor memory 644 or the like.

In addition, the program for performing the series of processes described above may be installed onto a computer via an interface such as a router, a modem, or the like and via a wire or wireless communication medium such as a local area network, the Internet, digital satellite broadcasting, or the like as necessary.

It is to be noted that in the present specification, the steps describing the program stored on the recording medium include not only processes carried out in time series in the described order but also processes carried out in parallel or individually and not necessarily in time series.

In the present specification, a system refers to an apparatus as a whole formed by a plurality of devices.

## Claims

1. An image managing method comprising:
a first recording step of recording a recording information group when image information is recorded in association with said image information;
a second recording step of recording an added information group corresponding to said image information after recording in association with said image information;
an extracting step of extracting second image information associated with a second recording information group having a high correlation to a first recording information group associated with first image information selected from said image information; and
a third recording step of recording added information associated with said second image information in association with said first image information.

2. The image managing method as claimed in claim 1, wherein
said recording information group includes recording information set as each of one or a plurality of recording information items,
said image information is classified on a basis of recording information set as a first recording information item included in the related said recording information group, and
said first image information is selected from the classified image information.

3. The image managing method as claimed in claim 2, further comprising a measuring step of measuring quantities of the image information classified on the basis of said recording information.

4. The image managing method as claimed in claim 3, further comprising a displaying step of visually displaying a relative quantity of said image information for each piece of said recording information.

5. The image managing method as claimed in claim 1, wherein
said added information group includes one or a plurality of pieces of added information,
said image information is classified on a basis of added information included in the related said added information group, and
said first image information is selected from the classified image information.

6. The image managing method as claimed in claim 5, further comprising a measuring step of measuring quantities of the image information classified on the basis of the added information.

7. The image managing method as claimed in claim 6, further comprising a displaying step of visually displaying a relative quantity of image information for each piece of added information.

8. The image managing method as claimed in claim 1, wherein
said recording information group includes information on dates and times of recording of said image information.

9. The image managing method as claimed in claim 1, wherein
said added information group includes text information input from an input screen prompting for input of text information.

10. An image management apparatus comprising:
first recording means for recording a recording information group when image information is recorded in association with said image information;
second recording means for recording an added information group corresponding to said image information after recording in association with said image information;
extracting means for extracting second image information associated with a second recording information group having a high correlation to a first recording information group associated with first image information selected from said image information; and
third recording means for recording added information associated with said second image information in association with said first image information.

11. A recording medium on which a computer readable program is recorded, said program comprising:
a first recording step of recording a recording information group when image information is recorded in association with said image information;
a second recording step of recording an added information group corresponding to said image information after recording in association with said image information;
an extracting step of extracting second image information associated with a second recording information group having a high correlation to a first recording information group associated with first image information selected from said image information; and
a third recording step of recording added information associated with said second image information in association with said first image information.

12. A program making a computer perform:
a first recording step of recording a recording information group when image information is recorded in association with said image information;
a second recording step of recording an added information group corresponding to said image information after recording in association with said image information;
an extracting step of extracting second image information associated with a second recording information group having a high correlation to a first recording information group associated with first image information selected from said image information; and
a third recording step of recording added information associated with said second image information in association with said first image information.
